# EUROPEAN PATENT APPLICATION

(11) **EP 4 845 150 A1**
(43) Date of publication of application: **25.11.2026**
(21) Application number: 25741797.2
(22) Date of filing: 10.01.2025
(51) Int. Cl.: H04N 19/46, H04N 19/172

(54) **DECODING DEVICE, ENCODING DEVICE, DECODING METHOD, AND ENCODING METHOD**

(30) Priority: 16.01.2024 US 202463621222 P
(71) Applicant: Panasonic Intellectual Property Corporation of America, Torrance, CA 90504 (US)
(72) Inventor: THONG, Jing Yuan, Singapore 469332 (SG); TEO, Han Boon, Singapore 469332 (SG); KARLEKAR, Jayashree, Singapore 469332 (SG); LIM, Chong Soon, Singapore 469332 (SG); LIM, Sugiri Pranata, Singapore 469332 (SG); ABE, Kiyofumi, Kadoma-shi, Osaka 571-0057 (JP); NISHI, Takahiro, Kadoma-shi, Osaka 571-0057 (JP); SUGIO, Toshiyasu, Kadoma-shi, Osaka 571-0057 (JP)
(74) Representative: Grünecker Patent- und Rechtsanwälte PartG mbB
(86) International application number: PCT/JP2025/000612
(87) International publication number: WO 2025/154665

(57) **Abstract**

A decoder (200) includes circuitry (251) and memory (252) coupled to the circuitry (251). In operation, the circuitry (251): decodes, from a bitstream, base data of a face image related to a face video, and geometric information corresponding to each of frames of the face video and indicating geometric attributes within a region including a face of a person (S701); further decodes, from the bitstream, a concealment parameter related to an error recovery control for when the geometric information is not appropriately obtained in an encoder (S702); and generates the face video using a generative model from the base data, the geometric information, and the concealment parameter (S703).

## Description

### [Technical Field]

The present disclosure relates to a decoder, etc.

### [Background Art]

With advancement in video coding technology, from H.261 and MPEG-1 to H.264/AVC (Advanced Video Coding), MPEG-LA, H.265/HEVC (High Efficiency Video Coding) and H.266/VVC (Versatile Video Codec), there remains a constant need to provide improvements and optimizations to the video coding technology to process an ever-increasing amount of digital video data in various applications. The present disclosure relates to further advancements, improvements and optimizations in video coding.

Note that Non Patent Literature (NPL) 1 relates to one example of a conventional standard regarding the above-described video coding technology.

### [Citation List]

### [Non Patent Literature]

[NPL 1] H.265 (ISO/IEC 23008-2 HEVC)/HEVC (High Efficiency Video Coding)

### [Summary of Invention]

### [Technical Problem]

Regarding the encoding scheme as described above, proposals of new schemes have been desired in order to (i) improve coding efficiency, enhance image quality, reduce processing amounts, reduce circuit scales, or (ii) appropriately select an element or an operation. The element is, for example, a filter, a block, a size, a motion vector, a reference picture, or a reference block.

The present disclosure provides, for example, a configuration or a method which can contribute to at least one of increase in coding efficiency, increase in image quality, reduction in processing amount, reduction in circuit scale, increase in processing speed, appropriate selection of an element or an operation, etc. It is to be noted that the present disclosure may encompass possible configurations or methods which can contribute to advantages other than the above advantages.

### [Solution to Problem]

For example, a decoder according to one aspect of the present disclosure is a decoder including circuitry and memory coupled to the circuitry, in which in operation, the circuitry: decodes, from a bitstream, base data of a face image related to a face video, and geometric information corresponding to each of frames of the face video and indicating geometric attributes within a region including a face of a person; further decodes, from the bitstream, a concealment parameter related to an error recovery control for when the geometric information is not appropriately obtained in an encoder; and generates the face video using a generative model from the base data, the geometric information, and the concealment parameter.

Each of embodiments, or each of part of constituent elements and methods in the present disclosure enables, for example, at least one of the following: improvement in coding efficiency, enhancement in image quality, reduction in processing amount of encoding/decoding, reduction in circuit scale, improvement in processing speed of encoding/decoding, etc. Alternatively, each of embodiments, or each of part of constituent elements and methods in the present disclosure enables, in encoding and decoding, appropriate selection of an element or an operation. The element is, for example, a filter, a block, a size, a motion vector, a reference picture, or a reference block. It is to be noted that the present disclosure includes disclosure regarding configurations and methods which may provide advantages other than the above-described ones. Examples of such configurations and methods include a configuration or method for improving coding efficiency while reducing increase in processing amount.

Additional benefits and advantages according to an aspect of the present disclosure will become apparent from the specification and drawings. The benefits and/or advantages may be individually obtained by the various embodiments and features of the specification and drawings, and not all of which need to be provided in order to obtain one or more of such benefits and/or advantages.

It is to be noted that these general or specific aspects may be implemented using a system, an integrated circuit, a computer program, or a computer readable medium (recording medium) such as a CD-ROM, or any combination of systems, methods, integrated circuits, computer programs, and media.

### [Advantageous Effects of Invention]

A configuration or method according to an aspect of the present disclosure enables, for example, at least one of the following: improvement in coding efficiency, enhancement in image quality, reduction in processing amount, reduction in circuit scale, improvement in processing speed, appropriate selection of an element or an operation, etc. It is to be noted that the configuration or method according to an aspect of the present disclosure may provide advantages other than the above-described ones.

### [Brief Description of Drawings]

[FIG. 1]

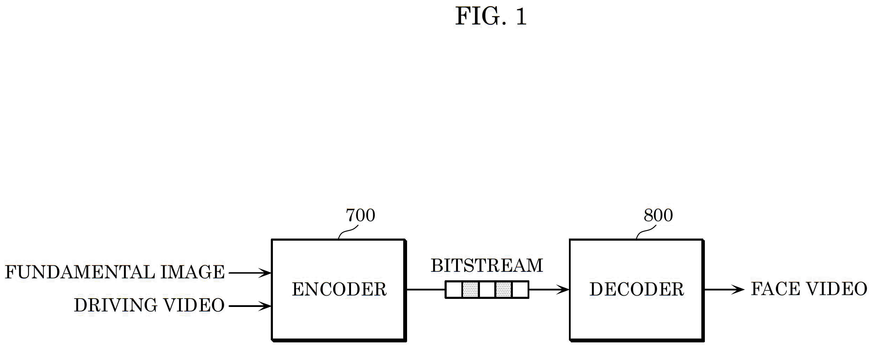

   FIG. 1 is a block diagram illustrating the configuration of an encoding and decoding system according to a reference example.
[FIG. 2]

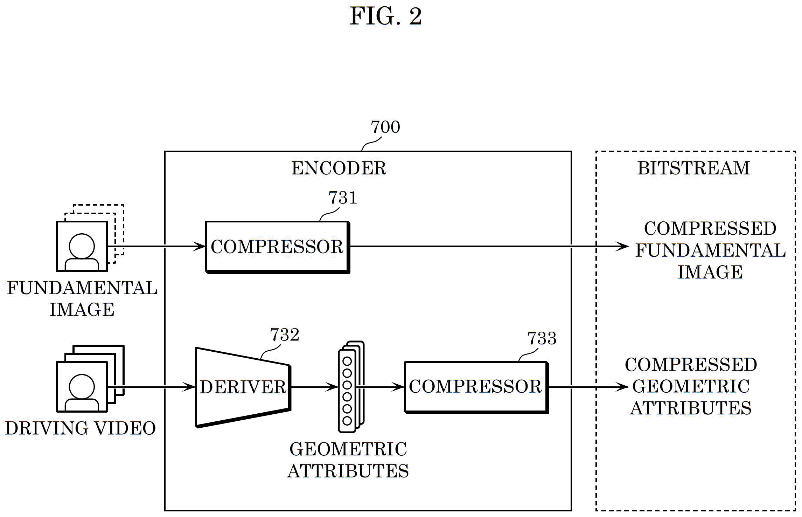

   FIG. 2 is a block diagram illustrating the configuration of an encoder according to the reference example.
[FIG. 3]

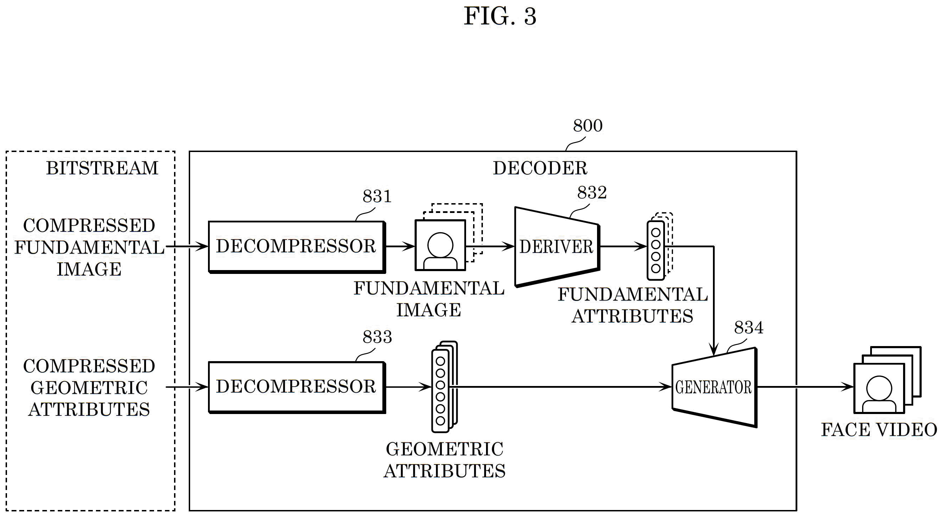

   FIG. 3 is a block diagram illustrating the configuration of a decoder according to the reference example.
[FIG. 4]

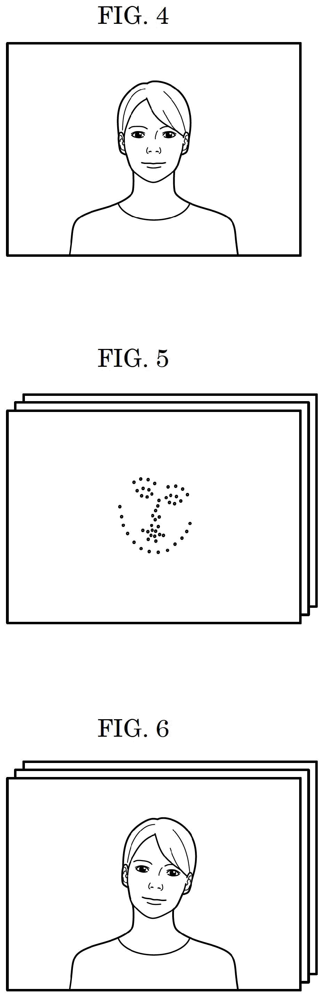

   FIG. 4 is a conceptual diagram illustrating an example of a fundamental image.
[FIG. 5]
   FIG. 5 is a conceptual diagram illustrating an example of a set of geometric attributes.
[FIG. 6]
   FIG. 6 is a conceptual diagram illustrating an example of a face video.
[FIG. 7]

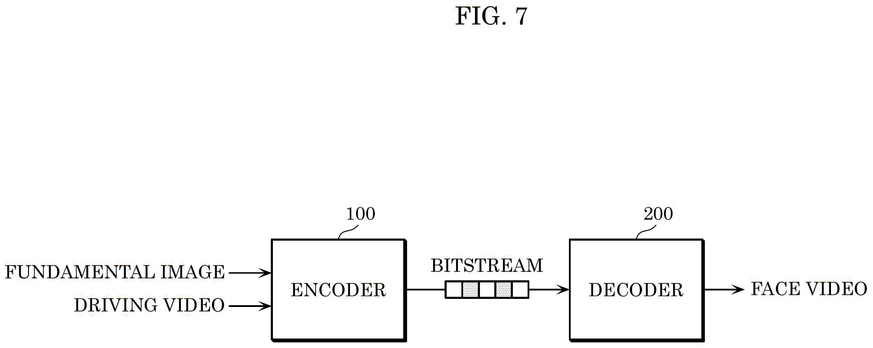

   FIG. 7 is a block diagram illustrating a configuration example of an encoding and decoding system according to an embodiment.
[FIG. 8]

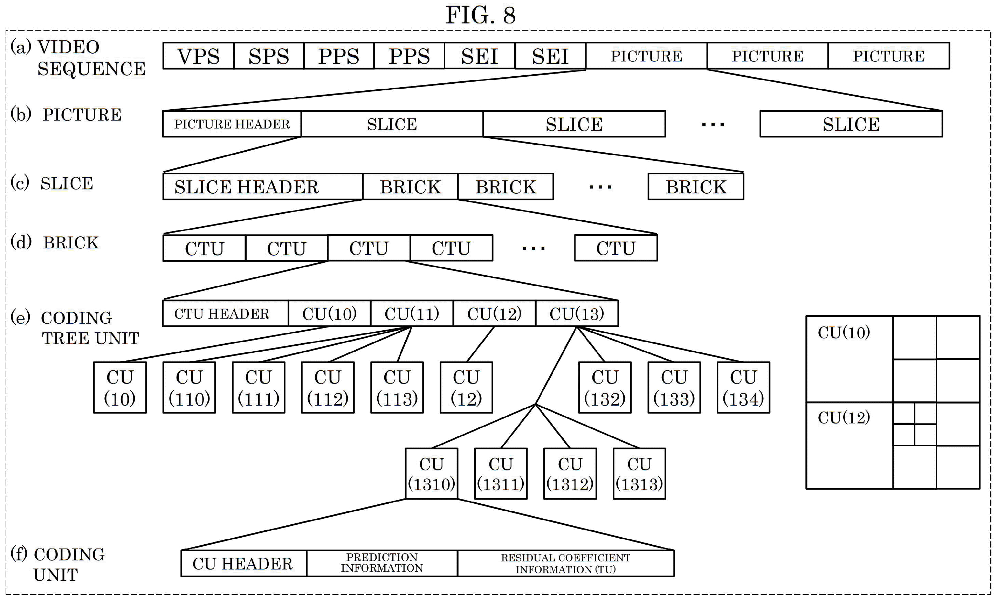

   FIG. 8 is a diagram illustrating one example of a hierarchical structure of data in a stream.
[FIG. 9]

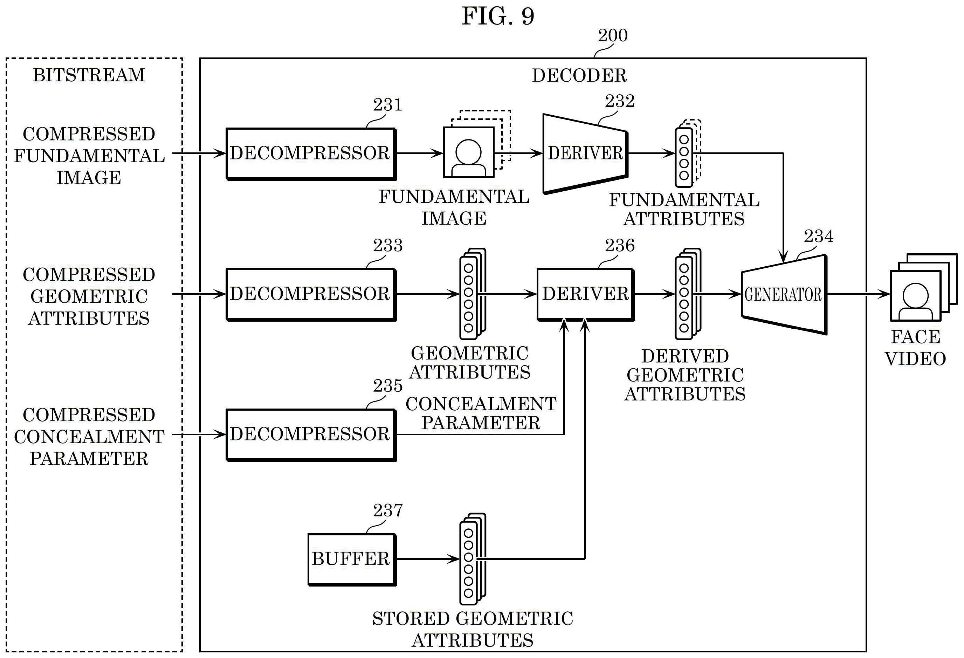

   FIG. 9 is a block diagram illustrating a configuration example of a decoder according to the embodiment.
[FIG. 10]

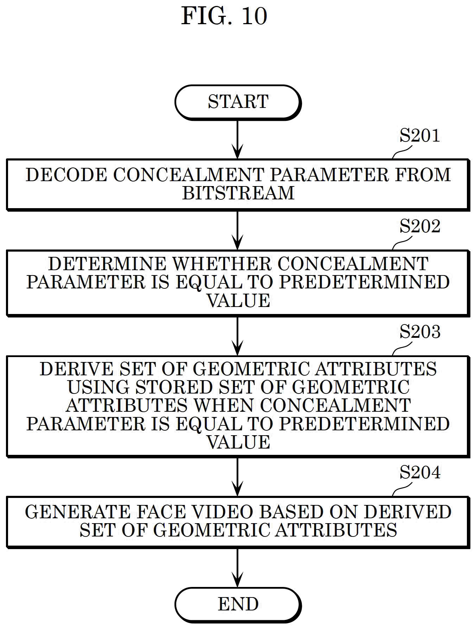

   FIG. 10 is a flow chart illustrating an operation example performed by the decoder according to the embodiment.
[FIG. 11]

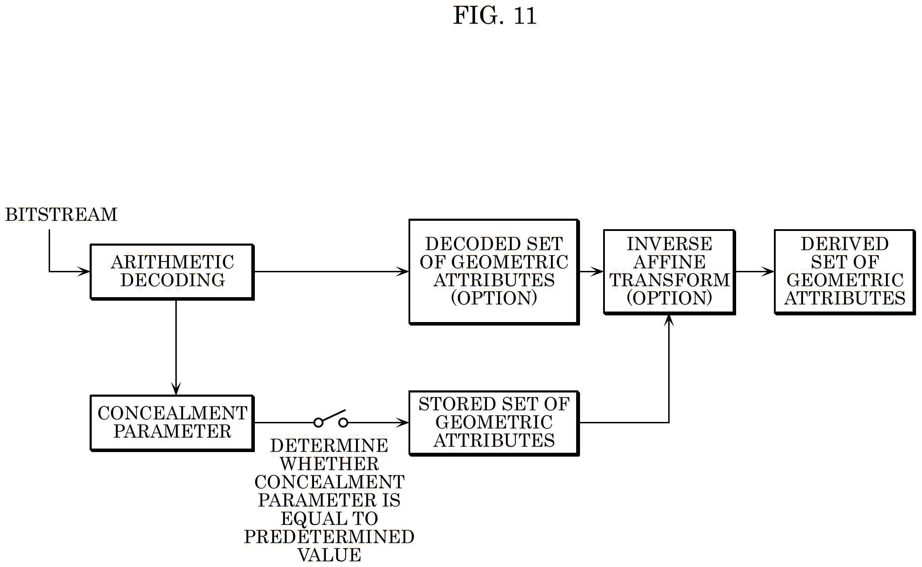

   FIG. 11 is a schematic drawing illustrating an operation example performed according to a concealment parameter.
[FIG. 12]

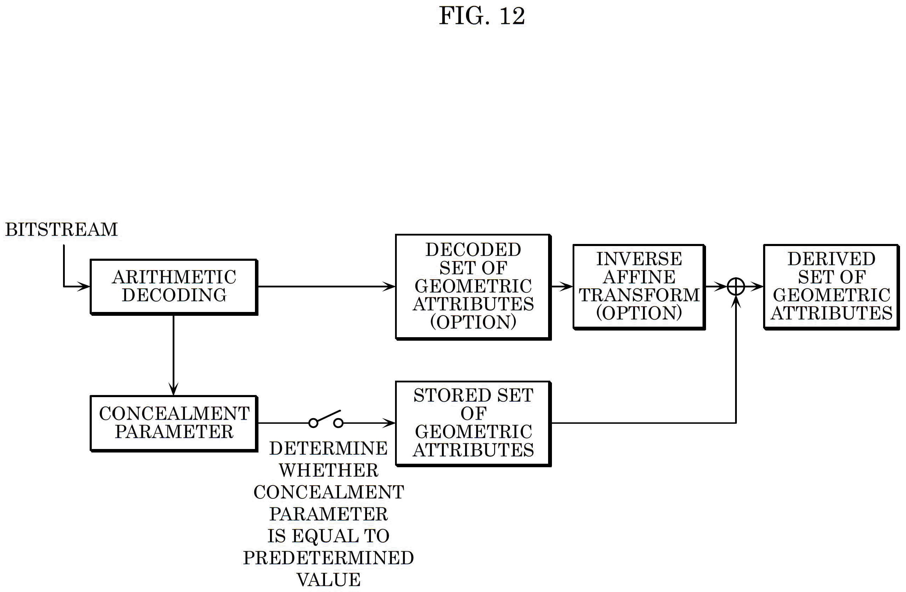

   FIG. 12 is a schematic drawing illustrating another operation example performed according to the concealment parameter.
[FIG. 13]

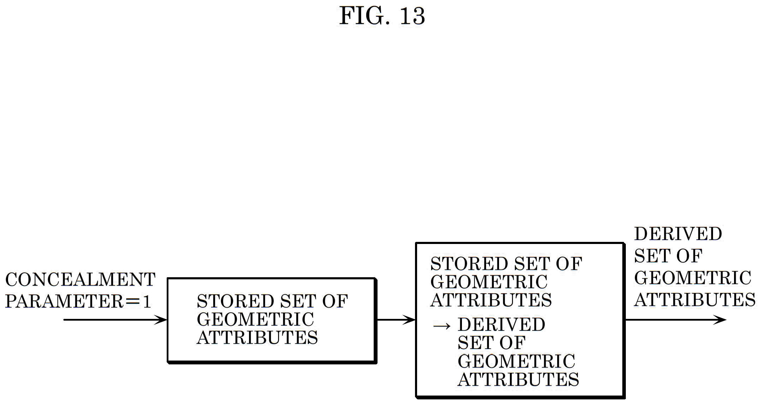

   FIG. 13 is a conceptual diagram illustrating an operation example in the case where the set of geometric attributes has not been obtained.
[FIG. 14]

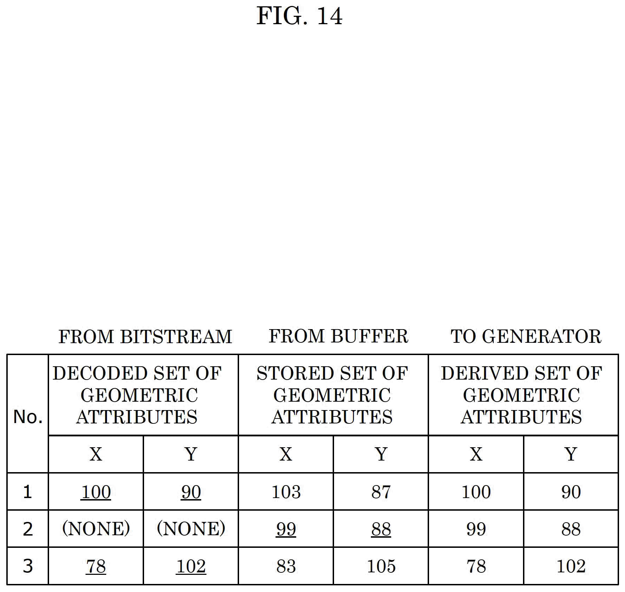

   FIG. 14 is a conceptual diagram illustrating an operation example of the decoder in the case where the number of attributes in the set of geometric attributes is different from the original number of attributes.
[FIG. 15]

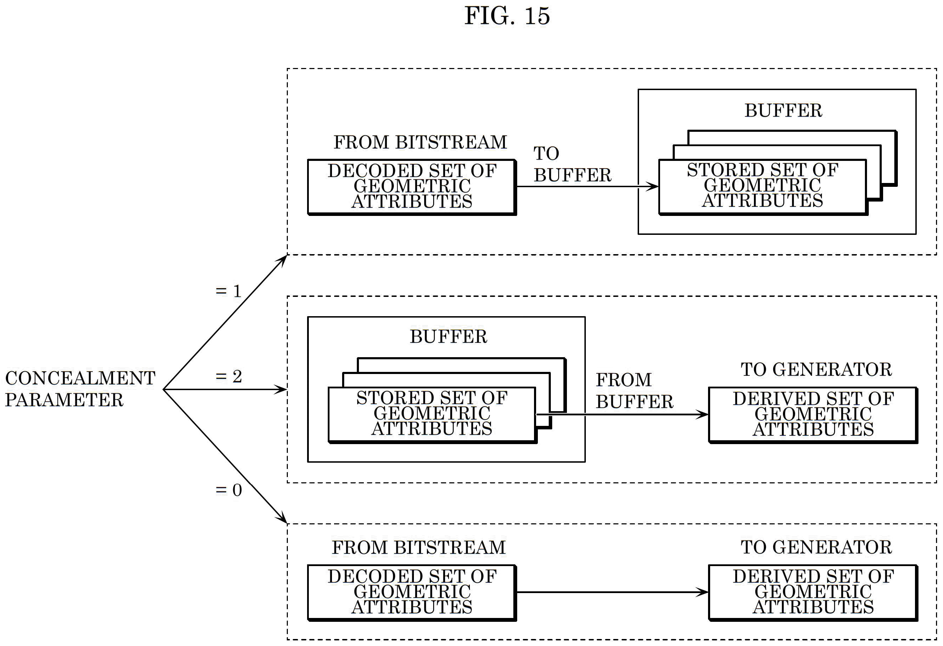

   FIG. 15 is a conceptual diagram illustrating an operation example of controlling the storage of the set of geometric attributes.
[FIG. 16]

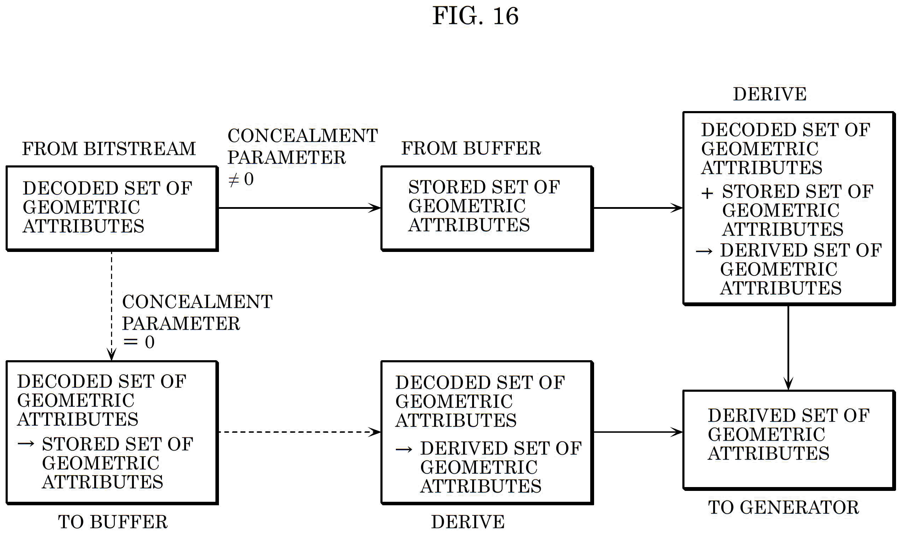

   FIG. 16 is a conceptual diagram illustrating an operation example performed by the decoder according to the reliability of the set of geometric attributes.
[FIG. 17]

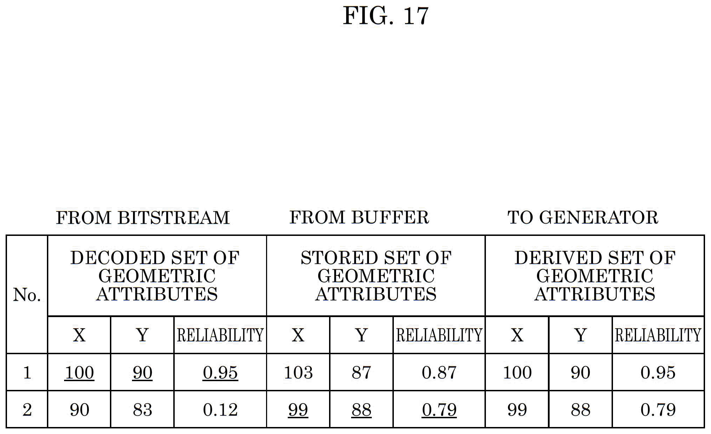

   FIG. 17 is a conceptual diagram illustrating an operation example in which geometric attributes are replaced at the decoder.
[FIG. 18]

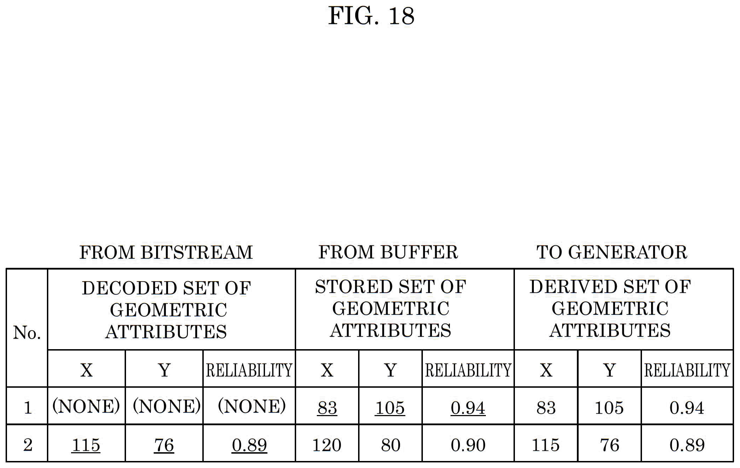

   FIG. 18 is a conceptual diagram illustrating another operation example in which geometric attributes are replaced at the decoder.
[FIG. 19]

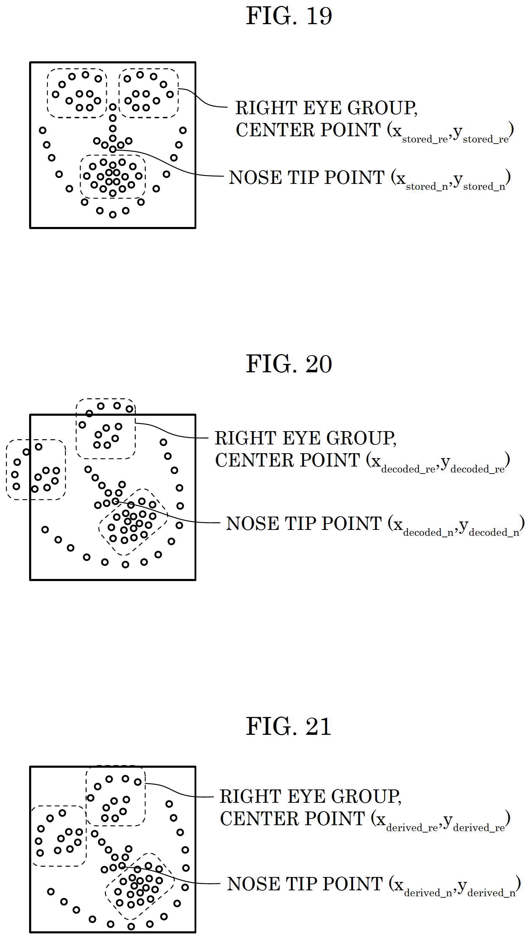

   FIG. 19 is a conceptual diagram illustrating an example of the set of geometric attributes stored in the decoder.
[FIG. 20]
   FIG. 20 is a conceptual diagram illustrating an example of the set of geometric attributes decoded in the decoder.
[FIG. 21]
   FIG. 21 is a conceptual diagram illustrating an example of the set of geometric attributes derived in the decoder.
[FIG. 22]

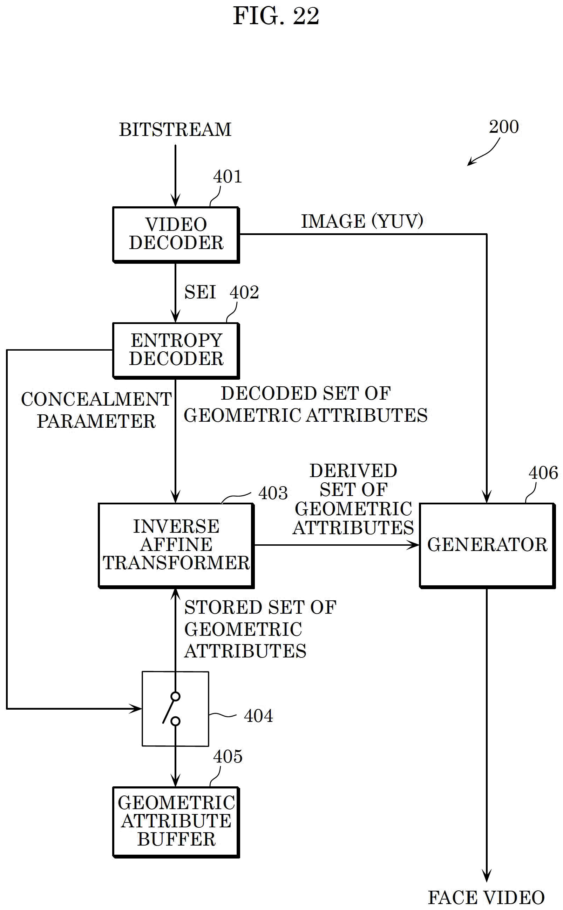

   FIG. 22 is a block diagram illustrating another configuration example of the decoder according to the embodiment.
[FIG. 23]

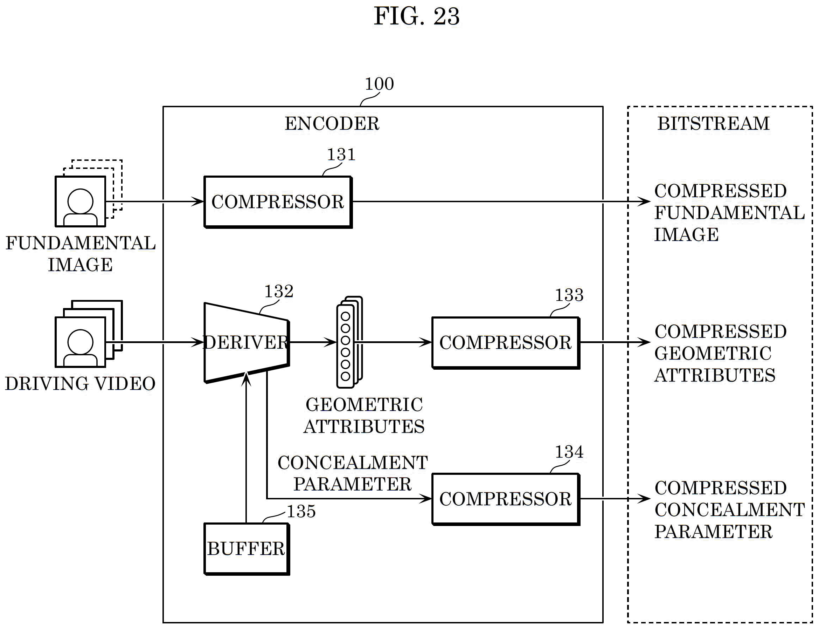

   FIG. 23 is a block diagram illustrating a configuration example of the encoder according to the embodiment.
[FIG. 24]

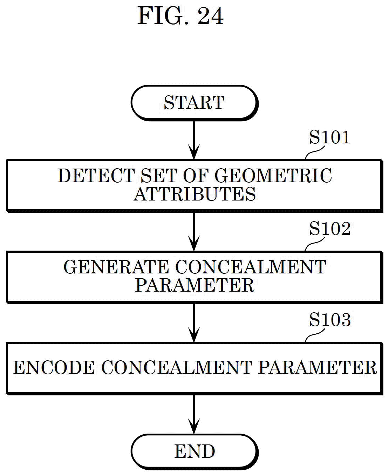

   FIG. 24 is a flowchart illustrating an operation example performed by the encoder according to the embodiment.
[FIG. 25]

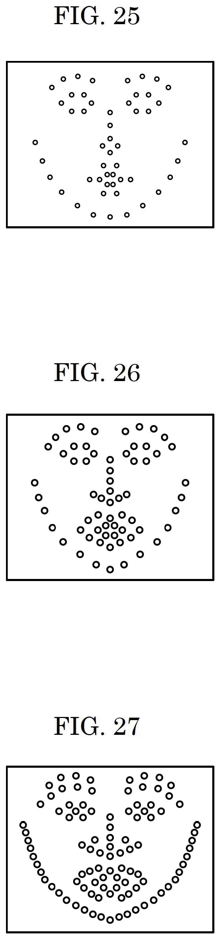

   FIG. 25 is a conceptual diagram illustrating a specific example of the set of geometric attributes.
[FIG. 26]
   FIG. 26 is a conceptual diagram illustrating another specific example of the set of geometric attributes.
[FIG. 27]
   FIG. 27 is a conceptual diagram illustrating yet another specific example of the set of geometric attributes.
[FIG. 28]

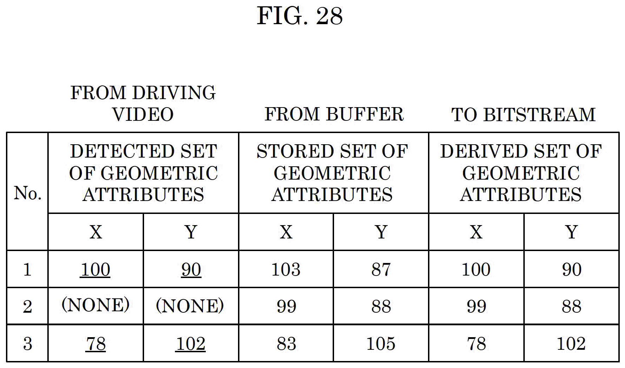

   FIG. 28 is a conceptual diagram illustrating an operation example of the encoder in the case where the number of attributes in the set of geometric attributes is different from the original number of attributes.
[FIG. 29]

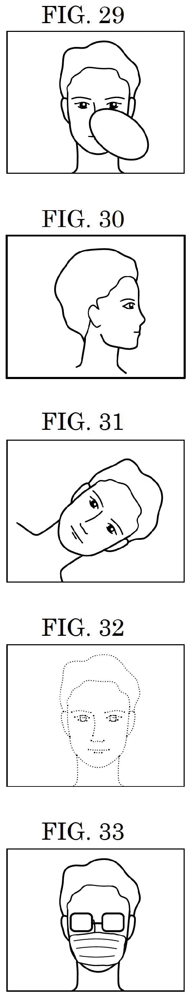

   FIG. 29 is a conceptual diagram illustrating an example of a face that is partially concealed by occlusion.
[FIG. 30]
   FIG. 30 is a conceptual diagram illustrating an example of a face having an extreme pose with respect to yaw.
[FIG. 31]
   FIG. 31 is a conceptual diagram illustrating an example of a face having an extreme pose with respect to roll.
[FIG. 32]
   FIG. 32 is a conceptual diagram illustrating an example of a face having motion blur.
[FIG. 33]
   FIG. 33 is a conceptual diagram illustrating an example of a face whose number of detected landmarks is low.
[FIG. 34]

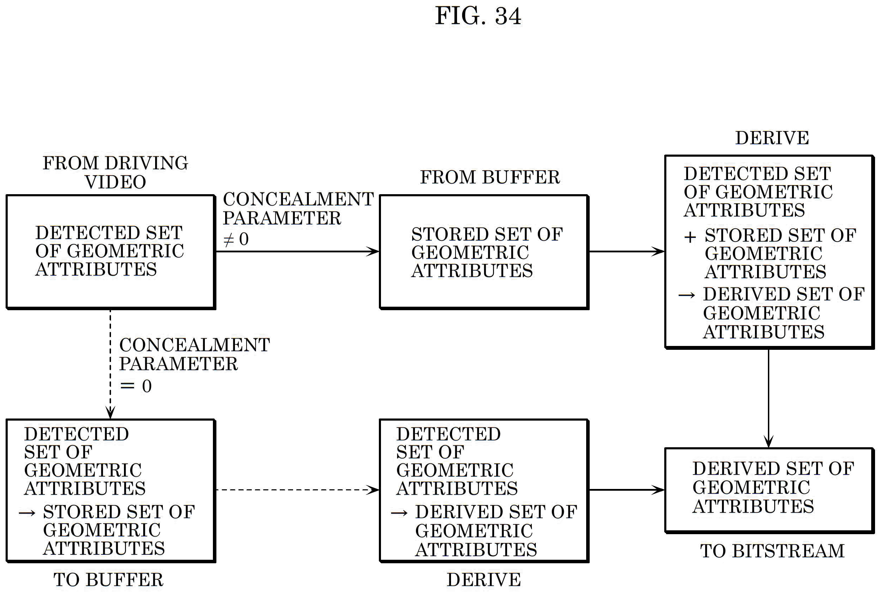

   FIG. 34 is a conceptual diagram illustrating an operation example performed by the encoder according to the reliability of the set of geometric attributes.
[FIG. 35]

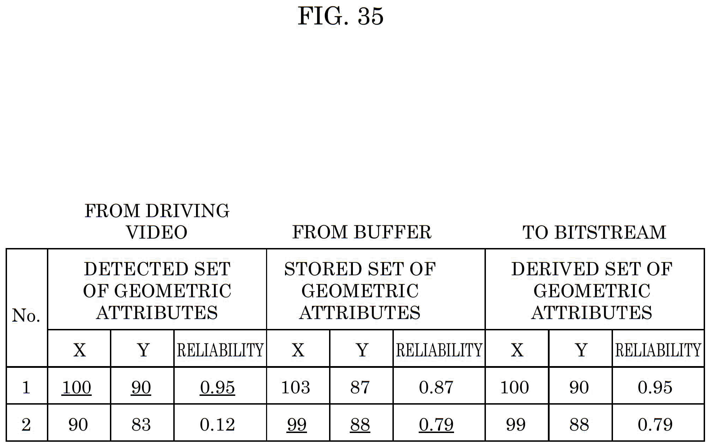

   FIG. 35 is a conceptual diagram illustrating an operation example in which geometric attributes are replaced at the encoder.
[FIG. 36]

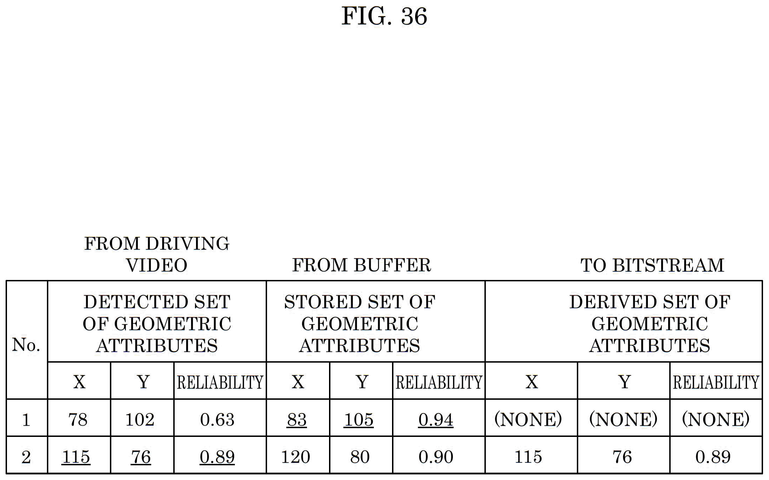

   FIG. 36 is a conceptual diagram illustrating another operation example in which geometric attributes are replaced at the encoder.
[FIG. 37]

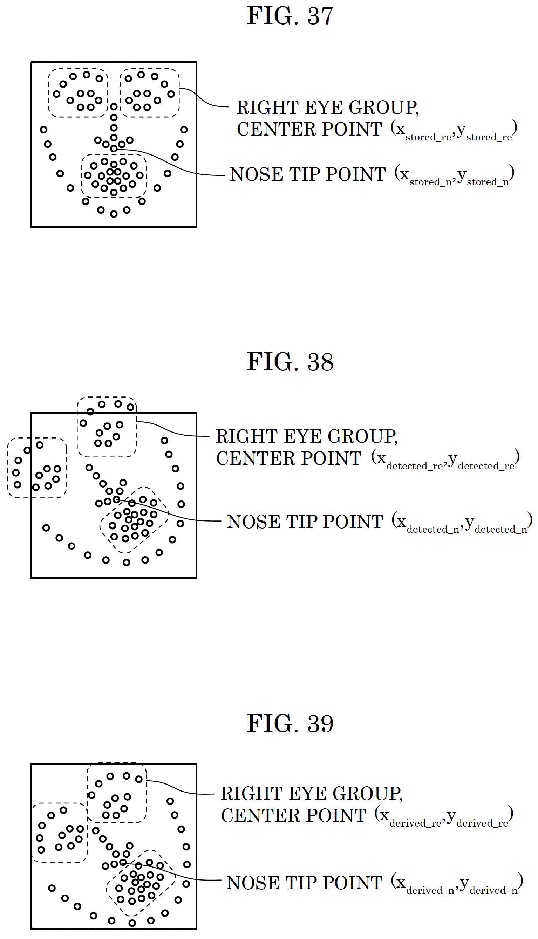

   FIG. 37 is a conceptual diagram illustrating an example of the set of geometric attributes stored in the encoder.
[FIG. 38]
   FIG. 38 is a conceptual diagram illustrating an example of the set of geometric attributes detected in the encoder.
[FIG. 39]
   FIG. 39 is a conceptual diagram illustrating an example of the set of geometric attributes derived in the encoder.
[FIG. 40]

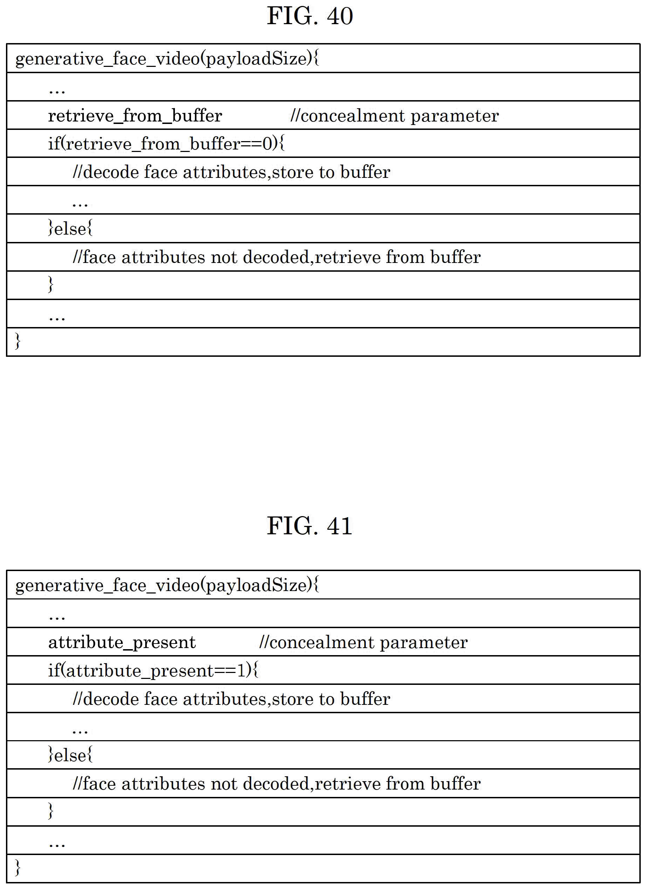

   FIG. 40 is a syntax diagram illustrating an example of a syntax structure related to the concealment parameter.
[FIG. 41]
   FIG. 41 is a syntax diagram illustrating another example of the syntax structure related to the concealment parameter.
[FIG. 42]

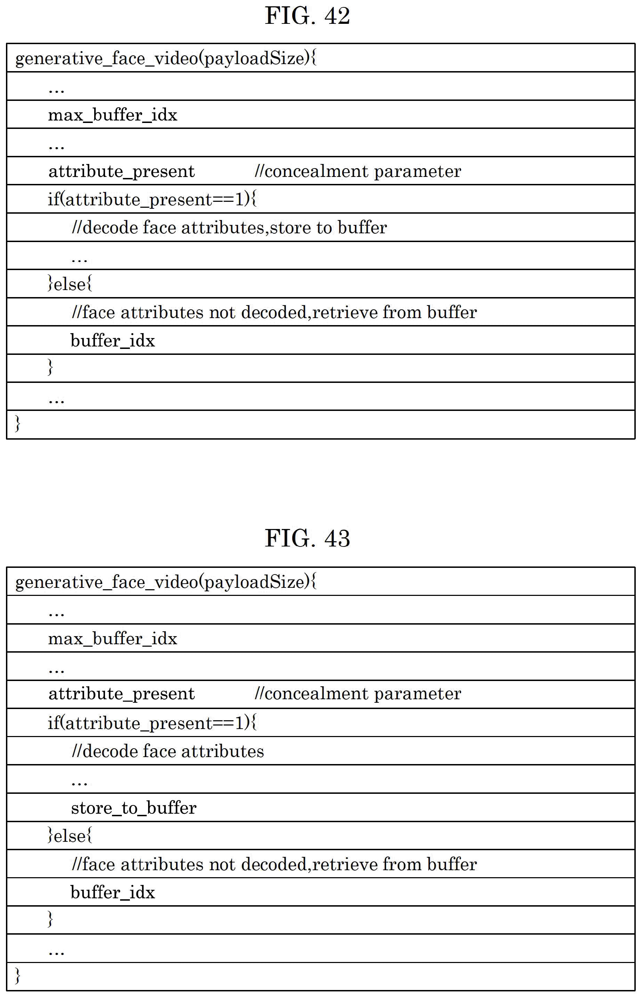

   FIG. 42 is a syntax diagram illustrating yet another example of the syntax structure related to the concealment parameter.
[FIG. 43]
   FIG. 43 is a syntax diagram illustrating yet another example of the syntax structure related to the concealment parameter.
[FIG. 44]

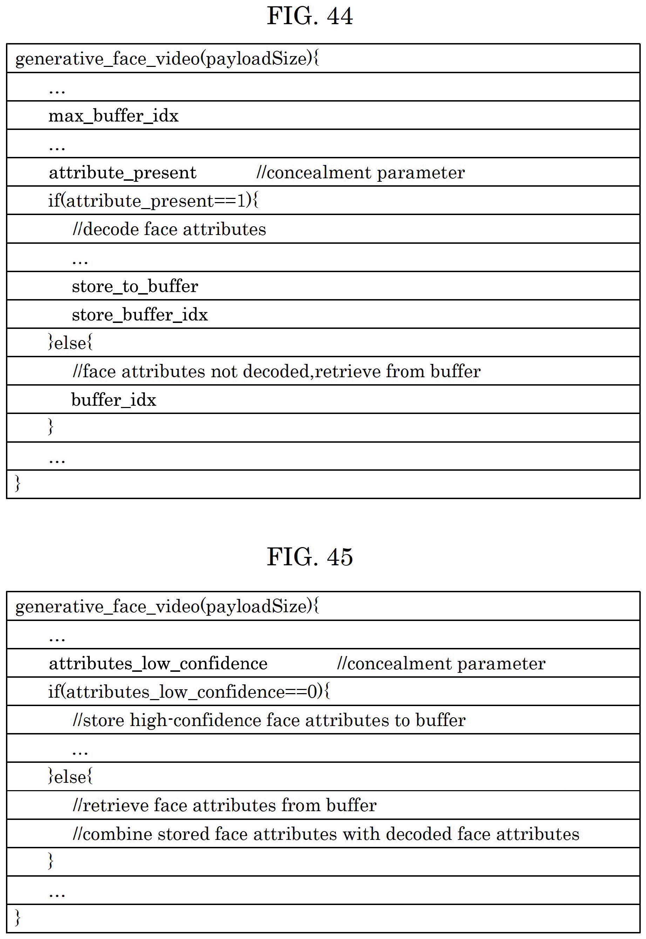

   FIG. 44 is a syntax diagram illustrating yet another example of the syntax structure related to the concealment parameter.
[FIG. 45]
   FIG. 45 is a syntax diagram illustrating yet another example of the syntax structure related to the concealment parameter.
[FIG. 46]

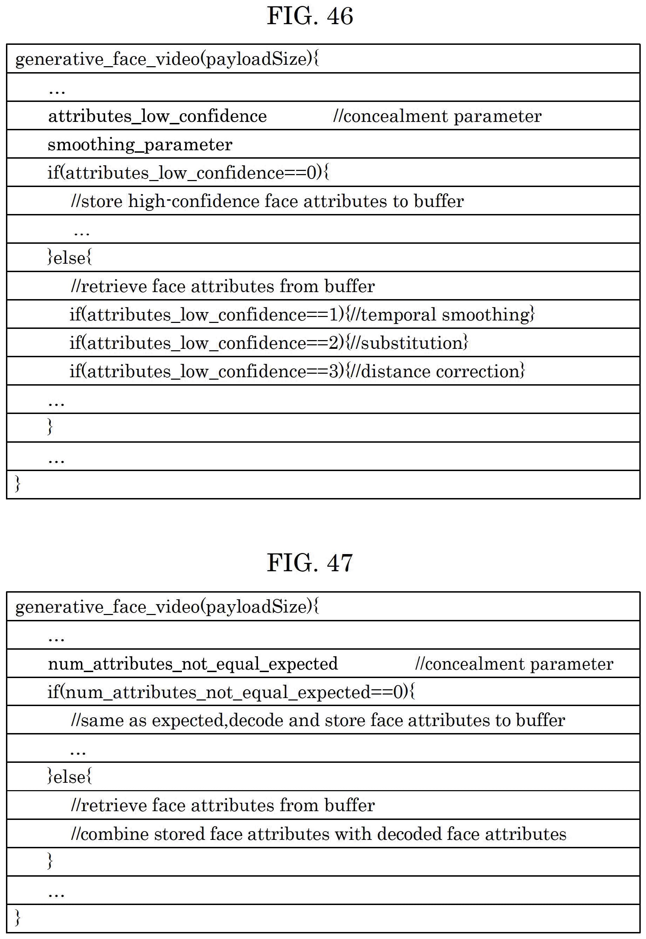

   FIG. 46 is a syntax diagram illustrating yet another example of the syntax structure related to the concealment parameter.
[FIG. 47]
   FIG. 47 is a syntax diagram illustrating yet another example of the syntax structure related to the concealment parameter.
[FIG. 48]

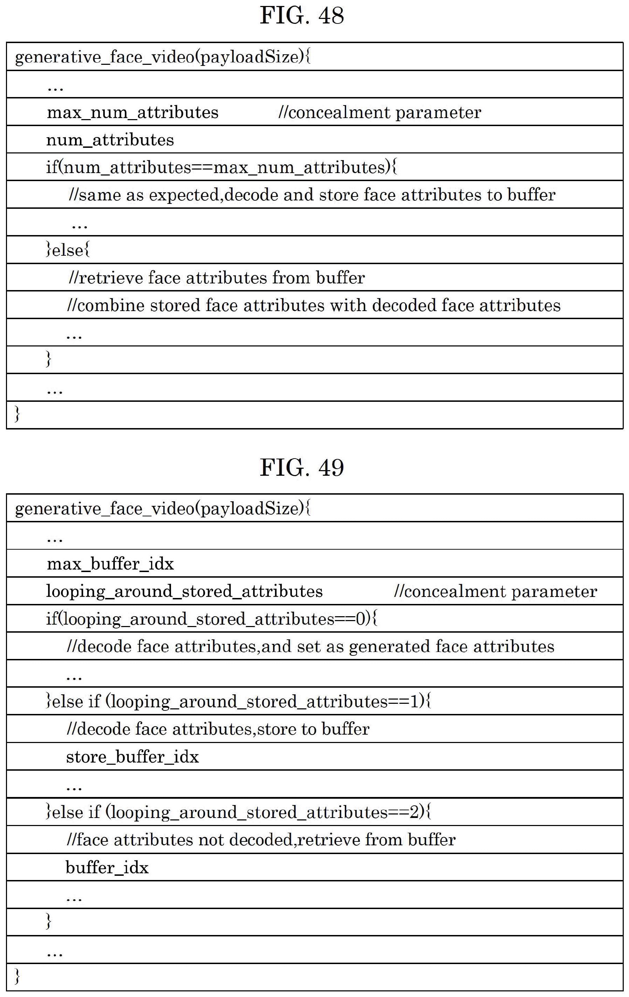

   FIG. 48 is a syntax diagram illustrating yet another example of the syntax structure related to the concealment parameter.
[FIG. 49]
   FIG. 49 is a syntax diagram illustrating yet another example of the syntax structure related to the concealment parameter.
[FIG. 50]

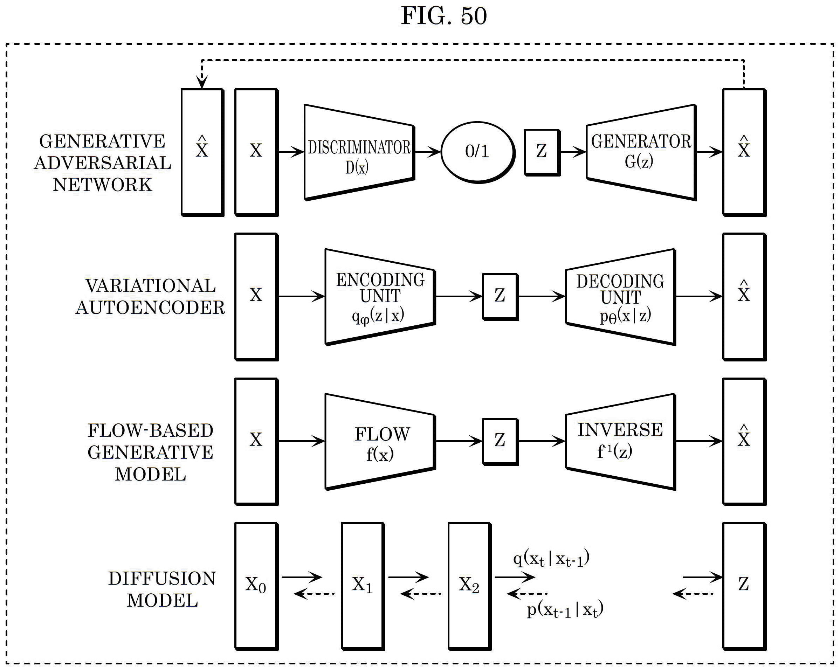

   FIG. 50 is a diagram illustrating an example of different neural network models applicable as a generative model.
[FIG. 51]

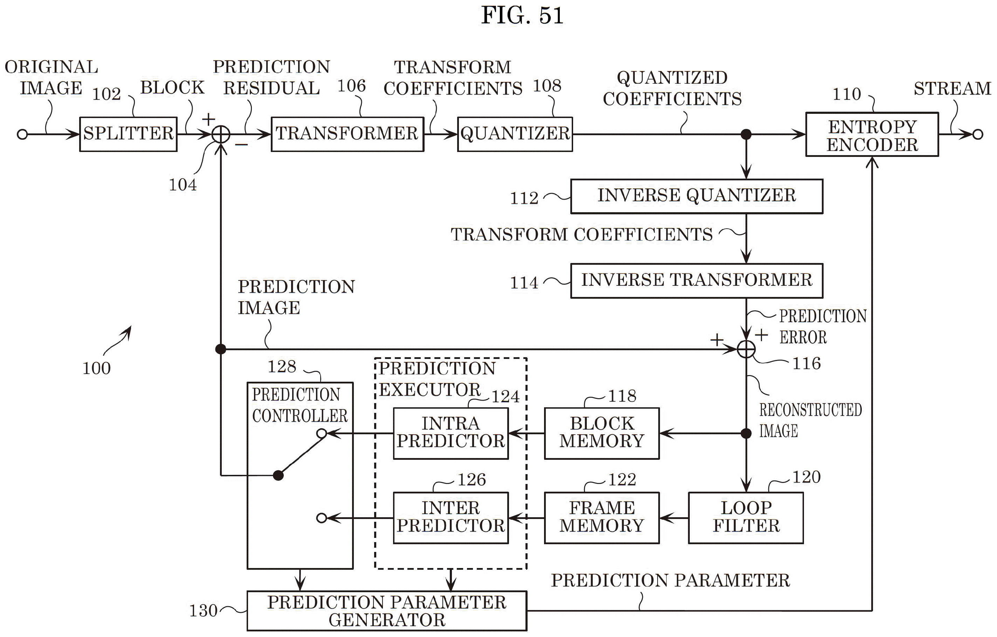

   FIG. 51 is a block diagram illustrating a configuration example for the encoder according to the embodiment to encode a video.
[FIG. 52]

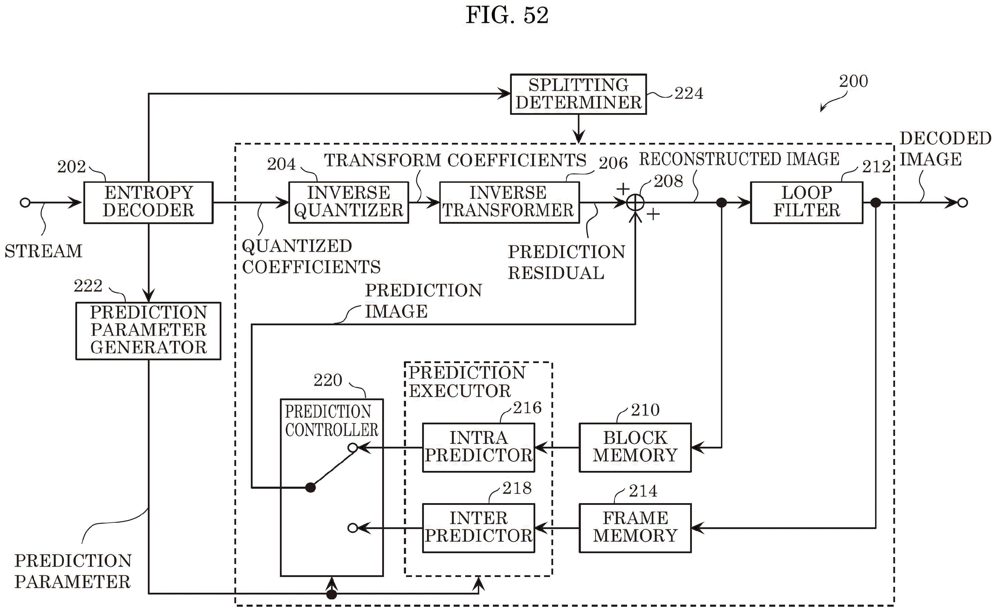

   FIG. 52 is a block diagram illustrating a configuration example for the decoder according to the embodiment to decode a video.
[FIG. 53]

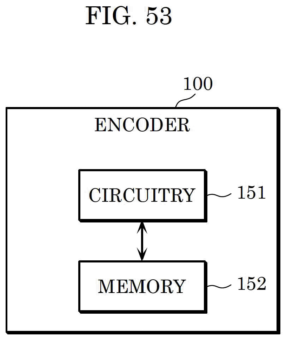

   FIG. 53 is a block diagram illustrating an implementation example of the encoder according to the embodiment.
[FIG. 54]

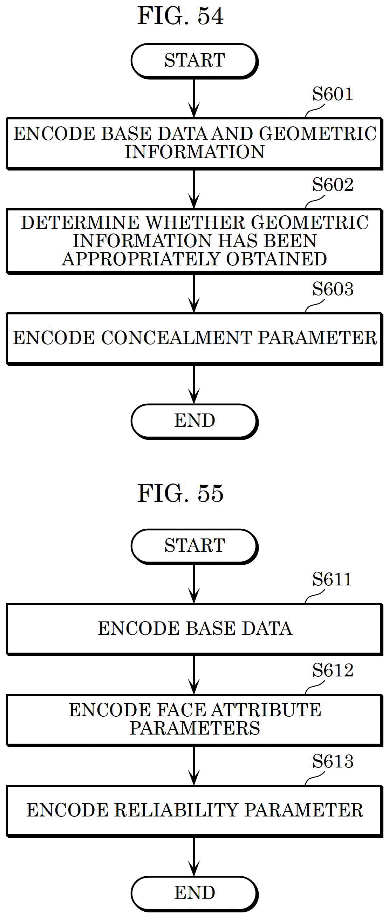

   FIG. 54 is a flowchart illustrating a basic operation example performed by the encoder according to the embodiment.
[FIG. 55]
   FIG. 55 is a flowchart illustrating another basic operation example performed by the encoder according to the embodiment.
[FIG. 56]

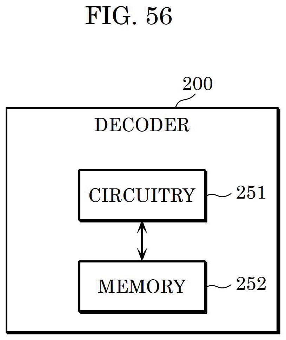

   FIG. 56 is a block diagram illustrating an implementation example of the decoder according to the embodiment.
[FIG. 57]

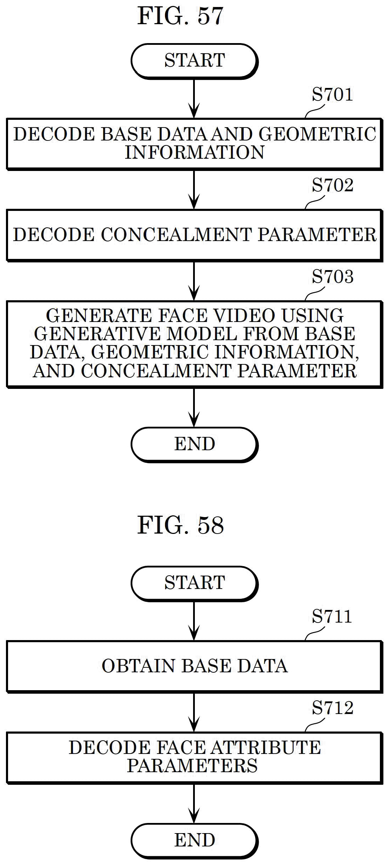

   FIG. 57 is a flowchart illustrating a basic operation example performed by the decoder according to the embodiment.
[FIG. 58]
   FIG. 58 is a flowchart illustrating another basic operation example performed by the decoder according to the embodiment.
[FIG. 59]

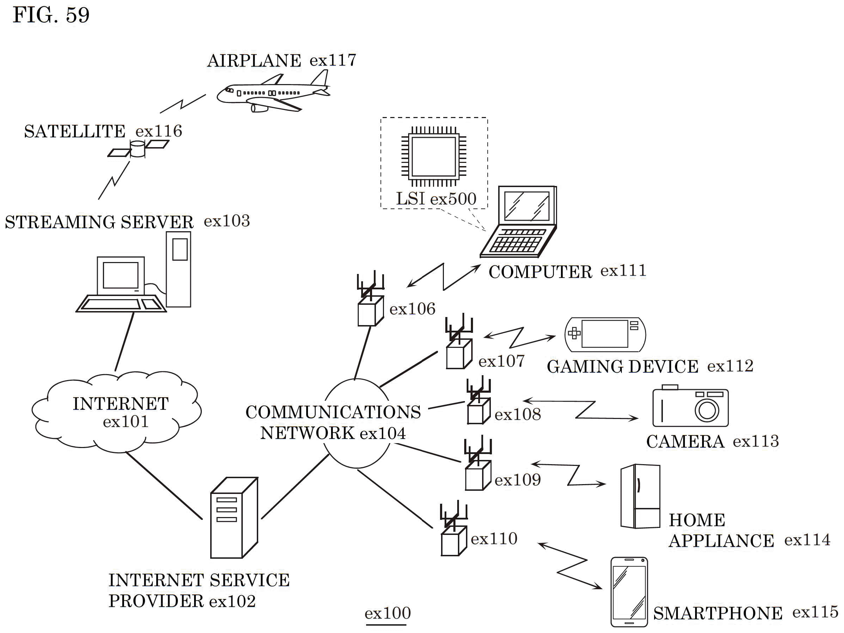

   FIG. 59 is a diagram illustrating an overall configuration of a content providing system for implementing a content distribution service.
[FIG. 60]

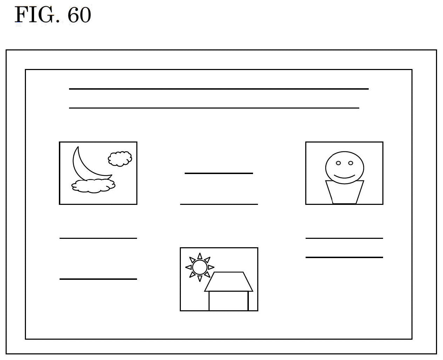

   FIG. 60 is a diagram illustrating an example of a display screen of a web page.
[FIG. 61]

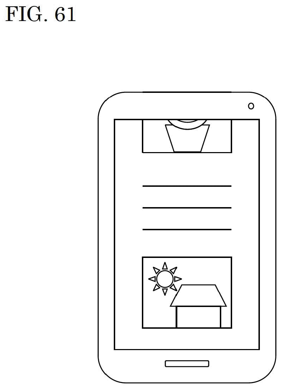

   FIG. 61 is a diagram illustrating an example of a display screen of a web page.
[FIG. 62]

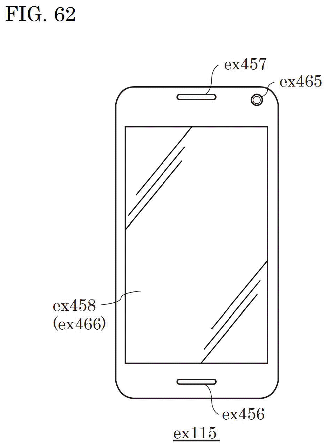

   FIG. 62 is a diagram illustrating one example of a smartphone.
[FIG. 63]

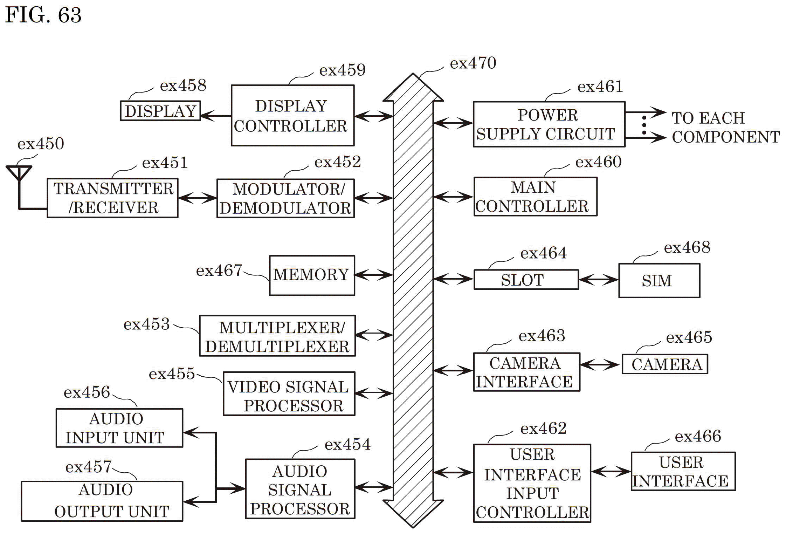

   FIG. 63 is a block diagram illustrating an example of a configuration of a smartphone.

### [Description of Embodiments]

### [Introduction]

Face re-enactment refers to the process of mapping the pose and expressions of one or more source persons to one or more target persons, while ensuring the identity of the target person is being preserved. Currently, face re-enactment techniques are used in a wide variety of applications that include video conferencing, the entertainment industry, and social media. This description can be used in any multimedia data coding regarding face re-enactment techniques that seek to enhance the photo-realistic aspect of generated output videos.

FIG. 1 is a block diagram illustrating the configuration of an encoding and decoding system according to a reference example. The encoding and decoding system illustrated in FIG. 1 includes encoder 700 and decoder 800. The model architecture of current works can be represented as a framework of encoder 700 and decoder 800 as illustrated in FIG. 1.

The model architecture can receive input in the form of fundamental images (source images) of a target person and one or more frames of a driving video. These are encoded and compressed into one or more bitstreams by encoder 700. Subsequently, the compressed bitstreams are transmitted to decoder 800 using a transmission channel. Finally, decoder 800 reconstructs the output video from the received bitstreams.

FIG. 2 is a block diagram illustrating the configuration of encoder 700 according to the reference example. Encoder 700 includes compressor 731, 733 and deriver 732.

First, encoder 700 encodes one or more fundamental images into a bitstream via compressor 731. Here, each fundamental image may be either one or more beginning frames of a driving video or at least one image or avatar including a face of the target person. The fundamental image can be also referred to as a face image.

Subsequent frames of a driving video are fed into deriver 732 to derive a set of geometric attributes of the frame, and encoded into a bitstream via compressor 733. Each driving frame may include a face of a person. Compressor 733 may or may not be the same as compressor 731.

The bitstream is transmitted to decoder 800 via a transmission channel. The bitstream may be a single bitstream, or may be formed by multiple sub-bitstreams.

FIG. 3 is a block diagram illustrating the configuration of decoder 800 according to the reference example. Decoder 800 includes decompressor 831, 833, deriver 832, and generator 834.

Decoder 800 first decodes one or more fundamental images from the bitstream. Each fundamental image may include a face of a person. The fundamental image is passed to deriver 832 to extract relevant information of the fundamental image as a set of fundamental attributes. The set of fundamental attributes may include a set of geometric attributes of the fundamental image. Data of the fundamental image and the set of fundamental attributes is shared between pictures of a video to be generated, and also referred to as base data.

For example, not only the set of fundamental attributes obtained at deriver 832 but also the fundamental image obtained at decompressor 831 can be provided to generator 834. Alternatively, the configuration and process of deriver 832 may be omitted. The set of fundamental attributes is not provided to generator 834, and the fundamental image may be provided to generator 834.

Subsequently, the set of geometric attributes for each frame is decoded from the bitstream using decompressor 833. Each set of geometric attributes includes the geometric attributes of a person in a driving frame.

Thereafter, generator 834 takes in, as input, the one or more fundamental images obtained at decompressor 831 and the set of fundamental attributes obtained at deriver 832 together with a set of geometric attributes obtained at decompressor 833 to generate a face video. Generator 834 may use only one of the fundamental image obtained at decompressor 831 or the set of fundamental attributes obtained at deriver 832.

Generator 834 includes a neural network, and the neural network may be a generative network such as a generative adversarial network (GAN). Typically, the face re-enactment process is performed via a GAN using a set of geometric attributes and a fundamental image. Each frame in the output may include a generated face, or no face at all.

FIG. 4 is a conceptual diagram illustrating an example of the fundamental image. As illustrated in this example, the fundamental image is an image including a face.

FIG. 5 is a conceptual diagram illustrating an example of the set of geometric attributes. In this example, the geometric attributes included in the set of geometric attributes refer to facial landmarks. For example, a set of geometric attributes are derived for each of frames of the captured video. It is to be noted that the set of geometric attributes may be referred to just as geometric attributes, or can be also referred to as geometric information, facial geometric attributes, face attributes, or face attribute parameters, or the like.

FIG. 6 is a conceptual diagram illustrating an example of a face video. As illustrated in this example, the face video is a video including a face. In the face video, for each of the frames, the geometric attributes of the frame are reflected in the fundamental image. With this, motion is given to the fundamental image.

The information amount of the fundamental image and sets of geometric attributes corresponding to frames is less than the information amount of frames included in the captured video. Accordingly, code amount is more reduced by encoding the fundamental image and sets of geometric attributes corresponding to frames than by encoding frames included in the captured video. Moreover, motion is given to the fundamental image by each set of geometric attributes. With this, motion is given to the face to be displayed, thereby allowing rich expression.

In current works, a set of geometric attributes is required during the generation of each frame of a face video. However, the set of geometric attributes is not necessarily appropriate. Furthermore, for example, it is not easy for decoder 800 to evaluate whether the set of geometric attributes decoded from the bitstream is appropriate. An inappropriate set of geometric attributes may lead to generation of distorted or erroneous frames.

In view of this, a decoder according to Example 1 is a decoder including circuitry and memory coupled to the circuitry, in which in operation, the circuitry: decodes, from a bitstream, base data of a face image related to a face video, and geometric information corresponding to each of frames of the face video and indicating geometric attributes within a region including a face of a person; further decodes, from the bitstream, a concealment parameter related to an error recovery control for when the geometric information is not appropriately obtained in an encoder; and generates the face video using a generative model from the base data, the geometric information, and the concealment parameter.

With this, it may be possible for the encoder to inform the decoder of information related to the error recovery control for when the geometric information is not appropriately obtained in the encoder. Accordingly, it may be possible to appropriately perform the error recovery control in the decoder when the geometric information is not appropriately obtained in the encoder.

Moreover, a decoder according to Example 2 is the decoder according to Example 1, in which the circuitry may decode the concealment parameter from a header of the bitstream.

With this, it may be possible for the encoder to inform the decoder, via the header of the bitstream, of information related to the error recovery control for when the geometric information is not appropriately obtained in the encoder. Accordingly, it may be possible to appropriately perform the error recovery control in the decoder based on the information in the header.

Moreover, a decoder according to Example 3 is the decoder according to Example 1 or 2, in which the concealment parameter may indicate, according to a value of the concealment parameter, that the geometric information obtained in the encoder and corresponding to a current frame has low reliability.

With this, it may be possible for the encoder to inform the decoder that the geometric information obtained in the encoder has low reliability. Accordingly, it may be possible to appropriately perform the error recovery control in the decoder.

Moreover, a decoder according to Example 4 is the decoder according to any of Examples 1 to 3, in which the concealment parameter may indicate, according to a value of the concealment parameter, that the geometric information corresponding to a current frame has not been obtained in the encoder.

With this, it may be possible for the encoder to inform the decoder that the geometric information has not been obtained in the encoder. Accordingly, it may be possible to appropriately perform the error recovery control in the decoder.

Moreover, a decoder according to Example 5 is the decoder according to any of Examples 1 to 4, in which the concealment parameter may indicate, according to a value of the concealment parameter, that a total number of attributes in the geometric information obtained in the encoder and corresponding to a current frame is different from an original number of attributes.

With this, it may be possible for the encoder to inform the decoder that the total number of attributes in the geometric information obtained in the encoder is not appropriate. Accordingly, it may be possible to appropriately perform the error recovery control in the decoder.

Moreover, a decoder according to Example 6 is the decoder according to any of Examples 1 to 5, in which the concealment parameter may indicate, according to a value of the concealment parameter, that stored geometric information is applied for a current frame of the face video instead of the geometric information to be decoded from the bitstream.

With this, it may be possible for the encoder to inform the decoder that the stored geometric information is applied to the current frame. Accordingly, it may be possible to appropriately perform the error recovery control in the decoder.

Moreover, a decoder according to Example 7 is the decoder according to any of Examples 1 to 6, in which the concealment parameter may indicate, according to a value of the concealment parameter, that the geometric information corresponding to a current frame is to be stored for a subsequent frame.

With this, it may be possible for the encoder to inform the decoder that the geometric information corresponding to the current frame is to be stored. Accordingly, it may be possible to appropriately perform the error recovery control on the subsequent frame in the decoder.

Moreover, a decoder according to Example 8 is the decoder according to any of Examples 1 to 7, in which when the concealment parameter indicates: that the geometric information obtained in the encoder and corresponding to a current frame has low reliability; or that a total number of attributes in the geometric information is different from an original number of attributes, the circuitry may: correct the geometric information decoded from the bitstream and corresponding to the current frame using stored geometric information, and apply the geometric information corrected as the geometric information for generating the face image corresponding to the current frame in the face video.

With this, it may be possible to correct the inappropriately obtained geometric information using the stored geometric information when the geometric information is not appropriately obtained in the encoder. Accordingly, it may be possible to appropriately perform the error recovery control.

Moreover, a decoder according to Example 9 is the decoder according to any of Examples 1 to 7, in which when the concealment parameter indicates: that the geometric information obtained in the encoder and corresponding to a current frame has low reliability; that the geometric information has not been obtained; that a total number of attributes in the geometric information is different from an original number of attributes; or that stored geometric information is applied as the geometric information corresponding to the current frame, the circuitry may apply the stored geometric information as the geometric information for generating the face image corresponding to the current frame in the face video.

With this, it may be possible to employ the stored geometric information instead of the inappropriately obtained geometric information when the geometric information is not appropriately obtained in the encoder. Accordingly, it may be possible to appropriately perform the error recovery control.

Moreover, a decoder according to Example 10 is the decoder according to any of Examples 1 to 7, in which when the concealment parameter indicates: that the geometric information obtained in the encoder and corresponding to a current frame has low reliability; that the geometric information has not been obtained; or that a total number of attributes in the geometric information is different from an original number of attributes, the circuitry does not generate the face image corresponding to the current frame in the face video using the generative model, and may apply an already generated face image as the face image corresponding to the current frame, the already generated face image being related to the face video.

With this, it may be possible to employ an already generated face image for the current frame instead of newly generating a face image when the geometric information is not appropriately obtained in the encoder. Accordingly, it may be possible to appropriately perform the error recovery control.

Moreover, a decoder according to Example 11 is the decoder according to any of Examples 6, 8, and 9, in which the stored geometric information may be geometric information decoded from the bitstream and corresponding to a previous frame.

With this, it may be possible to appropriately perform the error recovery control using the geometric information corresponding to a previous frame.

Moreover, a decoder according to Example 12 is the decoder according to any of Examples 6, 8, and 9, in which the stored geometric information may be geometric information satisfying predefined criteria.

With this, it may be possible to appropriately perform the error recovery control using the geometric information satisfying the predefined criteria.

Moreover, a decoder according to Example 13 is a decoder including circuitry and memory coupled to the circuitry, in which in operation, the circuitry: obtains base data of an image included in a video; and decodes, from a bitstream, face attribute parameters indicating a face included in the image, the base data and the face attribute parameters are inputted to a generative model to generate an output image corresponding to the image, the bitstream includes a reliability parameter related to reliability of the face attribute parameters, and the reliability parameter indicates, according to a value of the reliability parameter, that the reliability is low.

With this, when the reliability of the face attribute parameters is low, it may be possible for the encoder to inform the decoder that the reliability of the face attribute parameters is low. Accordingly, in the decoder, it may be possible to appropriately determine that the reliability of the face attribute parameters is low.

Moreover, a decoder according to Example 14 is the decoder according to Example 13, in which the image may correspond to each of pictures included in the video, the base data may be common to the pictures, and the bitstream may include the reliability parameter and the face attribute parameters for each of the pictures.

With this, when the reliability of the face attribute parameters is low, it may be possible for the encoder to inform the decoder, for each of the pictures, that the reliability of the face attribute parameters is low. Accordingly, in the decoder, it may be possible to appropriately determine, for each of the pictures, that the reliability of the face attribute parameters is low.

Moreover, a decoder according to Example 15 is the decoder according to Example 14, in which the bitstream may include the reliability parameter prior to the face attribute parameters for each of the pictures.

With this, it may be possible for the encoder to inform the decoder of the reliability of the face attribute parameters before informing the decoder of the face attribute parameters. Accordingly, in the decoder, it may be possible to process the face attribute parameters after appropriately determining that the reliability of the face attribute parameters is low.

Moreover, a decoder according to Example 16 is the decoder according to any of Examples 13 to 15, in which when the reliability parameter does not indicate that the reliability of the face attribute parameters is low, the face attribute parameters may be stored.

With this, it may be possible to prevent the face attribute parameters with low reliability from being stored. Accordingly, it may be possible to prevent reuse of the face attribute parameters with low reliability.

Moreover, an encoder according to Example 17 is an encoder including circuitry and memory coupled to the circuitry, in which in operation, the circuitry: encodes, into a bitstream, base data of a face image related to a face video, and geometric information corresponding to each of frames of the face video and indicating geometric attributes within a region including a face of a person; determines whether the geometric information has been appropriately obtained; and further encodes, into the bitstream, a concealment parameter related to an error recovery control in a decoder for when the geometric information is not appropriately obtained.

With this, it may be possible for the encoder to inform the decoder of information related to the error recovery control for when the geometric information is not appropriately obtained in the encoder. Accordingly, it may be possible to appropriately perform the error recovery control in the decoder when the geometric information is not appropriately obtained in the encoder.

Moreover, an encoder according to Example 18 is the encoder according to Example 17, in which the circuitry may encode the concealment parameter into a header of the bitstream.

With this, it may be possible for the encoder to inform the decoder, via the header of the bitstream, of information related to the error recovery control for when the geometric information is not appropriately obtained in the encoder. Accordingly, it may be possible to appropriately perform the error recovery control based on the information in the header.

Moreover, an encoder according to Example 19 is the encoder according to Example 17 or 18, in which the concealment parameter may indicate, according to a value of the concealment parameter, that the geometric information obtained in the encoder and corresponding to a current frame has low reliability.

With this, it may be possible for the encoder to inform the decoder that the geometric information obtained in the encoder has low reliability. Accordingly, it may be possible to appropriately perform the error recovery control in the decoder.

Moreover, an encoder according to Example 20 is the encoder according to any of Examples 17 to 19, in which the concealment parameter may indicate, according to a value of the concealment parameter, that the geometric information corresponding to a current frame has not been obtained in the encoder.

With this, it may be possible for the encoder to inform the decoder that the geometric information has not been obtained in the encoder. Accordingly, it may be possible to appropriately perform the error recovery control in the decoder.

Moreover, an encoder according to Example 21 is the encoder according to any of Examples 17 to 20, in which the concealment parameter may indicate, according to a value of the concealment parameter, that a total number of items in the geometric information obtained in the encoder and corresponding to a current frame is different from an original number of items.

With this, it may be possible for the encoder to inform the decoder that the total number of attributes in the geometric information obtained in the encoder is not appropriate. Accordingly, it may be possible to appropriately perform the error recovery control in the decoder.

Moreover, an encoder according to Example 22 is the encoder according to any of Examples 17 to 21, in which the concealment parameter may indicate, according to a value of the concealment parameter, that stored geometric information is applied for a current frame of the face video instead of the geometric information to be decoded from the bitstream.

With this, it may be possible for the encoder to inform the decoder that the stored geometric information is applied to the current frame. Accordingly, it may be possible to appropriately perform the error recovery control in the decoder.

Moreover, an encoder according to Example 23 is the encoder according to any of Examples 17 to 22, in which the concealment parameter may indicate, according to a value of the concealment parameter, that the geometric information corresponding to a current frame is to be stored for a subsequent frame.

With this, it may be possible for the encoder to inform the decoder that the geometric information corresponding to the current frame is to be stored. Accordingly, it may be possible to appropriately perform the error recovery control on the subsequent frame.

Moreover, an encoder according to Example 24 is the encoder according to any of Examples 17 to 23, in which when reliability of the geometric information obtained in the encoder and corresponding to a current frame is lower than a threshold, the circuitry may set the concealment parameter to a value indicating that the reliability of the geometric information is low.

With this, when the reliability of the geometric information is lower than the threshold, it may be possible for the encoder to inform the decoder that the reliability of the geometric information is low. Accordingly, it may be possible to appropriately perform the error recovery control in the decoder.

Moreover, an encoder according to Example 25 is the encoder according to any of Examples 17 to 24, in which when reliability of the geometric information obtained in the encoder and corresponding to a current frame is lower than a threshold or when the face is not included in the current frame obtained in the encoder, the circuitry does not encode, into the bitstream, the geometric information corresponding to the current frame, and may set the concealment parameter to a value indicating that the geometric information has not been obtained.

With this, when the reliability of the geometric information is lower than the threshold or when the face is not included, it may be possible for the encoder to inform the decoder that the geometric information has not been obtained. Accordingly, it may be possible to appropriately perform the error recovery control in the decoder.

Moreover, an encoder according to Example 26 is the encoder according to any of Examples 17 to 25, in which when a total number of attributes in the geometric information obtained in the encoder and corresponding to a current frame is different from a predefined number of attributes, the circuitry may set the concealment parameter to a value indicating that the total number of attributes in the geometric information is different from an original number of items.

With this, when the total number of attributes in the geometric information is different from the predefined number of attributes, it may be possible for the encoder to inform the decoder that the total number of attributes in the geometric information is different from the original number of items. Accordingly, it may be possible to appropriately perform the error recovery control in the decoder.

Moreover, an encoder according to Example 27 is the encoder according to any of Examples 17 to 26, in which when reliability of the geometric information obtained in the encoder and corresponding to a current frame is lower than a threshold or when the face is not included in the current frame obtained in the encoder, the circuitry may set the concealment parameter to a value indicating that stored geometric information is applied as the geometric information corresponding to the current frame.

With this, when the reliability of the geometric information is lower than the threshold or when the face is not included, it may be possible for the encoder to inform the decoder that the stored geometric information is applied to the current frame. Accordingly, it may be possible to appropriately perform the error recovery control in the decoder.

Moreover, an encoder according to Example 28 is the encoder according to any of Examples 17 to 27, in which when reliability of the geometric information obtained in the encoder and corresponding to a current frame is higher than or equal to a specified threshold, the circuitry may set the concealment parameter to a value indicating that the geometric information is to be stored for a subsequent frame.

With this, when the reliability of the geometric information is higher than or equal to the threshold, it may be possible for the encoder to inform the decoder that the geometric information is to be stored. Accordingly, it may be possible to appropriately perform the error recovery control on the subsequent frame in the decoder.

Moreover, an encoder according to Example 29 is the encoder according to any of Examples 17 to 28, in which when reliability of the geometric information obtained in the encoder and corresponding to a current frame is lower than a threshold, the circuitry may: correct the geometric information obtained, using stored geometric information; and encode, into the bitstream, the geometric information corrected.

With this, in the encoder, it may be possible to correct the inappropriately obtained geometric information using the stored geometric information when the geometric information is not appropriately obtained. Accordingly, it may be possible to appropriately perform the error recovery control in the encoder.

Moreover, an encoder according to Example 30 is the encoder according to any of Examples 17 to 28, in which when reliability of the geometric information obtained in the encoder and corresponding to a current frame is lower than a threshold, the circuitry may encode, into the bitstream, stored geometric information as the geometric information corresponding to the current frame.

With this, in the encoder, it may be possible to employ the stored geometric information instead of the inappropriately obtained geometric information when the geometric information is not appropriately obtained. Accordingly, it may be possible to appropriately perform the error recovery control in the encoder.

Moreover, an encoder according to Example 31 is the encoder according to any of Examples 22, 27, 29, and 30, in which the stored geometric information may be geometric information obtained in the encoder and corresponding to a previous frame.

With this, it may be possible to appropriately perform the error recovery control using the geometric information corresponding to a previous frame.

Moreover, an encoder according to Example 32 is the encoder according to any of Examples 22, 27, 29, and 30, in which the stored geometric information may be geometric information satisfying predefined criteria.

With this, it may be possible to appropriately perform the error recovery control using the geometric information satisfying the predefined criteria.

Moreover, an encoder according to Example 33 is an encoder including circuitry and memory coupled to the circuitry, in which in operation, the circuitry: encodes base data of an image included in a video; encodes, into a bitstream, face attribute parameters indicating a face included in the image; and further encodes, into the bitstream, a reliability parameter related to reliability of the face attribute parameters, and the reliability parameter indicates, according to a value of the reliability parameter, that the reliability is low.

For example, when the reliability of the face attribute parameters is not known in the decoder, there is a risk of generating inappropriate images since the reliability is assumed on the decoder side to perform the processes. With the above configuration, when the reliability of the face attribute parameters is low, it may be possible for the encoder to inform the decoder that the reliability of the face attribute parameters is low.

Accordingly, in the decoder, it may be possible to appropriately determine that the reliability of the face attribute parameters is low. Furthermore, it may be possible for the encoder to control determination of whether the reliability of the face attribute parameters is low in the decoder.

Moreover, an encoder according to Example 34 is the encoder according to Example 33, in which the image may correspond to each of pictures included in the video, the base data may be common to the pictures, and the bitstream may include the reliability parameter and the face attribute parameters for each of the pictures.

With this, when the reliability of the face attribute parameters is low, it may be possible for the encoder to inform the decoder, for each of the pictures, that the reliability of the face attribute parameters is low. Accordingly, in the decoder, it may be possible to appropriately determine, for each of the pictures, that the reliability of the face attribute parameters is low.

Moreover, an encoder according to Example 35 is the encoder according to Example 34, in which the bitstream may include the reliability parameter prior to the face attribute parameters for each of the pictures.

With this, it may be possible for the encoder to inform the decoder of the reliability of the face attribute parameters before informing the decoder of the face attribute parameters. Accordingly, in the decoder, it may be possible to process the face attribute parameters after appropriately determining that the reliability of the face attribute parameters is low.

Moreover, an encoder according to Example 36 is the encoder according to any of Examples 33 to 35, in which when the reliability parameter does not indicate that the reliability of the face attribute parameters is low, the face attribute parameters may be stored.

With this, it may be possible to prevent the face attribute parameters with low reliability from being stored. Accordingly, it may be possible to prevent reuse of the face attribute parameters with low reliability.

Moreover, a decoding method according to Example 37 is a decoding method including: decoding, from a bitstream, base data of a face image related to a face video, and geometric information indicating geometric attributes within a region including a face of a person, the geometric information corresponding to each of frames of the face video; further decoding, from the bitstream, a concealment parameter related to an error recovery control for when the geometric information is not appropriately obtained in an encoder; and generating the face video using a generative model from the base data, the geometric information, and the concealment parameter.

With this, it may be possible for the encoder to inform the decoder of information related to the error recovery control for when the geometric information is not appropriately obtained in the encoder. Accordingly, it may be possible to appropriately perform the error recovery control in the decoder when the geometric information is not appropriately obtained in the encoder.

Moreover, a decoding method according to Example 38 is a decoding method including: obtaining base data of an image included in a video; and decoding, from a bitstream, face attribute parameters indicating a face included in the image, in which the base data and the face attribute parameters are inputted to a generative model to generate an output image corresponding to the image, the bitstream includes a reliability parameter related to reliability of the face attribute parameters, and the reliability parameter indicates, according to a value of the reliability parameter, that the reliability is low.

With this, when the reliability of the face attribute parameters is low, it may be possible for the encoder to inform the decoder that the reliability of the face attribute parameters is low. Accordingly, in the decoder, it may be possible to appropriately determine that the reliability of the face attribute parameters is low.

Moreover, an encoding method according to Example 39 is an encoding method including: encoding, into a bitstream, base data of a face image related to a face video, and geometric information indicating geometric attributes within a region including a face of a person, the geometric information corresponding to each of frames of the face video; determining whether the geometric information has been appropriately obtained; and further encoding, into the bitstream, a concealment parameter related to an error recovery control in a decoder for when the geometric information is not appropriately obtained.

With this, when the reliability of the face attribute parameters is low, it may be possible for the encoder to inform the decoder that the reliability of the face attribute parameters is low. Accordingly, in the decoder, it may be possible to appropriately determine that the reliability of the face attribute parameters is low.

Moreover, an encoding method according to Example 40 is an encoding method including: encoding base data of an image included in a video; encoding, into a bitstream, face attribute parameters indicating a face included in the image; and further encoding, into the bitstream, a reliability parameter related to reliability of the face attribute parameters, in which the reliability parameter indicates, according to a value of the reliability parameter, that the reliability is low.

For example, when the reliability of the face attribute parameters is not known in the decoder, there is a risk of generating inappropriate images since the reliability is assumed on the decoder side to perform the processes. With the above configuration, when the reliability of the face attribute parameters is low, it may be possible for the encoder to inform the decoder that the reliability of the face attribute parameters is low.

Accordingly, in the decoder, it may be possible to appropriately determine that the reliability of the face attribute parameters is low. Furthermore, it may be possible for the encoder to control determination of whether the reliability of the face attribute parameters is low in the decoder.

Furthermore, these general or specific aspects may be implemented using a system, an apparatus, a method, an integrated circuit, a computer program, or a non-transitory computer readable medium such as a CD-ROM, or any combination of systems, apparatuses, methods, integrated circuits, computer programs, or media.

In an example of the present disclosure, errors in realistic face generation are concealed by introducing one or more flags for controlling the storage of relevant information at the decoder. An example of the relevant information may be the previously decoded geometric attribute information which can be used for re-enacting a current or future frame. Through the information storage, the decoder can be accorded flexibility in using previously decoded information for generating the current frame, thereby reducing errors in generating frames under insufficient information.

The decoder need not have all information before the decoder starts the re-enactment process for the current frame, but the decoder may adaptively leverage on the past information.

For example, overall flexibility is improved for decoders that adaptively leverage on previously decoded information during the re-enactment of the current frame. Consequently, frame errors generated upon receipt of insufficient information are concealed, thereby allowing an output video to be more natural-looking. Furthermore, at each of the steps for the face re-enactment process, the operation of GAN can be guaranteed.

### [Definitions of Terms]

The respective terms may be defined as indicated below as examples.

### (1) image

An image is a data unit configured with a set of pixels, is a picture or includes blocks smaller than a picture. Images include a still image in addition to a video.

### (2) picture

A picture is an image processing unit configured with a set of pixels, and is also referred to as a frame or a field.

### (3) block

A block is a processing unit which is a set of a particular number of pixels. The block is also referred to as indicated in the following examples. The shapes of blocks are not limited. Examples include a rectangle shape of M×N pixels and a square shape of M×M pixels for the first place, and also include a triangular shape, a circular shape, and other shapes.

### (examples of blocks)

- slice/tile/brick
- CTU / super block / basic splitting unit
- VPDU / processing splitting unit for hardware
- CU / processing block unit / prediction block unit (PU) / orthogonal transform block unit (TU) / unit
- sub-block

### (4) pixel/sample

A pixel or sample is a smallest point of an image. Pixels or samples include not only a pixel at an integer position but also a pixel at a sub-pixel position generated based on a pixel at an integer position.

### (5) pixel value / sample value

A pixel value or sample value is an eigen value of a pixel. Pixel or sample values naturally include a luma value, a chroma value, an RGB gradation level and also covers a depth value, or a binary value of 0 or 1.

### (6) flag

A flag indicates one or more bits, and may be, for example, a parameter or index represented by two or more bits. Alternatively, the flag may indicate not only a binary value represented by a binary number but also a multiple value represented by a number other than the binary number.

### (7) signal

A signal is the one symbolized or encoded to convey information. Signals include a discrete digital signal and an analog signal which takes a continuous value.

### (8) stream/bitstream

A stream or bitstream is a digital data string or a digital data flow. A stream or bitstream may be one stream or may be configured with a plurality of streams having a plurality of hierarchical layers. A stream or bitstream may be transmitted in serial communication using a single transmission path, or may be transmitted in packet communication using a plurality of transmission paths.

### (9) difference

In the case of scalar quantity, it is only necessary that a simple difference (x - y) and a difference calculation be included. Differences include an absolute value of a difference (|x - y|), a squared difference (x^2 - y^2), a square root of a difference (√(x - y)), a weighted difference (ax - by: a and b are constants), an offset difference (x - y + a: a is an offset).

### (10) sum

In the case of scalar quantity, it is only necessary that a simple sum (x + y) and a sum calculation be included. Sums include an absolute value of a sum (|x + y|), a squared sum (x^2 + y^2), a square root of a sum (√(x + y)), a weighted difference (ax + by: a and b are constants), an offset sum (x + y + a: a is an offset).

### (11) based on

A phrase "based on something" means that a thing other than the something may be considered. In addition, "based on" may be used in a case in which a direct result is obtained or a case in which a result is obtained through an intermediate result.

### (12) used, using

A phrase "something used" or "using something" means that a thing other than the something may be considered. In addition, "used" or "using" may be used in a case in which a direct result is obtained or a case in which a result is obtained through an intermediate result.

### (13) prohibit, forbid

The term "prohibit" or "forbid" can be rephrased as "does not permit" or "does not allow". In addition, "being not prohibited/forbidden" or "being permitted/allowed" does not always mean "obligation".

### (14) limit, restriction/restrict/restricted

The term "limit" or "restriction/restrict/restricted" can be rephrased as "does not permit/allow" or "being not permitted/allowed". In addition, "being not prohibited/forbidden" or "being permitted/allowed" does not always mean "obligation". Furthermore, it is only necessary that part of something be prohibited/forbidden quantitatively or qualitatively, and something may be fully prohibited/forbidden.

### (15) chroma

An adjective, represented by the symbols Cb and Cr, specifying that a sample array or single sample is representing one of the two color difference signals related to the primary colors. The term chroma may be used instead of the term chrominance.

### (16) luma

An adjective, represented by the symbol or subscript Y or L, specifying that a sample array or single sample is representing the monochrome signal related to the primary colors. The term luma may be used instead of the term luminance.

### [Notes Related to the Descriptions]

In the drawings, same reference numbers indicate same or similar components. The sizes and relative locations of components are not necessarily drawn by the same scale.

Hereinafter, embodiments will be described with reference to the drawings. Note that the embodiments described below each show a general or specific example. The numerical values, shapes, materials, components, the arrangement and connection of the components, steps, the relation and order of the steps, etc., indicated in the following embodiments are mere examples, and are not intended to limit the scope of the claims.

Embodiments of an encoder and a decoder will be described below. The embodiments are examples of an encoder and a decoder to which the processes and/or configurations presented in the description of aspects of the present disclosure are applicable. The processes and/or configurations can also be implemented in an encoder and a decoder different from those according to the embodiments. For example, regarding the processes and/or configurations as applied to the embodiments, any of the following may be implemented:
(1) Any of the components of the encoder or the decoder according to the embodiments presented in the description of aspects of the present disclosure may be substituted or combined with another component presented anywhere in the description of aspects of the present disclosure.
(2) In the encoder or the decoder according to the embodiments, discretionary changes may be made to functions or processes performed by one or more components of the encoder or the decoder, such as addition, substitution, removal, etc., of the functions or processes. For example, any function or process may be substituted or combined with another function or process presented anywhere in the description of aspects of the present disclosure.
(3) In methods implemented by the encoder or the decoder according to the embodiments, discretionary changes may be made such as addition, substitution, and removal of one or more of the processes included in the method. For example, any process in the method may be substituted or combined with another process presented anywhere in the description of aspects of the present disclosure.
(4) One or more components included in the encoder or the decoder according to embodiments may be combined with a component presented anywhere in the description of aspects of the present disclosure, may be combined with a component including one or more functions presented anywhere in the description of aspects of the present disclosure, and may be combined with a component that implements one or more processes implemented by a component presented in the description of aspects of the present disclosure.
(5) A component including one or more functions of the encoder or the decoder according to the embodiments, or a component that implements one or more processes of the encoder or the decoder according to the embodiments, may be combined or substituted with a component presented anywhere in the description of aspects of the present disclosure, with a component including one or more functions presented anywhere in the description of aspects of the present disclosure, or with a component that implements one or more processes presented anywhere in the description of aspects of the present disclosure.
(6) In methods implemented by the encoder or the decoder according to the embodiments, any of the processes included in the method may be substituted or combined with a process presented anywhere in the description of aspects of the present disclosure or with any corresponding or equivalent process.
(7) One or more processes included in methods implemented by the encoder or the decoder according to the embodiments may be combined with a process presented anywhere in the description of aspects of the present disclosure.
(8) The implementation of the processes and/or configurations presented in the description of aspects of the present disclosure is not limited to the encoder or the decoder according to the embodiments. For example, the processes and/or configurations may be implemented in a device used for a purpose different from the moving picture encoder or the moving picture decoder disclosed in the embodiments.

### [Configuration of Encoding and Decoding System]

FIG. 7 is a block diagram illustrating a configuration example of an encoding and decoding system according to an embodiment. For example, the encoding and decoding system includes encoder 100 and decoder 200. The example of FIG. 7 is similar to the example of FIG. 1, but in FIG. 7, the specific configuration and process of encoder 100, the specific configuration and process of decoder 200, and the bitstream are different from those in the example of FIG. 1.

For example, the fundamental image is an image including a face, and can be also referred to as a face image, a source image, or an identity image. The fundamental image represents static and visual characteristics for reconstructing the face video. The driving video is a video including a face, and a video captured by a camera. The driving video plays a role of giving motion to the fundamental image. The bitstream is also referred to just as a stream. Moreover, the present disclosure is not limited to use of one bitstream. Multiple bitstreams may be used.

The person included in the fundamental image and the person included in the driving video may be the same, or may be different.

It is to be noted that the encoding and decoding system according to the present embodiment is applicable to video conferencing, generation and editing of videos in the entertainment industry, social media, the e-commerce industry, etc. However, the applicable range is not limited to these.

### [Data Structure]

FIG. 8 is a diagram illustrating one example of a hierarchical structure of data in a stream. A stream includes, for example, a video sequence. As illustrated in (a) of FIG. 8, the video sequence includes a video parameter set (VPS), a sequence parameter set (SPS), a picture parameter set (PPS), supplemental enhancement information (SEI), and a plurality of pictures.

In a video having a plurality of layers, a VPS includes: a coding parameter which is common between some of the plurality of layers; and a coding parameter related to some of the plurality of layers included in the video or an individual layer.

An SPS includes a parameter which is used for a sequence, that is, a coding parameter which decoder 200 refers to in order to decode the sequence. For example, the coding parameter may indicate the width or height of a picture. It is to be noted that a plurality of SPSs may be present.

A PPS includes a parameter which is used for a picture, that is, a coding parameter which decoder 200 refers to in order to decode each of the pictures in the sequence. For example, the coding parameter may include a reference value for the quantization width which is used to decode a picture and a flag indicating application of weighted prediction. It is to be noted that a plurality of PPSs may be present. Each of the SPS and the PPS may be simply referred to as a parameter set.

As illustrated in (b) of FIG. 8, a picture may include a picture header and at least one slice. A picture header includes a coding parameter which decoder 200 refers to in order to decode the at least one slice.

As illustrated in (c) of FIG. 8 a slice includes a slice header and at least one brick. A slice header includes a coding parameter which decoder 200 refers to in order to decode the at least one brick.

As illustrated in (d) of FIG. 8, a brick includes at least one coding tree unit (CTU).

It is to be noted that a picture may not include any slice and may include a tile group instead of a slice. In this case, the tile group includes at least one tile. In addition, a brick may include a slice.

A CTU is also referred to as a super block or a basis splitting unit. As illustrated in (e) of FIG. 8, a CTU like this includes a CTU header and at least one coding unit (CU). A CTU header includes a coding parameter which decoder 200 refers to in order to decode the at least one CU.

A CU may be split into a plurality of smaller CUs. As illustrated in (f) of FIG. 8, a CU includes a CU header, prediction information, and residual coefficient information. Prediction information is information for predicting the CU, and the residual coefficient information is information indicating a prediction residual to be described later. Although a CU is basically the same as a prediction unit (PU) and a transform unit (TU), it is to be noted that, for example, an SBT to be described later may include a plurality of TUs smaller than the CU. In addition, the CU may be processed for each virtual pipeline decoding unit (VPDU) included in the CU. The VPDU is, for example, a fixed unit which can be processed at one stage when pipeline processing is performed in hardware.

It is to be noted that a stream may not include part of the hierarchical layers illustrated in FIG. 8. The order of the hierarchical layers may be exchanged, or any of the hierarchical layers may be replaced by another hierarchical layer. Here, a picture which is a target for a process which is about to be performed by a device such as encoder 100 or decoder 200 is referred to as a current picture. A current picture means a current picture to be encoded when the process is an encoding process, and a current picture means a current picture to be decoded when the process is a decoding process. Likewise, for example, a CU or a block of CUs which is a target for a process which is about to be performed by a device such as encoder 100 or decoder 200 is referred to as a current block. A current block means a current block to be encoded when the process is an encoding process, and a current block means a current block to be decoded when the process is a decoding process.

Here, a region where parameters for use in encoding and decoding are described can be referred to as a header. For example, the header is a region including SEI. The header can further include VPS, SPS, PPS, SEI, a picture header, a slice header, a CTU header, and a CU header.

### [Configuration and Process of Decoder]

FIG. 9 is a block diagram illustrating a configuration example of decoder 200 according to the embodiment. In this example, decoder 200 includes decompressors 231, 233, 235, derivers 232, 236, generator 234, and buffer 237. For example, these components are each an electric circuit that performs information processing. Two or more of decompressors 231, 233, and 235 may be integrated.

Decompressor 231 decodes a fundamental image from a bitstream. Deriver 232 derives a set of fundamental attributes from the fundamental image. For example, not only the set of fundamental attributes obtained at deriver 232 but also the fundamental image obtained at decompressor 231 can be provided to generator 234. Alternatively, the configuration and process of deriver 232 may be omitted. The set of fundamental attributes is not provided to generator 234, and the fundamental image may be provided to generator 234.

Decompressor 233 decodes the set of geometric attributes for each of the pictures from the bitstream. The set of geometric attributes decoded from the bitstream may be referred to just as the decoded set of geometric attributes. Decompressor 235 decodes a concealment parameter from a bitstream.

The concealment parameter is a parameter related to an error recovery control for when the set of geometric attributes is not appropriately obtained in encoder 100, and is decoded for each of the pictures, for example. The concealment parameter can be also referred to as an error recovery control parameter.

Buffer 237 stores a set of geometric attributes. The set of geometric attributes stored in buffer 237 may be referred to just as the stored set of geometric attributes. The stored set of geometric attributes may be a previously decoded set of geometric attributes, or may be a predefined set of geometric attributes. Buffer 237 may store multiple stored sets of geometric attributes corresponding to multiple pictures.

Deriver 236 derives a set of geometric attributes based on the decoded set of geometric attributes, the stored set of geometric attributes, and the concealment parameter. The set of geometric attributes derived by deriver 236 may be referred to just as the derived set of geometric attributes. Deriver 236 may derive the set of geometric attributes based on multiple stored sets of geometric attributes corresponding to multiple pictures. The average of the multiple stored sets of geometric attributes may be used as the stored set of geometric attributes.

Generator 234 generates a face video based on the set of fundamental attributes and the derived set of geometric attributes. For example, generator 234 has a generative model that outputs an image according to inputs of the set of fundamental attributes and the derived set of geometric attributes, and the generative model is used to generate a face video from the set of fundamental attributes and the derived set of geometric attributes. The generative model may be a neural network such as a generative adversarial network (GAN).

Instead of the set of fundamental attributes, the fundamental image may be used, or both the set of fundamental attributes and the fundamental image may be used.

It is to be noted that decoding information from the bitstream corresponds to decompressing the compressed information in the bitstream. Part of the set of geometric attributes corresponding to a frame may be stored in buffer 237, or may be retrieved from buffer 237.

FIG. 10 is a flowchart illustrating an operation example performed by decoder 200 according to the present embodiment. For example, the components of decoder 200 illustrated in FIG. 9 perform the operation according to the flowchart of FIG. 10.

First, decompressor 235 decodes a concealment parameter from a bitstream (S201). Deriver 236 determines whether the concealment parameter is equal to a predetermined value (S202). When the concealment parameter is equal to the predetermined value, deriver 236 derives a set of geometric attributes as the derived set of geometric attributes using the stored set of geometric attributes (S203). When the concealment parameter is not equal to the predetermined value, deriver 236 may directly derive the decoded set of geometric attributes as the derived set of geometric attributes.

Generator 234 then generates a face video based on the derived set of geometric attributes (S204).

In the above operation, for example, deriver 236 determines the error recovery method for the decoded set of geometric attributes using the concealment parameter decoded from the bitstream.

An example of the set of geometric attributes is facial landmarks derived from one or more frames of a driving video at a time instance. These landmarks denote the positions of points on key regions of the face including facial contour, eyes, eyebrows, nose, mouth, lips, and chin. This allows for the interpretability of face attributes, and the face attributes can be modified easily to produce the desired emotions and facial expressions. These landmarks may be in the 2D space coordinate system or in the 3D space coordinate system. After decoding, the set of geometric attributes may be stored in buffer 237.

Examples (1) to (5) of the concealment parameter decoded from the bitstream are indicated below.

### (1) Example of the concealment parameter indicating that the set of geometric attributes has not been obtained

For example, the concealment parameter indicates that the set of geometric attributes has not been obtained in encoder 100. Specifically, the set of geometric attributes may not be obtained since no face is present at all in the driving frame captured at encoder 100. In such a case, the concealment parameter may indicate that the set of geometric attributes has not been obtained. Such a concealment parameter can indicate that no geometric attributes are present in the bitstream.

### (2) Example of the concealment parameter indicating that the number of attributes is different from the original number of attributes

For example, the concealment parameter indicates that the number of attributes in a set of geometric attributes is different from the original number of attributes. The original number of attributes is an expected number of attributes, and may also be an assumed number of attributes.

Specifically, the number of attributes in the set of geometric attributes decoded for the current frame may be different from that in the set of geometric attributes decoded for the previous frame. Alternatively, the number of attributes in the set of geometric attributes decoded for the current frame may be different from the predefined number of attributes, or the number of attributes to be included in each set of geometric attributes.

Such cases may arise from a scenario where the driving frame includes only part of the face, or a scenario where encoder 100 is unable to partially detect (extract) the set of geometric attributes from the current frame due to the accuracy, environment, or the like.

Under the above scenarios, encoder 100 does not perform error concealment on the set of geometric attributes, but may directly transmit the set of geometric attributes. Encoder 100 may additionally signal the concealment parameter indicating that the number of attributes is different from the original number of attributes.

### (3) Example of the concealment parameter indicating that the stored set of geometric attributes is used

For example, the concealment parameter indicates that the set of geometric attributes stored in buffer 237 of decoder 200 is used. In this manner, it is possible for encoder 100 to instruct decoder 200 to use the stored set of geometric attributes. Specifically, the user of encoder 100 may select the stored set of geometric attributes. Encoder 100 then may request decoder 200 to obtain the stored set of geometric attributes selected. In this case, the detecting of the set of geometric attributes may be omitted in encoder 100.

### (4) Example of the concealment parameter indicating that the decoded set of geometric attributes is to be stored

For example, the concealment parameter indicates that the decoded set of geometric attributes is to be stored. Specifically, the concealment parameter may indicate when decoder 200 starts and stops decoding a set of geometric attributes from the bitstream and storing the decoded set of geometric attributes in buffer 237.

### (5) Example of the concealment parameter indicating that the reliability of the set of geometric attributes is low

The concealment parameter may indicate that the reliability (confidence scores) of the set of geometric attributes is low. This may arise from any of the following scenarios.

Specifically, one scenario is where momentary occlusions of part of the face occur due to a face mask, an eye patch, body movements, face adornments, or other objects. Another scenario is where the head has extreme poses. Yet another scenario is where blur (motion blur) occurs due to head movements. In such scenarios, encoder 100 may detect (extract) some or all the geometric attributes using low confidence scores, and signal the concealment parameter indicating that the confidence scores of the set of geometric attributes are low.

According to the above examples (1) to (5), the concealment parameter can indicate that the set of geometric attributes has not been appropriately obtained in encoder 100.

Deriver 236 of decoder 200 determines whether the value of the concealment parameter decoded from the bitstream is equal to a predetermined value (S202) to determine the process of deriving a set of geometric attributes using error concealment in decoder 200.

When the concealment parameter decoded from the bitstream is equal to the predetermined value, deriver 236 derives a set of geometric attributes for generating a face video, using the stored set of geometric attributes (S203). In contrast, when the concealment parameter decoded from the bitstream is not equal to the predetermined value, deriver 236 applies the set of geometric attributes decoded from the bitstream as the set of geometric attributes for generating a face video. In other words, in this case, the derived set of geometric attributes is the decoded set of geometric attributes.

In one example, the predetermined value is decoded from the bitstream. In another example, the predetermined value is a fixed value. In yet another example, the predetermined value is either 0 or 1.

When the concealment parameter decoded from the bitstream is determined to be equal to the predetermined value, deriver 236 derives a set of geometric attributes for generating a face video, using at least a set of geometric attributes stored in buffer 237 (S203). The set of geometric attributes stored in buffer 237, i.e., the stored set of geometric attributes, is a set of geometric attributes previously decoded from the bitstream, for example.

Here, the set of geometric attributes for generating a face video can be derived based on the attribute and value of the concealment parameter, and at least one of the stored set of geometric attributes or the decoded set of geometric attributes. Here, the decoded set of geometric attributes is the set of geometric attributes corresponding to a current frame.

FIG. 11 is a schematic drawing illustrating an operation example performed according to a concealment parameter. For example, decompressors 233 and 235 obtain the decoded set of geometric attributes and the concealment parameter, respectively, by applying arithmetic decoding to the bitstream. Deriver 236 then determines whether the concealment parameter is equal to a predetermined value. When the concealment parameter is equal to the predetermined value, deriver 236 obtains the stored set of geometric attributes.

Deriver 236 then derives the set of geometric attributes for generating a face video, by applying inverse affine transform to the decoded set of geometric attributes and the stored set of geometric attributes. In the inverse affine transform, the decoded set of geometric attributes and the stored set of geometric attributes may be synthesized. The decoded set of geometric attributes and multiple stored sets of geometric attributes may be synthesized.

When the concealment parameter is not equal to the predetermined value, deriver 236 may derive a set of geometric attributes for generating a face video from only the decoded set of geometric attributes regardless of the stored set of geometric attributes. Without using the inverse affine transform, deriver 236 may directly apply the decoded set of geometric attributes as the derived set of geometric attributes.

When the concealment parameter is equal to the predetermined value, deriver 236 may derive a set of geometric attributes for generating a face video from only the stored set of geometric attributes regardless of the decoded set of geometric attributes. Without using the inverse affine transform, deriver 236 may directly apply the stored set of geometric attributes as the derived set of geometric attributes.

Here, the inverse affine transform corresponds to linear transformation such as scale up, scale down, rotation, and translation. Here, the inverse affine transform may be affine transform.

FIG. 12 is a schematic drawing illustrating another operation example performed according to the concealment parameter. In this example, deriver 236 applies the inverse affine transform to the decoded set of geometric attributes. Deriver 236 then derives a set of geometric attributes for generating a face video, by synthesizing the stored set of geometric attributes and the result obtained by applying the inverse affine transform to the decoded set of geometric attributes. In other words, as described in this example, the inverse affine transform need not be applied to the stored set of geometric attributes.

It is to be noted that the inverse affine transform illustrated in FIG. 11 and FIG. 12 may be replaced with any other types of transformations.

The stored set of geometric attributes may be a set of geometric attributes previously decoded from the bitstream and stored in buffer 237. In one example, the stored set of geometric attributes may be a set of geometric attributes decoded and stored at a previous frame of the current frame. In another example, the stored set of geometric attributes may be a set of geometric attributes decoded and stored at the first (intra) frame in a group of pictures.

In yet another example, the stored set of geometric attributes may be a set of geometric attributes locally present in both encoder 100 and decoder 200. Specifically, this set of geometric attributes may be derived from a common image locally present in both encoder 100 and decoder 200. In yet another example, the stored set of geometric attributes may be a predetermined set of geometric attributes.

In yet another example, the stored set of geometric attributes may correspond to part of the full set of geometric attributes that represents the entire face. Specifically, for example, the stored set of geometric attributes may be the left eye group in the full set of geometric attributes.

To prevent memory buffer overflow, decoder 200 may retain only the most recently derived (latest) set of geometric attributes. Alternatively, decoder 200 may retain only the recent sets of geometric attributes not earlier than a preset threshold among historical sets of geometric attributes ordered by recency, and discard the old sets of geometric attributes. This ensures that one or more sets of geometric attributes in buffer 237 of decoder 200 are kept up to date with latest changes in the driving frame scenes.

It is to be noted that in an example of the design that includes the concealment parameter indicating "low_confidence" (low reliability), only sets of geometric attributes with high predicted confidence scores are stored in buffer 237 to serve as reference attributes for other frames that require drawing from buffer 237. In this case, the sets of geometric attributes with low reliability are not stored in buffer 237. In this manner, only the sets of geometric attributes with high reliability are used as the baseline. Accordingly, error accumulation arising from storing the error-prone sets of geometric attributes is minimized.

Examples (1) to (5) of the derived set of geometric attributes obtained by deriver 236 are indicated below. The examples (1) to (5) of the derived set of geometric attributes can correspond to the above-mentioned examples (1) to (5) of the concealment parameter.

### (1) Case where the concealment parameter indicates that the set of geometric attributes has not been obtained

For example, the concealment parameter indicates that the set of geometric attributes has not been obtained. In this case, decoder 200 can skip the decoding of the set of geometric attributes. Then, decoder 200 can directly utilize the stored set of geometric attributes retrieved from buffer 237 to derive the set of geometric attributes. For example, when the set of geometric attributes is not obtained in encoder 100, the concealment parameter is set to 1 to indicate that the set of geometric attributes has not been obtained.

FIG. 13 is a conceptual diagram illustrating an operation example in the case where the set of geometric attributes has not been obtained. In this example, the concealment parameter is equal to 1. In this case, deriver 236 retrieves the stored set of geometric attributes from buffer 237. Deriver 236 then sets the stored set of geometric attributes as the derived set of geometric attributes. Deriver 236 then outputs the derived set of geometric attributes. In other words, in this case, deriver 236 outputs the stored set of geometric attributes as the derived set of geometric attributes.

### (2) Case where the concealment parameter indicates that the number of attributes is different from the original number of attributes

For example, the concealment parameter indicates that the number of attributes is different from the original number of attributes. Specifically, in this case, the number of attributes in the decoded set of geometric attributes has a different number of attributes from expectation. Accordingly, in this case, decoder 200 retrieves the stored set of geometric attributes from buffer 237, and uses the decoded set of geometric attributes and the stored set of geometric attributes in combination. For example, when the concealment parameter is set to 1, the concealment parameter indicates that the number of attributes is different from the original number of attributes.

In the case where the number of attributes in the set of geometric attributes decoded from the bitstream is less than expectation, the missing attributes in the decoded set of geometric attributes may be topped-up or replaced with the corresponding attributes in the stored set of geometric attributes. In the case where the number of attributes in the set of geometric attributes decoded from the bitstream is more than expectation, the excess attributes may be removed from the decoded set of geometric attributes.

FIG. 14 is a conceptual diagram illustrating an operation example of decoder 200 in the case where the number of attributes in the set of geometric attributes is different from the original number of attributes. In this example, the missing attributes in the decoded set of geometric attributes are topped-up with the corresponding attributes in the stored set of geometric attributes.

In another example, the set of geometric attributes decoded from the bitstream may be ignored. In this case, decoder 200 can directly utilize the stored set of geometric attributes retrieved from buffer 237 to derive the set of geometric attributes for generating a face video.

The corresponding attributes may be selected from among multiple corresponding attributes in the multiple stored sets of geometric attributes corresponding to multiple pictures, and applied to the missing attributes in the decoded set of geometric attributes.

### (3) Case where the concealment parameter indicates that the stored set of geometric attributes is used

For example, the concealment parameter indicates that the stored set of geometric attributes is used. Accordingly, in this case, decoder 200 may skip the decoding process of the set of geometric attributes, and directly use the stored set of geometric attributes retrieved from buffer 237 to generate a face video. For example, when the concealment parameter is set to 1, the concealment parameter indicates that the stored set of geometric attributes is used.

### (4) Case where the concealment parameter indicates that the decoded set of geometric attributes is to be stored

For example, the concealment parameter indicates, using its value, that the decoded set of geometric attributes is to be stored in buffer 237. In this manner, multiple sets of geometric attributes decoded from the bitstream can be stored in buffer 237. The concealment parameter may indicate, using its value, that the set of geometric attributes stored in buffer 237 is used. Specifically, the concealment parameter may indicate that the sets of geometric attributes are drawn from buffer 237 in a loop fashion.

Accordingly, when looping is required by the concealment parameter, decoder 200 directly uses the previously decoded and stored sets of geometric attributes to perform the looping process between a start_loop timestamp and an end_loop timestamp. The start_loop timestamp and the end_loop timestamp may be specified by the concealment parameter.

For example, when the concealment parameter indicates start of storing the set of geometric attributes, decoder 200, for each frame, starts storing the decoded set of geometric attributes in buffer 237, and simultaneously applies the decoded set of geometric attributes as the derived set of geometric attributes.

When the concealment parameter indicates stop of storing the set of geometric attributes, decoder 200 stops storing the decoded set of geometric attributes in buffer 237. For the subsequent frames, decoder 200 continuously repeats retrieving the set of geometric attributes from buffer 237 in a time loop, from the first stored set of geometric attributes to the last stored set of geometric attributes.

Decoder 200 repeats the loop until the concealment parameter indicates stop of looping to apply the decoded set of geometric attributes as the derived set of geometric attributes without storing the decoded set of geometric attributes in buffer 237.

For example, the user of encoder 100 may repeat a natural movement such as eye blinks or head nods. In this case, capturing driving frames may be temporarily disabled, and a natural movement such as eye blinks every 3 seconds may be simulated in a time loop.

FIG. 15 is a conceptual diagram illustrating an operation example of controlling the storage of the set of geometric attributes. For example, the concealment parameter with value of 1 indicates start of storing the set of geometric attributes in buffer 237.

The concealment parameter with value of 2 indicates stop of storing the set of geometric attributes in buffer 237 and start of retrieving the set of geometric attributes from buffer 237. The concealment parameter with value of 0 indicates stop of retrieving the set of geometric attributes from buffer 237 and start of applying the decoded set of geometric attributes as the derived set of geometric attributes.

In one example, buffer 237 is a first-in-first-out (FIFO) queue. When the concealment parameter is equal to 2, the stored sets of geometric attributes may be retrieved from buffer 237 in order of storage. In another example, buffer 237 is a last-in-first-out (LIFO) stack. The stored sets of geometric attributes may be retrieved from buffer 237 in reverse order of storage.

### (5) Case where the concealment parameter indicates that the reliability of the set of geometric attributes is low

For example, the concealment parameter indicates that the reliability (confidence scores) of the set of geometric attributes is low. Accordingly, in this case, decoder 200 may perform one or more of the following processes for error concealment:
(a) temporal smoothing of the decoded set of geometric attributes based on the decoded set of geometric attributes and the stored set of geometric attributes;
(b) direct combination of the decoded set of geometric attributes and the stored set of geometric attributes (replacement or substitution of attributes); and
(c) correction of distance between various parts of the face in the decoded set of geometric attributes (such as eye and mouth) using the stored set of geometric attributes as reference.

When the concealment parameter is set to 1, 2, or 3, the concealment parameter may indicate that the reliability of the set of geometric attributes is low. In this case, 1, 2, or 3 set as the concealment parameter may correspond to the above-mentioned process (a), (b), or (c).

The concealment parameter may indicate that the reliability is low in units of a set of geometric attributes, i.e., for each of the frames. Alternatively, the concealment parameter may indicate that the reliability is low in units of an attribute in a set of geometric attributes. Alternatively, the concealment parameter may indicate that the reliability is low in units of a different part of the face in a set of geometric attributes.

In one example, for each of the attributes in the set of geometric attributes, the confidence score may be calculated and compared against a predetermined threshold. For the attribute whose confidence score is below the threshold, the predetermined condition may be determined as true. In other words, the attribute whose confidence score is below the threshold may be determined to have low reliability.

In another example, the set of geometric attributes may be partitioned into multiple distinct groups each corresponding to a key feature of the face. Thereafter, the confidence scores of all attributes in each group may be averaged and compared against a predetermined threshold. For the group whose average confidence score is below the threshold, the predetermined condition may be determined as true. In other words, the group whose average confidence score is below the threshold may be determined to have low reliability.

FIG. 16 is a conceptual diagram illustrating an operation example performed by decoder 200 according to the reliability of the set of geometric attributes. When the concealment parameter is set to 0, the concealment parameter does not indicate that the reliability of the set of geometric attributes is low. For example, in this case, since the reliability of the set of geometric attributes is high, the decoded set of geometric attributes is stored as the stored set of geometric attributes, and is derived as the derived set of geometric attributes.

When the concealment parameter is not set to 0, the concealment parameter indicates that the reliability of the set of geometric attributes is low. In this case, the stored set of geometric attributes is retrieved from buffer 237. The derived set of geometric attributes is then obtained from the decoded set of geometric attributes and the stored set of geometric attributes. Thereafter, the derived set of geometric attributes is used to generate a face video. When the concealment parameter is not set to 0, the concealment parameter may indicate, using its value, the method of deriving the set of geometric attributes for generating a face video.

In another example, the decoded set of geometric attributes obtained from the bitstream may be ignored, and decoder 200 may directly use the stored set of geometric attributes retrieved from buffer 237 as the derived set of geometric attributes for generating a face video.

Multiple decoded sets of geometric attributes corresponding to multiple pictures may be stored in buffer 237 as multiple stored sets of geometric attributes. In deriving the set of geometric attributes, the multiple stored sets of geometric attributes corresponding to multiple pictures may be used.

The derived set of geometric attributes can be obtained based on the above-mentioned examples (1) to (5) corresponding to the examples of the concealment parameter. Regarding the obtaining of the derived set of geometric attributes, specific examples of (a) temporal smoothing, (b) combination of the decoded set of geometric attributes and the stored set of geometric attributes, and (c) correction of distance are indicated below.

### (a) Temporal smoothing

For example, when the concealment parameter indicates that the reliability of the set of geometric attributes is low, deriver 236 obtains the derived set of geometric attributes by temporally smoothing the decoded set of geometric attributes based on the decoded set of geometric attributes and the stored set of geometric attributes. Specifically, deriver 236 may obtain the derived set of geometric attributes using first-order exponential smoothing. More specifically, deriver 236 may obtain the derived set of geometric attributes using x_{derived} = (1 - α) × x_{decoded} + α × x_{stored}.

Here, x_{derived} denotes the derived set of geometric attributes, x_{decoded} denotes the decoded set of geometric attributes, and x_{stored} denotes the stored set of geometric attributes. Furthermore, α is a smoothing parameter that indicates an emphasis level given to the stored set of geometric attributes. The value of α may be predetermined or decoded from the bitstream. For example, smoothing parameter α takes a value between 0% and 100%, and indicates the percentage weight assigned to the stored set of geometric attributes.

For example, x_{derived} denotes the coordinate values of the attributes (landmarks) of the derived set of geometric attributes, x_{decoded} denotes the coordinate values of the attributes (landmarks) of the decoded set of geometric attributes, and x_{stored} denotes the coordinate values of the attributes (landmarks) of the stored set of geometric attributes. The coordinate values for the derived set of geometric attributes are calculated by a weighted average of the coordinate values for the decoded set of geometric attributes and the coordinate values for the stored set of geometric attributes.

In the above, a weighted average of one decoded set of geometric attributes and one stored set of geometric attributes is used. However, a weighted average of one decoded set of geometric attributes and multiple stored sets of geometric attributes may be used.

### (b) Combination of the decoded set of geometric attributes and the stored set of geometric attributes

For example, when the concealment parameter indicates that the reliability of the set of geometric attributes is low, deriver 236 obtains the derived set of geometric attributes by combining the decoded set of geometric attributes and the stored set of geometric attributes.

FIG. 17 is a conceptual diagram illustrating an operation example in which geometric attributes are replaced at decoder 200. Specifically, attributes with low reliability in the decoded set of geometric attributes are replaced with attributes with high reliability in the stored set of geometric attributes. For example, the reliability threshold for replacement is set to 0.7. Accordingly, as illustrated in FIG. 17, attributes having reliability lower than the threshold in the decoded set of geometric attributes are replaced with the corresponding attributes in the stored set of geometric attributes.

FIG. 18 is a conceptual diagram illustrating another operation example in which geometric attributes are replaced at decoder 200. For example, in encoder 100, attributes with low reliability are identified and removed. Decoder 200 replaces missing attributes with the corresponding attributes in the stored set of geometric attributes. In other words, decoder 200 makes up for the missing attributes with the corresponding attributes in the stored set of geometric attributes.

The corresponding attributes may be selected from among multiple corresponding attributes in multiple stored sets of geometric attributes based on multiple reliability values, and applied to the missing attributes.

In addition, the reliability may be determined in units of a set of geometric attributes, in units of an attribute, or in units of a group including attributes in a set of geometric attributes. The set of geometric attributes or the attributes may be selected in units for each of which the reliability is determined.

### (c) Correction of distance

For example, when the concealment parameter indicates that the reliability of the set of geometric attributes is low, deriver 236 obtains the derived set of geometric attributes by correcting the distances between parts in the decoded set of geometric attributes with reference to the stored set of geometric attributes.

Specifically, the stored set of geometric attributes is partitioned into multiple distinct groups each representing a key feature of the face, and a reference set of distances is derived and stored by deriving the center point of each group and calculating the relative distances from the derived center points to a reference point (such as the tip of the nose).

Thereafter, the decoded set of geometric attributes is similarly partitioned into multiple groups, and a distance is derived for each group by deriving the center point of the group and calculating the relative distance from the derived center point to the reference point. When the derived distance differs from the corresponding distance in the reference set of distances by more than a threshold, the entire group is shifted such that the derived distance matches the corresponding distance in the reference set of distances.

Here, the set of geometric attributes refers to a set of geometric attributes corresponding to a frame. In other words, the set of geometric attributes refers to a full set of geometric attributes for the entire face. For example, the center point of a group can be derived from the mean of the x and y coordinates of all attributes (points) in the group. Alternatively, the center point of a group may be set by deriving a bounding box enclosing all points in the group based on the minimum and maximum x and y values of all attributes (points) in the group, and determining the center of the bounding box as the center point of the group.

FIG. 19 is a conceptual diagram illustrating an example of the stored set of geometric attributes which is the set of geometric attributes stored in decoder 200. In this example, the center point of the "right eye" group of the stored set of geometric attributes is represented as (x_{stored_re}, y_{stored_re}). The nose tip point of the stored set of geometric attributes is represented as (x_{stored_n}, y_{stored_n}).

FIG. 20 is a conceptual diagram illustrating an example of the decoded set of geometric attributes which is the set of geometric attributes decoded in decoder 200. In this example, the center point of the "right eye" group of the decoded set of geometric attributes is represented as (x_{decoded_re}, y_{decoded_re}). The nose tip point of the decoded set of geometric attributes is represented as (x_{decoded_n}, y_{decoded_n}).

FIG. 21 is a conceptual diagram illustrating an example of the derived set of geometric attributes which is the set of geometric attributes derived in decoder 200. In this example, the center point of the "right eye" group of the derived set of geometric attributes is represented as (x_{derived_re}, y_{derived_re}). The nose tip point of the derived set of geometric attributes is represented as (x_{derived_n}, y_{derived_n}).

The method of setting the derived set of geometric attributes in FIG. 21 based on the stored set of geometric attributes in FIG. 19 and the decoded set of geometric attributes in FIG. 20 is as follows.
(1) First, deriver 236 calculates distance d_{stored_re} from the nose tip point to the center point of the right eye group in the stored set of geometric attributes according to the following equation.
   [MATH. 1] ${d}_{stored_re} = \sqrt{{\left({x}_{stored_re}-{x}_{stored_n}\right)}^{2} + {\left({y}_{stored_re}-{y}_{stored_n}\right)}^{2}}$
(2) Next, deriver 236 calculates distance d_{decoded_re} from the nose tip point to the center point of the right eye group in the decoded set of geometric attributes according to the following equation.
   [MATH. 2] ${d}_{decoded_re} = \sqrt{{\left({x}_{decoded_re}-{x}_{decoded_n}\right)}^{2} + {\left({y}_{decoded_re}-{y}_{decoded_n}\right)}^{2}}$
(3) Next, if |d_{decoded_re} - d_{stored_re}| > ε, deriver 236 sets d_{derived_re} = d_{stored_re} and (x_{derived_n}, y_{derived_n}) = (x_{decoded_n}, y_{decoded_n}).

In other words, deriver 236 determines whether the difference between the distance from the nose tip point to the center point of the right eye group in the stored set of geometric attributes and the distance from the nose tip point to the center point of the right eye group in the decoded set of geometric attributes is greater than a threshold.

When the difference is greater than the threshold, deriver 236 sets the distance from the nose tip point to the center point of the right eye group in the derived set of geometric attributes to the distance from the nose tip point to the center point of the right eye group in the stored set of geometric attributes. In this case, deriver 236 sets the nose tip point in the derived set of geometric attributes to the nose tip point in the decoded set of geometric attributes.

It is to be noted that, if |d_{decoded_re} - d_{stored_re}| ≤ ε, deriver 236 sets the right eye group in the decoded set of geometric attributes as the right eye group in the derived set of geometric attributes, and skips the processes of (4), (5), and (6) below.

(4) Next, deriver 236 sets (x_{derived_re}, y_{derived_re}) to the nearest point from (x_{decoded_re}, y_{decoded_re}) that satisfies d_{derived_re} = d_{stored_re}. In other words, deriver 236 sets the center point of the right eye group in the derived set of geometric attributes to the nearest point from the center point of the right eye group in the decoded set of geometric attributes such that the distance between the nose tip point and the center point of the right eye group is equal to the corresponding distance in the stored set of geometric attributes.

(5) Next, deriver 236 derives transformation for mapping the center point of the right eye group in the decoded set of geometric attributes (x_{decoded_re}, y_{decoded_re}) to the center point of the right eye group in the derived set of geometric attributes (x_{derived_re}, y_{derived_re}).

(6) Next, deriver 236 shifts the entire right eye group using the same transformation as the transformation derived in process (5) above.

Deriver 236 sets the derived set of geometric attributes by performing the processes of (1) to (6) above for each of all the other groups. This adjusts the distances between groups not to be too large.

Generator 234 generates an image from the derived set of geometric attributes via a neural network.

For example, the neural network is a generative network. The generative network may be a generative adversarial network (GAN), a variational autoencoder (VAE), an autoregressive model, a diffusion model, or the like. The generative network may be a machine learning framework that generates new data based on a provided dataset.

The generative network is also referred to as a generative model. By analyzing and learning the fundamental distribution of a dataset, the generative network can ensure that new dataset generated by the generative network is similar to the original dataset.

Decoder 200 generates an image based on the concealment parameter. Target applications may include, but are not limited to, video conferencing, and the generation, editing, and playback of videos in the entertainment industry, social media, and the e-commerce industry.

It is to be noted that the processes of decoder 200 can be performed similarly also in encoder 100. In addition, not all the components in the present disclosure are always necessary, and only part of the components may be implemented.

FIG. 22 is a block diagram illustrating another configuration example of decoder 200 according to the present embodiment. In this example, decoder 200 includes video decoder 401, entropy decoder 402, inverse affine transformer 403, determiner 404, geometric attribute buffer 405, and generator 406. Entropy decoder 402 may be included in video decoder 401.

Video decoder 401 applies a video decoding process to the bitstream received from encoder 100. Next, entropy decoder 402 applies an entropy decoding process such as CABAC or VLC to the SEI data obtained from the bitstream to obtain the concealment parameter, and optionally the current decoded set of geometric attributes.

Next, inverse affine transformer 403 performs transformation such as inverse affine transformation on the decoded set of geometric attributes. It is to be noted that inverse affine transformer 403 can be replaced with another transformer used for transforming the decoded set of geometric attributes. Specifically, when affine parameters or other transformation parameters are decoded, inverse affine transformation may be performed. In other cases, the inverse affine transformation can be replaced with any other compatible process.

Thereafter, determiner 404 determines whether the concealment parameter is equal to a predetermined value. When the concealment parameter is determined to be equal to the predetermined value, inverse affine transformer 403 obtains the stored set of geometric attributes in geometric attribute buffer 405, and sets the derived set of geometric attributes using the obtained stored set of geometric attributes in combination with the decoded set of geometric attributes. Thereafter, generator 406 generates a frame of a face video based on the derived set of geometric attributes set by error concealment in decoder 200.

With the above configuration, decoder 200 can perform error concealment based on the concealment parameter and generate a face video.

In the examples above, the stored set of geometric attributes is used in error concealment. However, decoder 200 need not use the stored set of geometric attributes for error concealment. For example, decoder 200 may apply a previous frame in a face video to the current frame in the face video. In other words, decoder 200 does not generate a face image corresponding to the current frame in the face video using a generative model, and may apply an already generated face image as the face image corresponding to the current frame.

### [Configuration and Process of Encoder]

FIG. 23 is a block diagram illustrating a configuration example of encoder 100 according to the present embodiment. In this example, encoder 100 includes compressors 131, 133, 134, deriver 132, and buffer 135. For example, these components are each an electric circuit that performs information processing. Two or more of compressors 131, 133, and 134 may be integrated.

Compressor 131 encodes a fundamental image into a bitstream. Deriver 132 derives a set of geometric attributes for each of the pictures from a driving video. Deriver 132 generates (derives) a concealment parameter in the deriving of the set of geometric attributes. Compressor 133 encodes the set of geometric attributes for each of the pictures into the bitstream. The set of geometric attributes derived and encoded from the driving video can be also referred to as a derived set of geometric attributes, a set of geometric attributes to be encoded, or an encoded set of geometric attributes.

Compressor 134 encodes a concealment parameter into a bitstream. The concealment parameter is a parameter related to an error recovery control for when the set of geometric attributes is not appropriately obtained in encoder 100. The concealment parameter can be also referred to as an error recovery control parameter. For example, the concealment parameter is derived and encoded for each of the pictures.

Buffer 135 stores a set of geometric attributes. The set of geometric attributes stored in buffer 135 may be referred to just as the stored set of geometric attributes. The stored set of geometric attributes may be a previously derived set of geometric attributes, or may be a predefined set of geometric attributes. Buffer 135 may store multiple stored sets of geometric attributes corresponding to multiple pictures.

Deriver 132 may use the stored set of geometric attributes in buffer 135 in the deriving of the set of geometric attributes. For example, deriver 132 detects a set of geometric attributes for each of the pictures from a driving video. The set of geometric attributes detected from the driving video can be also referred to as a detected set of geometric attributes or an extracted set of geometric attributes. Deriver 132 then sets the derived set of geometric attributes based on the detected set of geometric attributes and the stored set of geometric attributes.

Deriver 132 may derive the set of geometric attributes based on multiple stored sets of geometric attributes corresponding to multiple pictures. The average of the multiple stored sets of geometric attributes may be used as the stored set of geometric attributes.

The concealment parameter may be generated by the detected set of geometric attributes, by the derived set of geometric attributes, or by the detected set of geometric attributes and the derived set of geometric attributes. Moreover, for example, the concealment parameter is generated based on the detected set of geometric attributes, and the derived set of geometric attributes may be set based on the concealment parameter. The concealment parameter may be updated based on the derived set of geometric attributes.

It is to be noted that encoding information into a bitstream corresponds to compressing information to include compressed information into a bitstream. Part of the set of geometric attributes corresponding to a frame may be stored in buffer 135, or may be retrieved from buffer 135.

FIG. 24 is a flowchart illustrating an operation example performed by encoder 100 according to the present embodiment. For example, the components of encoder 100 illustrated in FIG. 23 perform the operation according to the flowchart of FIG. 24.

First, deriver 132 detects a set of geometric attributes for each of the pictures from a driving video (S101). Deriver 132 then generates a concealment parameter based on the detection result of the set of geometric attributes (S102). Compressor 134 then encodes the concealment parameter into a bitstream (S103).

The detecting of the set of geometric attributes (S101) may correspond to detecting of a face in an image. Here, for example, the image is a frame (picture) of a driving video. Specifically, the face in the image may be detected using a face detection algorithm.

The concealment parameter may be generated based on the detection result of the face. Alternatively, the detection result of the face in the image may be reflected to the detection result of the set of geometric attributes. For example, when the face is not detected in the image, the concealment parameter may indicate that the set of geometric attributes has not been detected.

For example, the geometric attributes may be facial landmarks indicating the positions of points on key regions of the face including facial contour, eyes, eyebrows, nose, mouth, lips, and chin. This allows for the interpretability of facial expressions, and the facial expressions can be modified easily to produce appropriate facial expressions. These landmarks may be in the 2D space coordinate system or in the 3D space coordinate system.

FIG. 25 is a conceptual diagram illustrating a specific example of the set of geometric attributes. In this example, the set of geometric attributes is a set of facial landmarks extracted from an image which cover the eyes, eyebrows, nose, mouth, lips, chin, and facial contour.

FIG. 26 is a conceptual diagram illustrating another specific example of the set of geometric attributes. In this example, the set of geometric attributes is a set of facial landmarks extracted from an image which cover the eyes, eyebrows, nose, mouth, lips, chin, and facial contour, and more points are covered than the example of FIG. 25.

FIG. 27 is a conceptual diagram illustrating yet another specific example of the set of geometric attributes. In this example, the set of geometric attributes is a set of facial landmarks extracted from an image, which covers the eyes, eyebrows, nose, mouth, lips, chin, cheeks, and facial contour, and more points are covered than the example of FIG. 25 and the example of FIG. 26.

When the set of geometric attributes is detected, the set of geometric attributes may be stored in buffer 135.

The set of geometric attributes to be encoded into a bitstream may be a subset of the set of geometric attributes for the entire face, or one or more groups each representing a key feature of the face in the set of geometric attributes for the entire face.

For example, deriver 132 may predict confidence scores of the set of geometric attributes. Here, the predicting of the confidence scores corresponds to deriving, calculating, evaluating, determining, or obtaining of the confidence scores. The predicting of the confidence score may be performed in units of a set of geometric attributes, in units of a geometric attribute, or in units of a group in a set of geometric attributes. The concealment parameter based on the confidence scores then may be generated.

Examples (1) to (5) of the concealment parameter are indicated below.

### (1) Example of the concealment parameter indicating that the set of geometric attributes has not been obtained

In the detecting of the set of geometric attributes, deriver 132 fails to detect the set of geometric attributes, and no set of geometric attributes may be detected. Accordingly, encoder 100 may signal the concealment parameter based on the detection result of the set of geometric attributes. In other words, the concealment parameter may indicate that the set of geometric attributes has not been obtained.

When the concealment parameter indicates that the set of geometric attributes has not been obtained, encoder 100 skips the encoding of the set of geometric attributes, and signals the concealment parameter to decoder 200. In this case, decoder 200 may directly use the stored set of geometric attributes in buffer 237 for the face re-enactment based on the concealment parameter. For example, when the concealment parameter is set to 1, the concealment parameter may indicate that the set of geometric attributes has not been obtained.

Such cases may arise from a scenario where a face cannot be detected in a driving frame captured at encoder 100. As such, there is a possibility that the set of geometric attributes in the bitstream is empty. This may lead to inability to perform the face re-enactment, or cause erroneous distortions in the output image. The concealment parameter can minimize such errors.

### (2) Example of the concealment parameter indicating that the number of attributes is different from the original number of attributes

For example, the concealment parameter may indicate that the number of attributes in a set of geometric attributes is different from the original number of attributes. The original number of attributes is an expected number of attributes, and may also be an assumed number of attributes.

Specifically, the number of attributes in the set of geometric attributes corresponding to the current frame may be different from that in the set of geometric attributes corresponding to the previous frame. Alternatively, the number of attributes in the set of geometric attributes corresponding to the current frame may be different from the predefined number of attributes, or the number of attributes to be included in each set of geometric attributes.

In the above case, encoder 100 may retrieve the stored set of geometric attributes from buffer 135. The stored set of geometric attributes may be a set of geometric attributes that is derived from a previous driving frame and is previously encoded into the bitstream. Thereafter, the stored set of geometric attributes may be used in combination with the detected set of geometric attributes before being encoded into the bitstream.

For example, in the case where the number of attributes in the detected set of geometric attributes is less than expectation, the missing attributes in the detected set of geometric attributes may be topped-up or replaced with the corresponding attributes in the stored set of geometric attributes. In the case where the number of attributes in the detected set of geometric attributes is more than expectation, the excess attributes may be removed from the detected set of geometric attributes.

FIG. 28 is a conceptual diagram illustrating an operation example of encoder 100 in the case where the number of attributes in the set of geometric attributes is different from the original number of attributes. In this example, the missing attributes in the detected set of geometric attributes are topped-up with the corresponding attributes in the stored set of geometric attributes. It is to be noted that the corresponding attributes may be selected from among multiple corresponding attributes in multiple stored sets of geometric attributes corresponding to multiple pictures, and applied to the missing attributes in the detected set of geometric attributes.

In another example, encoder 100 may encode and transmit the detected set of geometric attributes as the derived set of geometric attributes, and further signal the concealment parameter indicating that the number of attributes in the derived set of geometric attributes is different from expectation. In yet another example, encoder 100 may ignore the detected set of geometric attributes, and encode the stored set of geometric attributes retrieved from buffer 135 as the derived set of geometric attributes into the bitstream.

It is to be noted that when the number of attributes to be encoded into the bitstream is equal to the predefined number of attributes or the number of attributes to be included in each set of geometric attributes as the result of the topping up of the missing attributes or the removal of the excess attributes, encoder 100 need not set, as the concealment parameter, the value indicating that the number of attributes is different from the original number of attributes. Instead, encoder 100 may signal, in the bitstream, the concealment parameter indicating that the reliability of the set of geometric attributes is low.

Such cases may arise from scenarios where the driving frame includes only part of the face. In this case, encoder 100 may additionally transmit the position of the center of the face in the driving frame to decoder 200, to inform decoder 200 of which part of the frame the face is in. This can help to signal, to decoder 200, the orientation and proportion of the face that is hidden.

In some other scenarios, even when a full face is present in the driving frame, deriver 132 may be unable to partially detect (extract) the set of geometric attributes from the driving frame due to the accuracy, environment, or the like. Alternatively, deriver 132 is unable to detect (extract) the same number of attributes across multiple frames.

Using the concealment parameter informed from encoder 100, it may be possible for decoder 200 to know a difference in the number of attributes and perform the face re-enactment according to the difference in the number of attributes.

### (3) Example of the concealment parameter indicating that the stored set of geometric attributes is used

For example, the set of geometric attributes is detected from the current frame of a driving video. However, in some scenarios, regardless of the detected set of geometric attributes, the use of the stored set of geometric attributes is convenient. Accordingly, encoder 100 may signal the concealment parameter indicating that the stored set of geometric attributes is used.

When the concealment parameter indicates that the stored set of geometric attributes is used, encoder 100 skips the encoding of the set of geometric attributes, and signals the concealment parameter to decoder 200. In this case, decoder 200 may directly use the stored set of geometric attributes in buffer 237 for the face re-enactment based on the concealment parameter. For example, when the concealment parameter is set to 1, the concealment parameter may indicate that the stored set of geometric attributes is used.

Such cases may arise from scenarios where the user at encoder 100 selects the stored set of geometric attributes and encoder 100 requests decoder 200 to perform the face re-enactment using the selected stored set of geometric attributes. In this case, the detecting of the set of geometric attributes may be omitted in encoder 100.

### (4) Example of the concealment parameter indicating that the decoded set of geometric attributes is to be stored

For example, the concealment parameter may indicate that the decoded set of geometric attributes is to be stored. Specifically, encoder 100 may signal the concealment parameter to decoder 200 to inform when to start and stop storing the sets of geometric attributes that are transmitted in the bitstream. This allows the looping use of the stored set of geometric attributes, and thus it is possible to simulate a natural movement such as eye blinks or head nods in a loop. During the loop, encoder 100 need not transmit the set of geometric attributes.

As such, encoder 100 does not signal the detected set of geometric attributes, and may signal, to decoder 200, the selection information of the stored set of geometric attributes to be used for the face re-enactment.

### (5) Case where the concealment parameter indicates that the reliability of the set of geometric attributes is low

For example, a face is included in the driving frame, and a set of geometric attributes is detected from the driving frame. In this case, confidence scores of the set of geometric attributes may be predicted. Specifically, part of the face may be temporarily concealed by wearing a mask that partially or fully covers the mouth, eye patches that cover one or both eyes, hand or body movements or other objects that may momentarily occlude part of the face, face adornments and accessories such as sunglasses, or the like.

FIG. 29 is a conceptual diagram illustrating an example of a face that is partially concealed by occlusion. In such cases, encoder 100 can predict attributes (landmark positions) that have not been detected due to occlusion, using neighboring attributes (landmark positions) that are unaffected by the occlusion. As such, the set of geometric attributes derived and stored from the previous frame in the driving video is useful.

For these cases, encoder 100 may signal the concealment parameter indicating that these attributes have low confidence scores due to occlusion.

In another example, the face in the driving frame may have an extreme head pose. As the result, part of the face may be not visible.

FIG. 30 is a conceptual diagram illustrating an example of a face having an extreme pose with respect to yaw. In such cases, encoder 100 may signal the concealment parameter indicating that the landmarks are being occluded and have low confidence scores. Furthermore, for architectures that use head pose values during the generation process, preset limits may be set for the maximum allowable head pose angle at encoder 100, such as a 45-degree limit of yaw from a frontal face.

FIG. 31 is a conceptual diagram illustrating an example of a face having an extreme pose with respect to roll. In such cases, the face re-enactment may not be performed appropriately. Accordingly, also in such cases, encoder 100 may signal the concealment parameter indicating that the landmarks have low confidence scores.

FIG. 32 is a conceptual diagram illustrating an example of a face having motion blur. The face in the driving frame may be subject to motion blur since the overall face movement is larger than the camera capturing rate.

FIG. 33 is a conceptual diagram illustrating an example of a face whose number of detected landmarks is low. In this example, part of the face is concealed. Some landmarks may be detected with low confidence scores. In such cases, encoder 100 may signal the concealment parameter indicating that the landmarks have low confidence scores.

In the examples above, encoder 100 predicts some or all of the attributes in the set of geometric attributes using low confidence scores. Encoder 100 then encodes a concealment parameter indicating that the confidence scores of the set of geometric attributes are low. Specifically, the concealment parameter may indicate that the confidence scores are low in units of a set of geometric attributes, in units of a group in a set of geometric attributes, or in units of an attribute in a set of geometric attributes.

When the concealment parameter indicates that the reliability of the set of geometric attributes is low, encoder 100 may perform one or more of the following processes for error concealment:
(a) temporally smoothing the derived set of geometric attributes based on the detected set of geometric attributes and the stored set of geometric attributes;
(b) directly combining the detected set of geometric attributes and the stored set of geometric attributes (replacing or substituting attributes); and
(c) correcting the distances between various parts of the face (such as eyes and mouth) in the detected set of geometric attributes using the stored set of geometric attributes as a reference.

When the concealment parameter is set to 1, 2, or 3, the concealment parameter may indicate that the reliability of the set of geometric attributes is low. In this case, 1, 2, or 3 set as the concealment parameter may correspond to the above-mentioned process (a), (b), or (c).

In one example, for each of the attributes in the set of geometric attributes, the confidence score may be calculated and compared against a predetermined threshold. For the attribute whose confidence score is below the threshold, the predetermined condition may be determined as true. In other words, the attribute whose confidence score is below the threshold may be determined to have low reliability.

In another example, the set of geometric attributes may be partitioned into multiple distinct groups each corresponding to a key feature of the face. Thereafter, the confidence scores of all attributes in each group may be averaged and compared against a predetermined threshold. For the group whose average confidence score is below the threshold, the predetermined condition may be determined as true. In other words, the group whose average confidence score is below the threshold may be determined to have low reliability.

FIG. 34 is a conceptual diagram illustrating an operation example performed by encoder 100 according to the reliability of the set of geometric attributes. When the concealment parameter is set to 0, the concealment parameter does not indicate that the reliability of the set of geometric attributes is low. For example, in this case, since the reliability of the set of geometric attributes is high, the detected set of geometric attributes is stored as the stored set of geometric attributes, and derived as the derived set of geometric attributes.

When the concealment parameter is not set to 0, the concealment parameter indicates that the reliability of the set of geometric attributes is low. In this case, the stored set of geometric attributes is retrieved from buffer 135. The derived set of geometric attributes is then obtained from the detected set of geometric attributes and the stored set of geometric attributes. Thereafter, the derived set of geometric attributes is encoded into a bitstream. When the concealment parameter is not set to 0, the concealment parameter may indicate, using its value, the method of deriving the set of geometric attributes for generating a face video.

In another example, the detected set of geometric attributes obtained from the driving frame may be ignored, and encoder 100 may directly use the stored set of geometric attributes retrieved from buffer 135 as the derived set of geometric attributes to be encoded into the bitstream.

Multiple detected sets of geometric attributes corresponding to multiple pictures may be stored in buffer 135 as multiple stored sets of geometric attributes. In deriving the set of geometric attributes, the multiple stored sets of geometric attributes corresponding to multiple pictures may be used.

In yet another example, the detected set of geometric attributes obtained from the driving frame may be directly encoded into the bitstream as the derived set of geometric attributes together with the concealment parameter indicating that the confidence scores are low. In such cases, the above process for error concealment is performed at decoder 200 instead.

It is to be noted that, instead of a signal indicating, as the concealment parameter, that the confidence scores are low, the confidence scores themselves may be signaled in the bitstream.

Regarding the obtaining of the derived set of geometric attributes, specific examples of (a) temporal smoothing, (b) combination of the decoded set of geometric attributes and the stored set of geometric attributes, and (c) correction of distance are indicated below.

### (a) Temporal smoothing

For example, deriver 132 obtains the derived set of geometric attributes by temporally smoothing the detected set of geometric attributes based on the detected set of geometric attributes and the stored set of geometric attributes. Specifically, deriver 132 may obtain the derived set of geometric attributes using first-order exponential smoothing. More specifically, deriver 132 may obtain the derived set of geometric attributes using x_{derived} = (1 - α) × x_{detected} + α × x_{stored}.

Here, x_{derived} denotes the derived set of geometric attributes to be encoded into a bitstream, x_{detected} denotes the detected set of geometric attributes obtained from the driving frame, and x_{stored} denotes the stored set of geometric attributes retrieved from buffer 135.

Furthermore, α is a smoothing parameter that indicates an emphasis level given to the stored set of geometric attributes. The value of α may be predetermined, or may be dynamically determined and encoded into the bitstream. For example, smoothing parameter α takes a value between 0% and 100%, and indicates the percentage weight assigned to the stored set of geometric attributes.

For example, x_{derived} denotes the coordinate values of the attributes (landmarks) of the derived set of geometric attributes, x_{detected} denotes the coordinate values of the attributes (landmarks) of the detected set of geometric attributes, and x_{stored} denotes the coordinate values of the attributes (landmarks) of the stored set of geometric attributes. The coordinate values for the derived set of geometric attributes are calculated by a weighted average of the coordinate values for the detected set of geometric attributes and the coordinate values for the stored set of geometric attributes.

In the above, a weighted average of one detected set of geometric attributes and one stored set of geometric attributes is used. However, a weighted average of one detected set of geometric attributes and multiple stored sets of geometric attributes may be used.

### (b) Combination of the decoded set of geometric attributes and the stored set of geometric attributes

For example, deriver 132 obtains the derived set of geometric attributes by combining the decoded set of geometric attributes and the stored set of geometric attributes.

FIG. 35 is a conceptual diagram illustrating an operation example in which geometric attributes are replaced at encoder 100. Specifically, attributes with low reliability in the detected set of geometric attributes are replaced with attributes with high reliability in the stored set of geometric attributes. For example, the reliability threshold for replacement is set to 0.7. Accordingly, as illustrated in FIG. 35, attributes having reliability lower than the threshold in the detected set of geometric attributes are replaced with the corresponding attributes in the stored set of geometric attributes.

FIG. 36 is a conceptual diagram illustrating another operation example in which geometric attributes are replaced at encoder 100. For example, encoder 100 identifies and removes attributes with low reliability. In decoder 200, missing attributes are replaced with the corresponding attributes in the stored set of geometric attributes. In other words, in decoder 200, missing attributes are topped-up with the corresponding attributes in the stored set of geometric attributes.

The corresponding attributes may be selected from among multiple corresponding attributes in multiple stored sets of geometric attributes based on multiple reliability values, and applied to the missing attributes.

In addition, the reliability may be determined in units of a set of geometric attributes, in units of an attribute, or in units of a group including attributes in a set of geometric attributes. The set of geometric attributes or the attributes may be selected in units for each of which the reliability is determined.

### (c) Correction of distance

For example, deriver 132 obtains the derived set of geometric attributes by correcting the distances between parts in the detected set of geometric attributes with reference to the stored set of geometric attributes.

Specifically, the stored set of geometric attributes is partitioned into multiple distinct groups each representing a key feature of the face, and a reference set of distances is derived and stored by deriving the center point of each group and calculating the relative distances from the derived center points to a reference point (such as the tip of the nose).

Thereafter, the detected set of geometric attributes is similarly partitioned into multiple groups, and a distance is derived for each group by deriving the center point of the group and calculating the relative distance from the derived center point to the reference point. When the derived distance differs from the corresponding distance in the reference set of distances by more than a threshold, the entire group is shifted such that the derived distance matches the corresponding distance in the reference set of distances.

Here, the set of geometric attributes refers to a set of geometric attributes corresponding to a frame. In other words, the set of geometric attributes refers to a full set of geometric attributes for the entire face. For example, the center point of a group can be derived from the mean of the x and y coordinates of all attributes (points) in the group. Alternatively, the center point of a group may be set by deriving a bounding box enclosing all points in the group based on the minimum and maximum x and y values of all attributes (points) in the group, and determining the center of the bounding box as the center point of the group.

FIG. 37 is a conceptual diagram illustrating an example of the stored set of geometric attributes which is the set of geometric attributes stored in encoder 100. In this example, the center point of the "right eye" group of the stored set of geometric attributes is represented as (x_{stored_re}, y_{stored_re}). The nose tip point of the stored set of geometric attributes is represented as (x_{stored_n}, y_{stored_n}).

FIG. 38 is a conceptual diagram illustrating an example of the detected set of geometric attributes which is the set of geometric attributes detected in encoder 100. In this example, the center point of the "right eye" group of the detected set of geometric attributes is represented as (x_{detected_re}, y_{detected_re}). The nose tip point of the detected set of geometric attributes is represented as (x_{detected_n}, y_{detected_n}).

FIG. 39 is a conceptual diagram illustrating an example of the derived set of geometric attributes which is the set of geometric attributes derived in encoder 100. In this example, the center point of the "right eye" group of the derived set of geometric attributes is represented as (x_{derived_re}, Yderived re). The nose tip point of the derived set of geometric attributes is represented as (x_{derived_n}, y_{derived_n}).

The method of setting the derived set of geometric attributes in FIG. 39 based on the stored set of geometric attributes in FIG. 37 and the detected set of geometric attributes in FIG. 38 is as follows.
(1) First, deriver 132 calculates distance d_{stored_re} from the nose tip point to the center point of the right eye group in the stored set of geometric attributes according to the following equation.
   [MATH. 3] ${d}_{stored_re} = \sqrt{{\left({x}_{stored_re}-{x}_{stored_n}\right)}^{2} + {\left({y}_{stored_re}-{y}_{stored_n}\right)}^{2}}$
(2) Next, deriver 132 calculates distance d_{detected_re} from the nose tip point to the center point of the right eye group in the detected set of geometric attributes according to the following equation.
   [MATH. 4] ${d}_{detected_re} = \sqrt{{\left({x}_{detected_re}-{x}_{detected_n}\right)}^{2} + {\left({y}_{detected_re}-{y}_{detected_n}\right)}^{2}}$
(3) Next, if |d_{detected_re} - d_{stored_re}| > ε, deriver 132 sets d_{derived_re} = d_{stored_re} and (x_{derived_n}, y_{derived_n}) = (x_{detected_n}, y_{detected_n}).

In other words, deriver 132 determines whether the difference between the distance from the nose tip point to the center point of the right eye group in the stored set of geometric attributes and the distance from the nose tip point to the center point of the right eye group in the detected set of geometric attributes is greater than a threshold.

When the difference is greater than the threshold, deriver 132 sets the distance from the nose tip point to the center point of the right eye group in the derived set of geometric attributes to the distance from the nose tip point to the center point of the right eye group in the stored set of geometric attributes. In this case, deriver 132 sets the nose tip point in the derived set of geometric attributes to the nose tip point in the detected set of geometric attributes.

It is to be noted that, if |d_{detected_re} - d_{stored_re}| ≤ ε, deriver 132 sets the right eye group in the detected set of geometric attributes as the right eye group in the derived set of geometric attributes, and skips the processes of (4), (5), and (6) below.

(4) Next, deriver 132 sets (x_{derived_re}, y_{derived_re}) to the nearest point from (x_{detected_re}, y_{detected_re}) that satisfies d_{derived_re} = d_{stored_re}. In other words, deriver 132 sets the center point of the right eye group in the derived set of geometric attributes to the nearest point from the center point of the right eye group in the detected set of geometric attributes such that the distance between the nose tip point and the center point of the right eye group is equal to the corresponding distance in the stored set of geometric attributes.

(5) Next, deriver 132 derives transformation for mapping the center point of the right eye group in the detected set of geometric attributes (x_{detected_re}, y_{detected_re}) to the center point of the right eye group in the derived set of geometric attributes (x_{derived_re}, y_{derived_re}).

(6) Next, deriver 132 shifts the entire right eye group using the same transformation as the transformation derived in process (5) above.

Deriver 132 sets the derived set of geometric attributes by performing the processes of (1) to (6) above for each of all the other groups. This adjusts the distances between groups not to be too large.

The stored set of geometric attributes may be a set of geometric attributes previously encoded into the bitstream and stored in buffer 135. In one example, the stored set of geometric attributes may be a set of geometric attributes encoded and stored at a previous frame of the current frame. In another example, the stored set of geometric attributes may be a set of geometric attributes encoded and stored at the first (intra) frame in a group of pictures.

In yet another example, the stored set of geometric attributes may be a set of geometric attributes locally present in both encoder 100 and decoder 200. Specifically, this set of geometric attributes may be derived from a common image locally present in both encoder 100 and decoder 200. In yet another example, the stored set of geometric attributes may be a predetermined set of geometric attributes.

In yet another example, the stored set of geometric attributes may correspond to part of the full set of geometric attributes that represents the entire face. Specifically, for example, the stored set of geometric attributes may be the left eye group in the full set of geometric attributes.

To prevent memory buffer overflow, encoder 100 may retain only the most recently derived (latest) set of geometric attributes. Alternatively, encoder 100 may retain only the recent sets of geometric attributes not earlier than a preset threshold among historical sets of geometric attributes ordered by recency, and discard the old sets of geometric attributes. This ensures that one or more sets of geometric attributes in buffer 135 of encoder 100 are kept up to date with latest changes in the driving frame scenes.

It is to be noted that in an example of the design that includes the concealment parameter indicating "low_confidence" (low reliability), only sets of geometric attributes with high predicted confidence scores are stored in buffer 135 to serve as reference attributes for other frames that require drawing from buffer 135. In this case, the sets of geometric attributes with low reliability are not stored in buffer 135. In this manner, only the sets of geometric attributes with high reliability are used as the baseline. Accordingly, error accumulation arising from storing the error-prone sets of geometric attributes is minimized.

Compressor 134 encodes the concealment parameter into the bitstream. The concealment parameter may indicate the error recovery method for the set of geometric attributes. For example, in addition to the concealment parameter, the set of geometric attributes is encoded into the bitstream.

The set of geometric attributes to be encoded may be the detected set of geometric attributes which is a set of geometric attributes detected from the driving frame. Alternatively, the set of geometric attributes to be encoded may be the derived set of geometric attributes which is a set of geometric attributes derived using the stored set of geometric attributes.

Encoder 100 may encode the detected set of geometric attributes as the derived set of geometric attributes, and further encode the concealment parameter related to the error recovery control of the set of geometric attributes. With this, it may be possible for decoder 200 to apply the appropriate error recovery control to the set of geometric attributes based on the concealment parameter.

Alternatively, encoder 100 may encode the derived set of geometric attributes obtained using the detected set of geometric attributes and the stored set of geometric attributes, and further encode the concealment parameter. With this, it may be possible for decoder 200 to check the validity of the set of geometric attributes based on the concealment parameter and to apply the more appropriate error recovery control to the set of geometric attributes based on the concealment parameter.

In one example, the concealment parameter may be encoded into a supplemental enhancement information (SEI) message. The SEI message into which the concealment parameter is encoded may be an existing SEI message. Specifically, the SEI message may be a generative face video compression SEI message.

In another example, the concealment parameter may be encoded into the bitstream by being encoded into a separate SEI message.

Encoder 100 may perform a similar process to that of decoder 200, or may include a configuration for performing a similar process to that of decoder 200. More specifically, encoder 100 may further perform processes for generating a face video (S202, S203, and S204) based on the concealment parameter.

For example, encoder 100 determines whether the concealment parameter is equal to a predetermined value. Next, when the concealment parameter is determined to be equal to the predetermined value, encoder 100 obtains the derived set of geometric attributes using the stored set of geometric attributes retrieved from buffer 135. Thereafter, encoder 100 generates a face video using a neural network based on the derived set of geometric attributes.

The generated face video is used by a user of encoder 100 to verify the appearance. When the generated face video is not required at encoder 100, encoder 100 need not perform the processes for generating a face video based on the concealment parameter.

### [Syntax and Semantics]

Multiple examples of syntaxes and the corresponding semantics are indicated below. It is to be noted that, in the following description, face attribute parameters are parameters corresponding to a set of geometric attributes, and face attribute parameters and a face attribute set may be read as a set of geometric attributes.

FIG. 40 is a syntax diagram illustrating an example of a syntax structure related to the concealment parameter. In this example, retrieve_from_buffer equal to 0 indicates that the face attribute parameters are present in the bitstream. Retrieve_from_buffer equal to 1 indicates that the face attribute parameters are not present in the bitstream, and are retrieved from buffer 237.

FIG. 41 is a syntax diagram illustrating another example of a syntax structure related to the concealment parameter. In this example, attribute_present equal to 1 indicates that the face attribute parameters are present in the bitstream. Attribute_present equal to 0 indicates that the face attribute parameters are not present in the bitstream, and are retrieved from buffer 237.

FIG. 42 is a syntax diagram illustrating yet another example of a syntax structure related to the concealment parameter. In this example, attribute_present equal to 1 indicates that the face attribute parameters are present in the bitstream. Attribute_present equal to 0 indicates that the face attribute parameters are not present in the bitstream, and are retrieved from buffer 237.

Max_buffer_idx indicates the maximum number of face attribute sets to be stored. The face attribute sets to be stored are face attribute sets that have been previously encoded or decoded. Buffer_idx specifies the index of the face attribute set to be retrieved among the multiple face attribute sets, in the range from 0 to max_buffer_idx minus 1.

FIG. 43 is a syntax diagram illustrating yet another example of a syntax structure related to the concealment parameter. In this example, attribute_present equal to 1 indicates that the face attribute parameters are present in the bitstream. Attribute_present equal to 0 indicates that the face attribute parameters are not present in the bitstream, and are retrieved from buffer 237.

Store_to_buffer equal to 1 indicates that the face attribute set in the bitstream is to be stored in buffer 237. On the other hand, store_to_buffer equal to 0 indicates that the face attributes in the bitstream are not to be stored in buffer 237.

Max_buffer_idx indicates the maximum number of face attribute sets to be stored. The face attribute sets to be stored are face attribute sets that have been previously encoded or decoded. Buffer_idx indicates the index of the face attribute set to be retrieved among the multiple face attribute sets, in the range from 0 to max_buffer_idx minus 1.

In the case where max_buffer_idx is greater than 1, store_to_buffer greater than 0 may indicate the buffer index location at which the face attribute set is to be stored in buffer 237. For example, when store_to_buffer is greater than 0, the face attribute set is to be stored at the buffer index location indicated by store_to_buffer minus 1. When store_to_buffer is equal to 0, the face attribute set is not to be stored.

FIG. 44 is a syntax diagram illustrating yet another example of a syntax structure related to the concealment parameter. In this example, attribute_present equal to 1 indicates that the face attribute parameters are present in the bitstream. Attribute_present equal to 0 indicates that the face attribute parameters are not present in the bitstream, and are retrieved from buffer 237.

Store_to_buffer equal to 1 indicates that the face attribute set in the bitstream is to be stored in buffer 237. On the other hand, store_to_buffer equal to 0 indicates that the face attribute set in the bitstream is not to be stored in buffer 237.

Store_buffer_idx indicates the buffer index location at which the face attribute set in the bitstream is to be stored in buffer 237.

Max_buffer_idx indicates the maximum number of face attribute sets to be stored. The face attribute sets to be stored are face attribute sets that have been previously encoded or decoded. Buffer_idx indicates the index of the face attribute set to be retrieved among the multiple face attribute sets, in the range from 0 to max_buffer_idx minus 1.

FIG. 45 is a syntax diagram illustrating yet another example of a syntax structure related to the concealment parameter.

In this example, attributes_low_confidence equal to 0 indicates that the face attribute parameters in the bitstream have high reliability and thus should be stored in buffer 237. Attribute_low_confidence equal to 1 indicates that the face attribute parameters in the bitstream have low reliability and thus should be corrected, for example, by combining with the stored face attribute set retrieved from buffer 237.

Here, the method of combining the stored face attribute set and the decoded face attribute set with low reliability for error concealment may be predefined at decoder 200.

FIG. 46 is a syntax diagram illustrating yet another example of a syntax structure related to the concealment parameter.

In this example, attributes_low_confidence equal to 0 indicates that the face attribute parameters in the bitstream have high reliability and thus should be stored in buffer 237. Attribute_low_confidence not equal to 0 indicates that the face attribute parameters in the bitstream have low reliability and thus should be combined with the stored face attribute set retrieved from buffer 237.

Here, the method of combining the stored face attribute set and the decoded face attribute set with low reliability for error concealment may be defined by the value of attribute_low_confidence.

Smoothing_parameter indicates the degree of emphasis given to the stored face attribute set for performing temporal smoothing using first-order exponential smoothing when the value of attribute_low_confidence is 1.

FIG. 47 is a syntax diagram illustrating yet another example of a syntax structure related to the concealment parameter.

In this example, num_attributes_not_equal_expected equal to 0 indicates that the number of face attribute parameters in the bitstream is equal to the expected number of face attributes. Num_attributes_not_equal_expected equal to 1 indicates that the number of face attribute parameters in the bitstream is not equal to the expected number of face attributes, thereby implying that missing attributes or additional attributes may be present.

FIG. 48 is a syntax diagram illustrating yet another example of a syntax structure related to the concealment parameter. In this example, max_num_attributes refers to the maximum number of attributes for each frame of the bitstream. Num_attributes indicates the number of attributes for the current frame of the bitstream. Num_attributes not equal to max_num_attributes indicates that the number of attributes does not match the expected number.

FIG. 49 is a syntax diagram illustrating yet another example of a syntax structure related to the concealment parameter.

In this example, looping_around_stored_attributes equal to 0 indicates that looping, storing to buffer 237, and retrieving from buffer 237 are not required. Accordingly, the face attribute parameters in the bitstream are directly used as the derived face attribute set.

Looping_around_stored_attributes equal to 1 indicates start of writing the face attribute set to buffer 237. Accordingly, from this frame onwards until the value of looping_around_stored_attributes changes, the face attribute parameters in the bitstream are stored in buffer 237.

Looping_around_stored_attributes equal to 2 indicates stop of writing the face attribute set to buffer 237. From this frame onwards until the value of looping_around_stored_attributes changes, decoder 200 retrieves the face attribute set from buffer 237 in a loop that repeats from the first stored face attribute set to the last stored face attribute set. All the face attribute parameters in the bitstream are ignored.

Max_buffer_idx indicates the maximum number of face attribute sets to be stored. Store_buffer_idx indicates the buffer index location at which the face attribute set is to be stored, in the range from 0 to max_buffer_idx minus 1. Buffer_idx indicates the buffer index location of the face attribute set to be retrieved, in the range from 0 to max_buffer_idx minus 1.

The buffer index location for storing or retrieving a face attribute set may be controlled using only an internal counter, independently of store_buffer_idx and buffer_idx. Accordingly, the signaling of store_buffer_idx and buffer_idx may be omitted.

In the examples above, the operations of decoder 200 corresponding to the syntaxes are indicated, but encoder 100 may perform operations similar to those of decoder 200.

In the examples above, the stored set of geometric attributes is used in error concealment. However, decoder 200 need not use the stored set of geometric attributes for error concealment. For example, decoder 200 may apply a previous frame in a face video as the current frame in the face video. In other words, decoder 200 does not generate a face image corresponding to the current frame in the face video using a generative model, and may apply an already generated face image as the face image corresponding to the current frame.

### [Example of Generative Model]

FIG. 50 is a diagram illustrating an example of different models applicable as a generative model. For example, a neural network is used as the generative model. Specifically, a generative adversarial network, a variational autoencoder, a flow-based generative model, and a diffusion model are illustrated in FIG. 50.

The generative adversarial network creates new data instances that are similar to the input data via learning characteristics in the input data. Specifically, an unsupervised task of the generative model is converted into a supervised task by two types of sub-models.

For example, a generator sub-model generates fake samples, and a discriminator sub-model distinguishes true inputs from the fake samples generated by the generator sub-model. The output images are then generated via a minimax game to maximize the discrimination probability of the discriminator sub-model in assigning accurate labels to the true inputs and the fake samples and simultaneously minimize the differences in distributions of the true inputs and the fake samples.

The variational autoencoder first compresses input data into a multivariate latent distribution for reconstructing data from the latent space as accurately as possible. With this, data compression and dimensionality reduction are efficiently performed. The flow-based generative model converts a source distribution to the distribution of training data via a sequence of one or more invertible transformations. This allows for the learning of the data distribution and exact computation of likelihood of the final target.

The diffusion model also creates new data instances similar to the training data. The diffusion model first degrades the structure of the training data via iterative infusion of perturbations and noise before starting a denoising process in an attempt to recover the original data. This results in iterative mapping of data into latent distributions via Markov chains where the latent state in each step is only dependent on the latent state in the previous step. The data is then recovered by denoising in a hierarchical fashion.

For example, the neural network may be a face picture generator neural network applicable to generate an output picture using a picture and geometric information represented in a fixed format for a facial parameter. In other words, the neural network corresponds to a process of generating samples included in the output picture that is one picture included in an output video.

An alternative example of the above-mentioned neural network may comprise of a combination of any of the above-mentioned models. Alternatively, other types of generative models, or the like may be used.

Moreover, the generative model may be used to detect or derive the geometric attributes, or to detect or derive the fundamental attributes.

### [Configuration Example of Video Encoding and Video Decoding]

FIG. 51 is a block diagram illustrating a configuration example for encoder 100 according to the present embodiment to encode a video. For example, encoder 100 may include the components illustrated in FIG. 51 as components for encoding an image in a video on a per block basis according to VVC. In addition to the above-mentioned components, encoder 100 may include the components illustrated in FIG. 51. At least part of the above-mentioned components may be integrated into the components illustrated in FIG. 51.

As illustrated in FIG. 51, encoder 100 includes splitter 102, subtractor 104, transformer 106, quantizer 108, entropy encoder 110, inverse quantizer 112, inverse transformer 114, adder 116, block memory 118, loop filter 120, frame memory 122, intra predictor 124, inter predictor 126, prediction controller 128, and prediction parameter generator 130. It is to be noted that intra predictor 124 and inter predictor 126 are configured as part of a prediction executor.

Splitter 102 splits an image into blocks, and provides a parameter related to the splitting to entropy encoder 110. Subtractor 104 subtracts a prediction image block from a current block to obtain a prediction residual block. Transformer 106 transforms the prediction residual block to obtain a transform coefficient block. Quantizer 108 quantizes the transform coefficient block to obtain a quantized coefficient block. Entropy encoder 110 entropy encodes the quantized coefficient block and the parameter, to generate a bitstream.

Inverse quantizer 112 performs inverse quantization of the quantized coefficient block to obtain a transform coefficient block. Inverse transformer 114 performs inverse transformation of the transform coefficient block to obtain a prediction residual block. Adder 116 adds the prediction image block to the prediction residual block to obtain a reconstructed image block. Block memory 118 stores the reconstructed image block. Loop filter 120 applies a loop filter to the reconstructed image block. Frame memory 122 stores the reconstructed image block to which the loop filter is applied.

Intra predictor 124 generates a prediction image block by performing intra prediction by referring to block memory 118. Inter predictor 126 generates a prediction image block by performing inter prediction by referring to frame memory 122. Prediction controller 128 provides, to subtractor 104 and adder 116, a prediction image block generated by intra predictor 124 or a prediction image block generated by inter predictor 126. Prediction parameter generator 130 provides a parameter related to the intra prediction or the inter prediction to entropy encoder 110.

FIG. 52 is a block diagram illustrating a configuration example for decoder 200 according to the embodiment to decode a video. For example, decoder 200 may include the components illustrated in FIG. 52 as components for decoding an image in a video on a per block basis according to VVC. In addition to the above-mentioned components, decoder 200 may include the components illustrated in FIG. 52. At least part of the above-mentioned components may be integrated into the components illustrated in FIG. 52.

As illustrated in FIG. 52, decoder 200 includes entropy decoder 202, inverse quantizer 204, inverse transformer 206, adder 208, block memory 210, loop filter 212, frame memory 214, intra predictor 216, inter predictor 218, prediction controller 220, prediction parameter generator 222, and splitting determiner 224. It is to be noted that intra predictor 216 and inter predictor 218 are configured as part of a prediction executor.

Entropy decoder 202 entropy decodes a bitstream to obtain a quantized coefficient block and a parameter. Inverse quantizer 204 performs inverse quantization of the quantized coefficient block to obtain a transform coefficient block. Inverse transformer 206 performs inverse transformation of the transform coefficient block to obtain a prediction residual block. Adder 208 adds the prediction image block to the prediction residual block to obtain a reconstructed image block. Loop filter 212 applies a loop filter to the reconstructed image block.

Block memory 210 stores the reconstructed image block. Frame memory 214 stores the reconstructed image block to which the loop filter is applied.

Intra predictor 216 generates a prediction image block by performing intra prediction by referring to block memory 210. Inter predictor 218 generates a prediction image block by performing inter prediction by referring to frame memory 214. Prediction controller 220 provides, to adder 208, a prediction image block generated by intra predictor 216 or a prediction image block generated by inter predictor 218. Prediction parameter generator 222 provides a parameter related to the intra prediction or the inter prediction to prediction controller 220.

Splitting determiner 224 determines a block for decoding an image on a per block basis, according to a parameter related to the splitting.

### [Combinations]

Any of the configuration examples according to the present disclosure may be combined. Moreover, any of the operation examples according to the present disclosure may be combined. Moreover, duplicated descriptions in the examples of the present disclosure may be omitted. Moreover, the configuration and processing corresponding to the configuration and processing of encoding may be applied to decoding, or the configuration and processing corresponding to the configuration and processing of decoding may be applied to encoding. Moreover, only part of an example included in the examples of the present disclosure may be performed.

### [Implementation Examples]

FIG. 53 is a block diagram illustrating an implementation example of encoder 100. Encoder 100 includes circuitry 151 and memory 152. For example, the components of encoder 100 described above are implemented by circuitry 151 and memory 152.

Circuitry 151 is an electrical circuit that performs information processing, and has access to memory 152. For example, circuitry 151 may be a dedicated circuit that performs the encoding method according to the present disclosure, or a general circuit that executes a program corresponding to the encoding method according to the present disclosure. Circuitry 151 also may be a processor such as a CPU. Circuitry 151 further may be an aggregate of multiple circuits.

Memory 152 is a dedicated or general memory that stores information for circuitry 151 to encode an image. Memory 152 may be an electrical circuit, and may be connected to circuitry 151. Memory 152 also may be included in circuitry 151. Memory 152 also may be an aggregate of multiple circuits. Memory 152 also may be a magnetic disk or an optical disk, or may be referred to as a storage, a recording medium, or the like. Memory 152 also may be a non-volatile memory, or a volatile memory.

For example, memory 152 may store data to be encoded such as an image, or encoded data such as a bitstream. Memory 152 also may store a program for causing circuitry 151 to perform image processing. Memory 152 also may store a generative model.

For example, memory 152 may correspond to above-mentioned buffer 135, block memory 118, frame memory 122, and the like. Circuitry 151 may correspond to other components in encoder 100.

FIG. 54 is a flowchart illustrating a first basic operation example performed by encoder 100. In operation of this example, circuitry 151 of encoder 100 performs the following steps using memory 152.

Specifically, circuitry 151 encodes, into a bitstream, base data of a face image related to a face video, and geometric information that indicates geometric attributes within a region including a face of a person and corresponds to each of frames of the face video (S601). Circuitry 151 determines whether the geometric information has been appropriately obtained (S602). Circuitry 151 further encodes, into the bitstream, a concealment parameter related to an error recovery control in decoder 200 for when the geometric information is not appropriately obtained (S603).

With this, it may be possible for encoder 100 to inform decoder 200 of information related to the error recovery control for when the geometric information is not appropriately obtained in encoder 100. Accordingly, it may be possible to appropriately perform the error recovery control in decoder 200 when the geometric information is not appropriately obtained in encoder 100.

It is to be noted that the base data as described here corresponds to the fundamental image or the fundamental attributes. The geometric information corresponds to the set of geometric attributes. Whether the geometric information has been appropriately obtained corresponds to, for example, whether the geometric information has been obtained in accordance with predetermined criteria corresponding to the fact that the geometric information has been appropriately obtained, more specifically, whether the geometric information satisfying predetermined conditions has been obtained.

For example, circuitry 151 may encode the concealment parameter into a header of the bitstream. With this, it may be possible for encoder 100 to inform decoder 200, via the header of the bitstream, of information related to the error recovery control for when the geometric information is not appropriately obtained in encoder 100. Accordingly, it may be possible to appropriately perform the error recovery control based on the information in the header.

Moreover, for example, the concealment parameter may indicate, according to a value of the concealment parameter, that the geometric information obtained in encoder 100 and corresponding to a current frame has low reliability. With this, it may be possible for encoder 100 to inform decoder 200 that the geometric information obtained in encoder 100 has low reliability. Accordingly, it may be possible to appropriately perform the error recovery control in decoder 200.

It is to be noted that the fact that the geometric information has low reliability as described here may correspond to, for example, the fact that the reliability of the geometric information is lower than a threshold. The threshold may be average reliability or any determined reliability.

Alternatively, that the geometric information has low reliability may correspond to that the geometric information does not satisfy the predetermined conditions, that the geometric information has not been obtained in accordance with the predetermined criteria, or the like. When the geometric information does not satisfy the predetermined conditions or when the geometric information has not been obtained in accordance with the predetermined criteria, the reliability of the geometric information may be regarded as being lower than a threshold.

Moreover, for example, the concealment parameter may indicate, according to a value of the concealment parameter, that the geometric information corresponding to a current frame has not been obtained in encoder 100. With this, it may be possible for encoder 100 to inform decoder 200 that the geometric information has not been obtained in encoder 100. Accordingly, it may be possible to appropriately perform the error recovery control in decoder 200.

Moreover, for example, the concealment parameter may indicate, according to a value of the concealment parameter, that a total number of items in the geometric information obtained in encoder 100 and corresponding to a current frame is different from an original number of items. With this, it may be possible for encoder 100 to inform decoder 200 that the total number of attributes in the geometric information obtained in encoder 100 is not appropriate. Accordingly, it may be possible to appropriately perform the error recovery control in decoder 200.

Moreover, for example, the concealment parameter may indicate, according to a value of the concealment parameter, that stored geometric information is applied for a current frame of the face video instead of the geometric information to be decoded from the bitstream. With this, it may be possible for encoder 100 to inform decoder 200 that the stored geometric information is applied to the current frame. Accordingly, it may be possible to appropriately perform the error recovery control in decoder 200.

Moreover, for example, the concealment parameter may indicate, according to a value of the concealment parameter, that the geometric information corresponding to a current frame is to be stored for a subsequent frame. With this, it may be possible for encoder 100 to inform decoder 200 that the geometric information corresponding to the current frame is to be stored. Accordingly, it may be possible to appropriately perform the error recovery control on the subsequent frame.

Moreover, for example, there is a case where reliability of the geometric information obtained in encoder 100 and corresponding to a current frame is lower than a threshold. In this case, circuitry 151 may set the concealment parameter to a value indicating that the reliability of the geometric information is low. With this, when the reliability of the geometric information is lower than the threshold, it may be possible for encoder 100 to inform decoder 200 that the reliability of the geometric information is low. Accordingly, it may be possible to appropriately perform the error recovery control in decoder 200.

Moreover, for example, there is a case where reliability of the geometric information obtained in encoder 100 and corresponding to a current frame is lower than a threshold or a case where a face is not included in the current frame obtained in encoder 100. In this case, circuitry 151 does not encode, into the bitstream, the geometric information corresponding to the current frame, and may set the concealment parameter to a value indicating that the geometric information has not been obtained.

With this, when the reliability of the geometric information is lower than the threshold or when the face is not included, it may be possible for encoder 100 to inform decoder 200 that the geometric information has not been obtained. Accordingly, it may be possible to appropriately perform the error recovery control in decoder 200.

Moreover, for example, there is a case where a total number of attributes in the geometric information obtained in encoder 100 and corresponding to a current frame is different from a predefined number of attributes. In this case, circuitry 151 may set the concealment parameter to a value indicating that the total number of attributes in the geometric information is different from an original number of items.

With this, when the total number of attributes in the geometric information is different from the predefined number of attributes, it may be possible for encoder 100 to inform decoder 200 that the total number of attributes in the geometric information is different from the original number of items. Accordingly, it may be possible to appropriately perform the error recovery control in decoder 200.

Moreover, for example, there is a case where reliability of the geometric information obtained in encoder 100 and corresponding to a current frame is lower than a threshold or a case where a face is not included in the current frame obtained in encoder 100. In this case, circuitry 151 may set the concealment parameter to a value indicating that stored geometric information is applied as the geometric information corresponding to the current frame.

With this, when the reliability of the geometric information is lower than the threshold or when the face is not included, it may be possible for encoder 100 to inform decoder 200 that the stored geometric information is applied to a current frame. Accordingly, it may be possible to appropriately perform the error recovery control in decoder 200.

Moreover, for example, there is a case where reliability of the geometric information obtained in encoder 100 and corresponding to a current frame is higher than or equal to a specified threshold. In this case, circuitry 151 may set the concealment parameter to a value indicating that the geometric information is to be stored for a subsequent frame.

With this, when the reliability of the geometric information is higher than or equal to the threshold, it may be possible for encoder 100 to inform decoder 200 that the geometric information is to be stored. Accordingly, it may be possible to appropriately perform the error recovery control on the subsequent frame in decoder 200.

Moreover, for example, there is a case where the reliability of the geometric information obtained in encoder 100 and corresponding to a current frame is lower than a threshold. In this case, circuitry 151 may correct the geometric information obtained, using stored geometric information. Circuitry 151 may then encode, into the bitstream, the geometric information corrected.

With this, in encoder 100, it may be possible to correct the inappropriately obtained geometric information using the stored geometric information when the geometric information is not appropriately obtained. Accordingly, it may be possible to appropriately perform the error recovery control in encoder 100.

Moreover, for example, there is a case where the reliability of the geometric information obtained in encoder 100 and corresponding to a current frame is lower than a threshold. In this case, circuitry 151 may encode, into the bitstream, stored geometric information as the geometric information corresponding to the current frame.

With this, in encoder 100, it may be possible to employ the stored geometric information instead of the inappropriately obtained geometric information when the geometric information is not appropriately obtained. Accordingly, it may be possible to appropriately perform the error recovery control in encoder 100.

Moreover, for example, the stored geometric information may be geometric information obtained in encoder 100 and corresponding to a previous frame. With this, it may be possible to appropriately perform the error recovery control using the geometric information corresponding to a previous frame.

Moreover, for example, the stored geometric information may be geometric information satisfying predefined criteria. With this, it may be possible to appropriately perform the error recovery control using the geometric information satisfying the predefined criteria.

FIG. 55 is a flowchart illustrating a second basic operation example performed by encoder 100. In operation of this example, circuitry 151 of encoder 100 performs the following steps using memory 152.

Specifically, circuitry 151 encodes base data of an image included in a video (S611). Circuitry 151 encodes, into a bitstream, face attribute parameters indicating a face included in the image (S612). Circuitry 151 further encodes, into the bitstream, a reliability parameter related to reliability of the face attribute parameters (S613). Here, the reliability parameter indicates, according to a value of the reliability parameter, that the reliability is low.

For example, when the reliability of the face attribute parameters is not known in decoder 200, there is a risk of generating inappropriate images since the reliability is assumed on the decoder 200 side to perform the processes. With the above configuration, when the reliability of the face attribute parameters is low, it may be possible for encoder 100 to inform decoder 200 that the reliability of the face attribute parameters is low.

Accordingly, in decoder 200, it may be possible to appropriately determine that the reliability of the face attribute parameters is low. Furthermore, it may be possible for encoder 100 to control determination of whether the reliability of the face attribute parameters is low in decoder 200.

It is to be noted that the base data described here corresponds to the fundamental image or the fundamental attributes. The face attribute parameters correspond to the set of geometric attributes. The reliability parameter corresponds to the concealment parameter. When the reliability parameter does not indicate that the reliability of the face attribute parameters is low, the reliability of the face attribute parameters may be high or undefined.

For example, the image may correspond to each of pictures included in the video. The base data may be common to the pictures. The bitstream may include the reliability parameter and the face attribute parameters for each of the pictures.

With this, when the reliability of the face attribute parameters is low, it may be possible for encoder 100 to inform decoder 200, for each of the pictures, that the reliability of the face attribute parameters is low. Accordingly, in decoder 200, it may be possible to appropriately determine, for each of the pictures, that the reliability of the face attribute parameters is low.

Moreover, for example, the bitstream may include the reliability parameter prior to the face attribute parameters for each of the pictures. With this, it may be possible for encoder 100 to inform decoder 200 of the reliability of the face attribute parameters before informing decoder 200 of the face attribute parameters. Accordingly, in decoder 200, it may be possible to process the face attribute parameters after appropriately determining that the reliability of the face attribute parameters is low.

Moreover, for example, when the reliability parameter does not indicate that the reliability of the face attribute parameters is low, the face attribute parameters may be stored. With this, it may be possible to prevent the face attribute parameters with low reliability from being stored. Accordingly, it may be possible to prevent reuse of the face attribute parameters with low reliability.

Alternatively, encoder 100 may include an input terminal, an entropy encoder, and an output terminal. The operation performed by circuitry 151 may be performed by the entropy encoder. The input terminal may receive data for use in the operation of the entropy encoder. The output terminal may output data obtained through the operation of the entropy encoder.

FIG. 56 is a block diagram illustrating an implementation example of decoder 200. Decoder 200 includes circuitry 251 and memory 252. For example, the components of decoder 200 described above are implemented by circuitry 251 and memory 252.

Circuitry 251 is an electrical circuit that performs information processing, and has access to memory 252. For example, circuitry 251 may be a dedicated circuit that performs the decoding method according to the present disclosure, or a general circuit that executes a program corresponding to the decoding method according to the present disclosure. Circuitry 251 also may be a processor such as a CPU. Circuitry 251 further may be an aggregate of multiple circuits.

Memory 252 is a dedicated or general memory that stores information for circuitry 251 to decode an image. Memory 252 may be an electrical circuit, and may be connected to circuitry 251. Memory 252 also may be included in circuitry 251. Memory 252 also may be an aggregate of multiple circuits. Memory 252 also may be a magnetic disk or an optical disk, or may be referred to as a storage, a recording medium, or the like. Memory 252 also may be a non-volatile memory, or a volatile memory.

For example, memory 252 may store data to be decoded such as a bitstream, or decoded data such as an image. Memory 252 also may store a program for causing circuitry 251 to perform image processing. Memory 252 also may store a generative model.

For example, memory 252 may correspond to above-mentioned buffer 237, block memory 210, frame memory 214, and the like. Circuitry 251 may correspond to other components in decoder 200.

FIG. 57 is a flowchart illustrating a first basic operation example performed by decoder 200. In operation of this example, circuitry 251 of decoder 200 performs the following steps using memory 252.

Specifically, circuitry 251 decodes, from a bitstream, base data of a face image related to a face video, and geometric information that indicates geometric attributes within a region including a face of a person and corresponds to each of frames of the face video (S701). Circuitry 251 further decodes, from the bitstream, a concealment parameter related to an error recovery control for when the geometric information is not appropriately obtained in encoder 100 (S702).

Circuitry 251 generates the face video using a generative model from the base data, the geometric information, and the concealment parameter (S703).

With this, it may be possible for encoder 100 to inform decoder 200 of information related to the error recovery control for when the geometric information is not appropriately obtained in encoder 100. Accordingly, it may be possible to appropriately perform the error recovery control in decoder 200 when the geometric information is not appropriately obtained in encoder 100.

It is to be noted that the base data described here corresponds to the fundamental image or the fundamental attributes. The geometric information corresponds to the set of geometric attributes. Whether the geometric information has been appropriately obtained corresponds to, for example, whether the geometric information has been obtained in accordance with predetermined criteria corresponding to that the geometric information has been appropriately obtained, more specifically, whether the geometric information satisfying predetermined conditions has been obtained.

For example, circuitry 251 may decode the concealment parameter from a header of the bitstream. With this, it may be possible for encoder 100 to inform decoder 200, via the header of the bitstream, of information related to the error recovery control for when the geometric information is not appropriately obtained in encoder 100. Accordingly, it may be possible to appropriately perform the error recovery control in decoder 200 based on the information in the header.

Moreover, for example, the concealment parameter may indicate, according to a value of the concealment parameter, that the geometric information obtained in encoder 100 and corresponding to a current frame has low reliability. With this, it may be possible for encoder 100 to inform decoder 200 that the geometric information obtained in encoder 100 has low reliability. Accordingly, it may be possible to appropriately perform the error recovery control in decoder 200.

It is to be noted that the fact that the geometric information has low reliability as described here may correspond to, for example, the fact that the reliability of the geometric information is lower than a threshold. The threshold may be average reliability or any determined reliability.

Alternatively, that the geometric information has low reliability may correspond to that the geometric information does not satisfy the predetermined conditions, that the geometric information has not been obtained in accordance with the predetermined criteria, or the like. When the geometric information does not satisfy the predetermined conditions or when the geometric information has not been obtained in accordance with the predetermined criteria, the reliability of the geometric information may be regarded as being lower than a threshold.

Moreover, for example, the concealment parameter may indicate, according to a value of the concealment parameter, that the geometric information corresponding to a current frame has not been obtained in encoder 100. With this, it may be possible for encoder 100 to inform decoder 200 that the geometric information has not been obtained in encoder 100. Accordingly, it may be possible to appropriately perform the error recovery control in decoder 200.

Moreover, for example, the concealment parameter may indicate, according to a value of the concealment parameter, that a total number of attributes in the geometric information obtained in encoder 100 and corresponding to a current frame is different from an original number of attributes. With this, it may be possible for encoder 100 to inform decoder 200 that the total number of attributes in the geometric information obtained in encoder 100 is not appropriate. Accordingly, it may be possible to appropriately perform the error recovery control in decoder 200.

Moreover, for example, the concealment parameter may indicate, according to a value of the concealment parameter, that stored geometric information is applied for a current frame of the face video instead of the geometric information to be decoded from the bitstream. With this, it may be possible for encoder 100 to inform decoder 200 that the stored geometric information is applied to the current frame. Accordingly, it may be possible to appropriately perform the error recovery control in decoder 200.

Moreover, for example, the concealment parameter may indicate, according to a value of the concealment parameter, that the geometric information corresponding to a current frame is to be stored for a subsequent frame. With this, it may be possible for encoder 100 to inform decoder 200 that the geometric information corresponding to the current frame is to be stored. Accordingly, it may be possible to appropriately perform the error recovery control on the subsequent frame in decoder 200.

Moreover, for example, the concealment parameter may indicate a case where the geometric information obtained in encoder 100 and corresponding to a current frame has low reliability or a case where a total number of attributes in the geometric information is different from an original number of attributes.

In this case, circuitry 251 may correct the geometric information decoded from the bitstream and corresponding to the current frame using stored geometric information. Circuitry 251 may apply the geometric information corrected as the geometric information for generating the face image corresponding to the current frame in the face video.

With this, it may be possible to correct the inappropriately obtained geometric information using the stored geometric information when the geometric information is not appropriately obtained in encoder 100. Accordingly, it may be possible to appropriately perform the error recovery control.

Moreover, for example, the concealment parameter may indicate first information, second information, third information, or fourth information. Here, the first information is that the geometric information obtained in encoder 100 and corresponding to a current frame has low reliability. The second information is that the geometric information has not been obtained. The third information is that a total number of attributes in the geometric information is different from an original number of attributes. The fourth information is that stored geometric information is applied as the geometric information corresponding to the current frame.

In this case, circuitry 251 may apply the stored geometric information as the geometric information for generating the face image corresponding to the current frame in the face video.

With this, it may be possible to employ the stored geometric information instead of the inappropriately obtained geometric information when the geometric information is not appropriately obtained in encoder 100. Accordingly, it may be possible to appropriately perform the error recovery control.

Moreover, for example, there is a case where the concealment parameter indicates the first information, the second information, or the third information. Here, the first information is that the geometric information obtained in encoder 100 and corresponding to a current frame has low reliability. The second information is that the geometric information has not been obtained. The third information is that a total number of attributes in the geometric information is different from an original number of attributes.

In this case, the face image corresponding to the current frame in the face video is not generated using the generative model, and an already generated face image may be applied as the face image corresponding to the current frame.

With this, it may be possible to employ an already generated face image for the current frame instead of newly generating a face image when the geometric information is not appropriately obtained in encoder 100. Accordingly, it may be possible to appropriately perform the error recovery control.

Moreover, for example, the stored geometric information may be geometric information decoded from the bitstream and corresponding to a previous frame. With this, it may be possible to appropriately perform the error recovery control using the geometric information corresponding to a previous frame.

Moreover, for example, the stored geometric information may be geometric information satisfying predefined criteria. With this, it may be possible to appropriately perform the error recovery control using the geometric information satisfying the predefined criteria.

FIG. 58 is a flowchart illustrating a second basic operation example performed by decoder 200. In operation of this example, circuitry 251 of decoder 200 performs the following steps using memory 252.

Specifically, circuitry 251 obtains base data of an image included in a video (S711). Circuitry 251 decodes, from a bitstream, face attribute parameters indicating a face included in the image (S712). The base data and the face attribute parameters are inputted to a generative model to generate an output image corresponding to the image. The bitstream includes a reliability parameter related to reliability of the face attribute parameters. The reliability parameter indicates, according to a value of the reliability parameter, that the reliability is low.

With this, when the reliability of the face attribute parameters is low, it may be possible for encoder 100 to inform decoder 200 that the reliability of the face attribute parameters is low. Accordingly, in decoder 200, it may be possible to appropriately determine that the reliability of the face attribute parameters is low.

It is to be noted that the base data described here corresponds to the fundamental image or the fundamental attributes. The face attribute parameters correspond to the set of geometric attributes. The reliability parameter corresponds to the concealment parameter. When the reliability parameter does not indicate that the reliability of the face attribute parameters is low, the reliability of the face attribute parameters may be high or undefined.

For example, the image may correspond to each of pictures included in the video. The base data may be common to the pictures. The bitstream may include the reliability parameter and the face attribute parameters for each of the pictures.

With this, when the reliability of the face attribute parameters is low, it may be possible for encoder 100 to inform decoder 200, for each of the pictures, that the reliability of the face attribute parameters is low. Accordingly, in decoder 200, it may be possible to appropriately determine, for each of the pictures, that the reliability of the face attribute parameters is low.

Moreover, for example, the bitstream may include the reliability parameter prior to the face attribute parameters for each of the pictures. With this, it may be possible for encoder 100 to inform decoder 200 of the reliability of the face attribute parameters before informing decoder 200 of the face attribute parameters. Accordingly, in decoder 200, it may be possible to process the face attribute parameters after appropriately determining that the reliability of the face attribute parameters is low.

Moreover, for example, when the reliability parameter does not indicate that the reliability of the face attribute parameters is low, the face attribute parameters may be stored. With this, it may be possible to prevent the face attribute parameters with low reliability from being stored. Accordingly, it may be possible to prevent reuse of the face attribute parameters with low reliability.

Alternatively, for example, decoder 200 may include an input terminal, an entropy decoder, and an output terminal. The operation performed by circuitry 251 may be performed by the entropy decoder. The input terminal may receive data for use in the operation of the entropy decoder. The output terminal may output data obtained through the operation of the entropy decoder.

### [Other Examples]

Encoder 100 and decoder 200 in each of the above-described examples may be used as an image encoder and an image decoder, respectively, or may be used as a video encoder and a video decoder, respectively. Moreover, the components included in encoder 100 and the components included in decoder 200 may perform operations corresponding to each other.

Moreover, the term "encode" may be replaced with another term such as store, include, write, describe, signal, send out, notify, or hold, and these terms are interchangeable. For example, encoding information may be including information in a bitstream. Moreover, encoding information into a bitstream may mean that information is encoded to generate a bitstream including the encoded information.

Moreover, the term "decode" may be replaced with another term such as retrieve, parse, read, load, derive, obtain, receive, extract, or restore, and these terms are interchangeable. For example, decoding information may be obtaining information from a bitstream. Moreover, decoding information from a bitstream may mean that a bitstream is decoded to obtain information included in the bitstream.

Moreover, for example, encoding information, compressed information, and the like included in a bitstream may be referred to just as information.

Moreover, at least a part of each example described above may be used as an encoding method or a decoding method, may be used as an entropy encoding method or an entropy decoding method, or may be used as another method.

Moreover, each component may be configured with dedicated hardware, or may be implemented by executing a software program suitable for the component. Each component may be implemented by causing a program executer such as a CPU or a processor to read out and execute a software program stored on a medium such as a hard disk or a semiconductor memory.

More specifically, each of encoder 100 and decoder 200 may include processing circuitry and storage which is electrically connected to the processing circuitry and is accessible from the processing circuitry. For example, the processing circuitry corresponds to circuit 151 or 251, and the storage corresponds to memory 152 or 252.

The processing circuitry includes at least one of a dedicated hardware and a program executer, and performs processing using the storage. Moreover, when the processing circuitry includes the program executer, the storage stores a software program to be executed by the program executer.

An example of the software program described above is a bitstream. The bitstream includes an encoded image and syntaxes for performing a decoding process that decodes an image. The bitstream causes decoder 200 to execute the process according to the syntaxes, and thereby causes decoder 200 to decode an image. Moreover, for example, the software which implements encoder 100, decoder 200, or the like described above is a program indicated below.

For example, the program may cause a computer to execute an encoding method including: encoding, into a bitstream, base data of a face image related to a face video, and geometric information indicating geometric attributes within a region including a face of a person, the geometric information corresponding to each of frames of the face video; determining whether the geometric information has been appropriately obtained; and further encoding, into the bitstream, a concealment parameter related to an error recovery control in a decoder for when the geometric information is not appropriately obtained.

Moreover, for example, the program may cause a computer to execute an encoding method including: encoding base data of an image included in a video; encoding, into a bitstream, face attribute parameters indicating a face included in the image; and further encoding, into the bitstream, a reliability parameter related to reliability of the face attribute parameters, in which the reliability parameter indicates, according to a value of the reliability parameter, that the reliability is low.

Moreover, for example, the program may cause a computer to execute a decoding method including: decoding, from a bitstream, base data of a face image related to a face video, and geometric information indicating geometric attributes within a region including a face of a person, the geometric information corresponding to each of frames of the face video; further decoding, from the bitstream, a concealment parameter related to an error recovery control for when the geometric information is not appropriately obtained in an encoder; and generating the face video using a generative model from the base data, the geometric information, and the concealment parameter.

Moreover, for example, the program may cause a computer to execute a decoding method including: obtaining base data of an image included in a video; and decoding, from a bitstream, face attribute parameters indicating a face included in the image, in which the base data and the face attribute parameters are inputted to a generative model to generate an output image corresponding to the image, the bitstream includes a reliability parameter related to reliability of the face attribute parameters, and the reliability parameter indicates, according to a value of the reliability parameter, that the reliability is low.

Moreover, each component as described above may be a circuit. The circuits may compose circuitry as a whole, or may be separate circuits. Alternatively, each component may be implemented as a general processor, or may be implemented as a dedicated processor.

Moreover, the process that is executed by a particular component may be executed by another component. Moreover, the processing execution order may be modified, or a plurality of processes may be executed in parallel. Moreover, any two or more of the examples of the present disclosure may be performed by being combined appropriately. Moreover, an encoding and decoding device may include encoder 100 and decoder 200.

Moreover, all the components according to the present disclosure need not be implemented, and only some of the components according to the present disclosure may be implemented. Likewise, all the processes according to the present disclosure need not be executed, and only some of the processes according to the present disclosure may be executed.

Moreover, the ordinal numbers such as "first" and "second" used for explanation may be changed appropriately. Moreover, the ordinal number may be newly assigned to a component, etc., or may be deleted from a component, etc. Moreover, the ordinal numbers may be assigned to components to differentiate between the components, and may not correspond to the meaningful order.

Moreover, for example, the expression of "at least one of the first element, the second element, or the third element (or one or more elements among the first element, the second element, and the third element)" corresponds to the first element, the second element, the third element, or any combination of the first element, the second element, and the third element.

Although aspects of encoder 100 and decoder 200 have been described based on a plurality of examples, aspects of encoder 100 and decoder 200 are not limited to these examples. The scope of the aspects of encoder 100 and decoder 200 may encompass embodiments obtainable by adding, to any of these embodiments, various kinds of modifications that a person skilled in the art would conceive and embodiments configurable by combining components in different embodiments, without deviating from the scope of the present disclosure.

The present aspect may be performed by combining one or more aspects disclosed herein with at least part of other aspects according to the present disclosure. In addition, the present aspect may be performed by combining, with the other aspects, part of the processes indicated in any of the flowcharts according to the aspects, part of the configuration of any of the devices, part of syntaxes, etc.

### [Implementations and Applications]

As described in each of the above embodiments, each functional or operational block may typically be realized as an MPU (micro processing unit) and memory, for example. Moreover, processes performed by each of the functional blocks may be realized as a program execution unit, such as a processor which reads and executes software (a program) recorded on a medium such as ROM. The software may be distributed. The software may be recorded on a variety of media such as semiconductor memory. Note that each functional block can also be realized as hardware (dedicated circuit).

The processing described in each of the embodiments may be realized via integrated processing using a single apparatus (system), and, alternatively, may be realized via decentralized processing using a plurality of apparatuses. Moreover, the processor that executes the above-described program may be a single processor or a plurality of processors. In other words, integrated processing may be performed, and, alternatively, decentralized processing may be performed.

Embodiments of the present disclosure are not limited to the above exemplary embodiments; various modifications may be made to the exemplary embodiments, the results of which are also included within the scope of the embodiments of the present disclosure.

Next, application examples of the moving picture encoding method (image encoding method) and the moving picture decoding method (image decoding method) described in each of the above embodiments will be described, as well as various systems that implement the application examples. Such a system may be characterized as including an image encoder that employs the image encoding method, an image decoder that employs the image decoding method, or an image encoder-decoder that includes both the image encoder and the image decoder. Other configurations of such a system may be modified on a case-by-case basis.

### [Usage Examples]

FIG. 59 illustrates an overall configuration of content providing system ex100 suitable for implementing a content distribution service. The area in which the communication service is provided is divided into cells of desired sizes, and base stations ex106, ex107, ex108, ex109, and ex110, which are fixed wireless stations in the illustrated example, are located in respective cells.

In content providing system ex100, devices including computer ex111, gaming device ex112, camera ex113, home appliance ex114, and smartphone ex115 are connected to internet ex101 via internet service provider ex102 or communications network ex104 and base stations ex106 through ex110. Content providing system ex100 may combine and connect any of the above devices. In various implementations, the devices may be directly or indirectly connected together via a telephone network or near field communication, rather than via base stations ex106 through ex110. Further, streaming server ex103 may be connected to devices including computer ex111, gaming device ex112, camera ex113, home appliance ex114, and smartphone ex115 via, for example, internet ex101. Streaming server ex103 may also be connected to, for example, a terminal in a hotspot in airplane ex117 via satellite ex116.

Note that instead of base stations ex106 through ex110, wireless access points or hotspots may be used. Streaming server ex103 may be connected to communications network ex104 directly instead of via internet ex101 or internet service provider ex102, and may be connected to airplane ex117 directly instead of via satellite ex116.

Camera ex113 is a device capable of capturing still images and video, such as a digital camera. Smartphone ex115 is a smartphone device, cellular phone, or personal handyphone system (PHS) phone that can operate under the mobile communications system standards of the 2G, 3G, 3.9G, and 4G systems, as well as the next-generation 5G system.

Home appliance ex114 is, for example, a refrigerator or a device included in a home fuel cell cogeneration system.

In content providing system ex100, a terminal including an image and/or video capturing function is capable of, for example, live streaming by connecting to streaming server ex103 via, for example, base station ex106. When live streaming, a terminal (e.g., computer ex111, gaming device ex112, camera ex113, home appliance ex114, smartphone ex115, or a terminal in airplane ex117) may perform the encoding processing described in the above embodiments on still-image or video content captured by a user via the terminal, may multiplex video data obtained via the encoding and audio data obtained by encoding audio corresponding to the video, and may transmit the obtained data to streaming server ex103. In other words, the terminal functions as the image encoder according to one aspect of the present disclosure.

Streaming server ex103 streams transmitted content data to clients that request the stream. Client examples include computer ex111, gaming device ex112, camera ex113, home appliance ex114, smartphone ex115, and terminals inside airplane ex117, which are capable of decoding the above-described encoded data. Devices that receive the streamed data decode and reproduce the received data. In other words, the devices may each function as the image decoder, according to one aspect of the present disclosure.

### [Decentralized Processing]

Streaming server ex103 may be realized as a plurality of servers or computers between which tasks such as the processing, recording, and streaming of data are divided. For example, streaming server ex103 may be realized as a content delivery network (CDN) that streams content via a network connecting multiple edge servers located throughout the world. In a CDN, an edge server physically near a client is dynamically assigned to the client. Content is cached and streamed to the edge server to reduce load times. In the event of, for example, some type of error or change in connectivity due, for example, to a spike in traffic, it is possible to stream data stably at high speeds, since it is possible to avoid affected parts of the network by, for example, dividing the processing between a plurality of edge servers, or switching the streaming duties to a different edge server and continuing streaming.

Decentralization is not limited to just the division of processing for streaming; the encoding of the captured data may be divided between and performed by the terminals, on the server side, or both. In one example, in typical encoding, the processing is performed in two loops. The first loop is for detecting how complicated the image is on a frame-by-frame or scene-by-scene basis, or detecting the encoding load. The second loop is for processing that maintains image quality and improves encoding efficiency. For example, it is possible to reduce the processing load of the terminals and improve the quality and encoding efficiency of the content by having the terminals perform the first loop of the encoding and having the server side that received the content perform the second loop of the encoding. In such a case, upon receipt of a decoding request, it is possible for the encoded data resulting from the first loop performed by one terminal to be received and reproduced on another terminal in approximately real time. This makes it possible to realize smooth, real-time streaming.

In another example, camera ex113 or the like extracts a feature amount from an image, compresses data related to the feature amount as metadata, and transmits the compressed metadata to a server. For example, the server determines the significance of an object based on the feature amount and changes the quantization accuracy accordingly to perform compression suitable for the meaning (or content significance) of the image. Feature amount data is particularly effective in improving the precision and efficiency of motion vector prediction during the second compression pass performed by the server. Moreover, encoding that has a relatively low processing load, such as variable length coding (VLC), may be handled by the terminal, and encoding that has a relatively high processing load, such as context-adaptive binary arithmetic coding (CABAC), may be handled by the server.

In yet another example, there are instances in which a plurality of videos of approximately the same scene are captured by a plurality of terminals in, for example, a stadium, shopping mall, or factory. In such a case, for example, the encoding may be decentralized by dividing processing tasks between the plurality of terminals that captured the videos and, if necessary, other terminals that did not capture the videos, and the server, on a per-unit basis. The units may be, for example, groups of pictures (GOP), pictures, or tiles resulting from dividing a picture. This makes it possible to reduce load times and achieve streaming that is closer to real time.

Since the videos are of approximately the same scene, management and/or instructions may be carried out by the server so that the videos captured by the terminals can be cross-referenced. Moreover, the server may receive encoded data from the terminals, change the reference relationship between items of data, or correct or replace pictures themselves, and then perform the encoding. This makes it possible to generate a stream with increased quality and efficiency for the individual items of data.

Furthermore, the server may stream video data after performing transcoding to convert the encoding format of the video data. For example, the server may convert the encoding format from MPEG to VP (e.g., VP9), and may convert H.264 to H.265.

In this way, encoding can be performed by a terminal or one or more servers. Accordingly, although the device that performs the encoding is referred to as a "server" or "terminal" in the following description, some or all of the processes performed by the server may be performed by the terminal, and likewise some or all of the processes performed by the terminal may be performed by the server. This also applies to decoding processes.

### [3D, Multi-angle]

There has been an increase in usage of images or videos combined from images or videos of different scenes concurrently captured, or of the same scene captured from different angles, by a plurality of terminals such as camera ex113 and/or smartphone ex115. Videos captured by the terminals are combined based on, for example, the separately obtained relative positional relationship between the terminals, or regions in a video having matching feature points.

In addition to the encoding of two-dimensional moving pictures, the server may encode a still image based on scene analysis of a moving picture, either automatically or at a point in time specified by the user, and transmit the encoded still image to a reception terminal. Furthermore, when the server can obtain the relative positional relationship between the video capturing terminals, in addition to two-dimensional moving pictures, the server can generate three-dimensional geometry of a scene based on video of the same scene captured from different angles. The server may separately encode three-dimensional data generated from, for example, a point cloud and, based on a result of recognizing or tracking a person or object using three-dimensional data, may select or reconstruct and generate a video to be transmitted to a reception terminal, from videos captured by a plurality of terminals.

This allows the user to enjoy a scene by freely selecting videos corresponding to the video capturing terminals, and allows the user to enjoy the content obtained by extracting a video at a selected viewpoint from three-dimensional data reconstructed from a plurality of images or videos. Furthermore, as with video, sound may be recorded from relatively different angles, and the server may multiplex audio from a specific angle or space with the corresponding video, and transmit the multiplexed video and audio.

In recent years, content that is a composite of the real world and a virtual world, such as virtual reality (VR) and augmented reality (AR) content, has also become popular. In the case of VR images, the server may create images from the viewpoints of both the left and right eyes, and perform encoding that tolerates reference between the two viewpoint images, such as multi-view coding (MVC), and, alternatively, may encode the images as separate streams without referencing. When the images are decoded as separate streams, the streams may be synchronized when reproduced, so as to recreate a virtual three-dimensional space in accordance with the viewpoint of the user.

In the case of AR images, the server superimposes virtual object information existing in a virtual space onto camera information representing a real-world space, based on a three-dimensional position or movement from the perspective of the user. The decoder may obtain or store virtual object information and three-dimensional data, generate two-dimensional images based on movement from the perspective of the user, and then generate superimposed data by seamlessly connecting the images. Alternatively, the decoder may transmit, to the server, motion from the perspective of the user in addition to a request for virtual object information. The server may generate superimposed data based on three-dimensional data stored in the server, in accordance with the received motion, and encode and stream the generated superimposed data to the decoder. Note that superimposed data includes, in addition to RGB values, an α value indicating transparency, and the server sets the α value for sections other than the object generated from three-dimensional data to, for example, 0, and may perform the encoding while those sections are transparent. Alternatively, the server may set the background to a determined RGB value, such as a chroma key, and generate data in which areas other than the object are set as the background.

Decoding of similarly streamed data may be performed by the client (i.e., the terminals), on the server side, or divided therebetween. In one example, one terminal may transmit a reception request to a server, the requested content may be received and decoded by another terminal, and a decoded signal may be transmitted to a device having a display. It is possible to reproduce high image quality data by decentralizing processing and appropriately selecting content regardless of the processing ability of the communications terminal itself. In yet another example, while a TV, for example, is receiving image data that is large in size, a region of a picture, such as a tile obtained by dividing the picture, may be decoded and displayed on a personal terminal or terminals of a viewer or viewers of the TV. This makes it possible for the viewers to share a big-picture view as well as for each viewer to check his or her assigned area, or inspect a region in further detail up close.

In situations in which a plurality of wireless connections are possible over near, mid, and far distances, indoors or outdoors, it may be possible to seamlessly receive content using a streaming system standard such as MPEG-Dynamic Adaptive Streaming over HTTP (MPEG-DASH). The user may switch between data in real time while freely selecting a decoder or display apparatus including the user's terminal, displays arranged indoors or outdoors, etc. Moreover, using, for example, information on the position of the user, decoding can be performed while switching which terminal handles decoding and which terminal handles the displaying of content. This makes it possible to map and display information, while the user is on the move in route to a destination, on the wall of a nearby building in which a device capable of displaying content is embedded, or on part of the ground. Moreover, it is also possible to switch the bit rate of the received data based on the accessibility to the encoded data on a network, such as when encoded data is cached on a server quickly accessible from the reception terminal, or when encoded data is copied to an edge server in a content delivery service.

### [Web Page Optimization]

FIG. 60 illustrates an example of a display screen of a web page on computer ex111, for example. FIG. 61 illustrates an example of a display screen of a web page on smartphone ex115, for example. As illustrated in FIG. 60 and FIG. 61, a web page may include a plurality of image links that are links to image content, and the appearance of the web page differs depending on the device used to view the web page. When a plurality of image links are viewable on the screen, until the user explicitly selects an image link, or until the image link is in the approximate center of the screen or the entire image link fits in the screen, the display apparatus (decoder) may display, as the image links, still images included in the content or I pictures; may display video such as an animated gif using a plurality of still images or I pictures; or may receive only the base layer, and decode and display the video.

When an image link is selected by the user, the display apparatus performs decoding while giving the highest priority to the base layer. Note that if there is information in the HyperText Markup Language (HTML) code of the web page indicating that the content is scalable, the display apparatus may decode up to the enhancement layer. Further, in order to guarantee real-time reproduction, before a selection is made or when the bandwidth is severely limited, the display apparatus can reduce delay between the point in time at which the leading picture is decoded and the point in time at which the decoded picture is displayed (that is, the delay between the start of the decoding of the content to the displaying of the content) by decoding and displaying only forward reference pictures (I picture, P picture, forward reference B picture). Still further, the display apparatus may purposely ignore the reference relationship between pictures, and coarsely decode all B and P pictures as forward reference pictures, and then perform normal decoding as the number of pictures received over time increases.

### [Autonomous Driving]

When transmitting and receiving still image or video data such as two- or three-dimensional map information for autonomous driving or assisted driving of an automobile, the reception terminal may receive, in addition to image data belonging to one or more layers, information on, for example, the weather or road construction as metadata, and associate the metadata with the image data upon decoding. Note that metadata may be assigned per layer and, alternatively, may simply be multiplexed with the image data.

In such a case, since the automobile, drone, airplane, etc., containing the reception terminal is mobile, the reception terminal may seamlessly receive and perform decoding while switching between base stations among base stations ex106 through ex110 by transmitting information indicating the position of the reception terminal. Moreover, in accordance with the selection made by the user, the situation of the user, and/or the bandwidth of the connection, the reception terminal may dynamically select to what extent the metadata is received, or to what extent the map information, for example, is updated.

In content providing system ex100, the client may receive, decode, and reproduce, in real time, encoded information transmitted by the user.

### [Streaming of Individual Content]

In content providing system ex100, in addition to high image quality, long content distributed by a video distribution entity, unicast or multicast streaming of low image quality, and short content from an individual are also possible. Such content from individuals is likely to further increase in popularity. The server may first perform editing processing on the content before the encoding processing, in order to refine the individual content. This may be achieved using the following configuration, for example.

In real time while capturing video or image content, or after the content has been captured and accumulated, the server performs recognition processing based on the raw data or encoded data, such as capture error processing, scene search processing, meaning analysis, and/or object detection processing. Then, based on the result of the recognition processing, the server - either when prompted or automatically - edits the content, examples of which include: correction such as focus and/or motion blur correction; removing low-priority scenes such as scenes that are low in brightness compared to other pictures, or out of focus; object edge adjustment; and color tone adjustment. The server encodes the edited data based on the result of the editing. It is known that excessively long videos tend to receive fewer views. Accordingly, in order to keep the content within a specific length that scales with the length of the original video, the server may, in addition to the low-priority scenes described above, automatically clip out scenes with low movement, based on an image processing result. Alternatively, the server may generate and encode a video digest based on a result of an analysis of the meaning of a scene.

There may be instances in which individual content may include content that infringes a copyright, moral right, portrait rights, etc. Such instance may lead to an unfavorable situation for the creator, such as when content is shared beyond the scope intended by the creator. Accordingly, before encoding, the server may, for example, edit images so as to blur faces of people in the periphery of the screen or blur the inside of a house, for example. Further, the server may be configured to recognize the faces of people other than a registered person in images to be encoded, and when such faces appear in an image, may apply a mosaic filter, for example, to the face of the person. Alternatively, as pre- or post-processing for encoding, the user may specify, for copyright reasons, a region of an image including a person or a region of the background to be processed. The server may process the specified region by, for example, replacing the region with a different image, or blurring the region. If the region includes a person, the person may be tracked in the moving picture, and the person's head region may be replaced with another image as the person moves.

Since there is a demand for real-time viewing of content produced by individuals, which tends to be small in data size, the decoder first receives the base layer as the highest priority, and performs decoding and reproduction, although this may differ depending on bandwidth. When the content is reproduced two or more times, such as when the decoder receives the enhancement layer during decoding and reproduction of the base layer, and loops the reproduction, the decoder may reproduce a high image quality video including the enhancement layer. If the stream is encoded using such scalable encoding, the video may be low quality when in an unselected state or at the start of the video, but it can offer an experience in which the image quality of the stream progressively increases in an intelligent manner. This is not limited to just scalable encoding; the same experience can be offered by configuring a single stream from a low quality stream reproduced for the first time and a second stream encoded using the first stream as a reference.

### [Other Implementation and Application Examples]

The encoding and decoding may be performed by LSI (large scale integration circuitry) ex500 (see FIG. 59), which is typically included in each terminal. LSI ex500 may be configured of a single chip or a plurality of chips. Software for encoding and decoding moving pictures may be integrated into some type of a medium (such as a CD-ROM, a flexible disk, or a hard disk) that is readable by, for example, computer ex111, and the encoding and decoding may be performed using the software. Furthermore, when smartphone ex115 is equipped with a camera, video data obtained by the camera may be transmitted. In this case, the video data is coded by LSI ex500 included in smartphone ex115.

Note that LSI ex500 may be configured to download and activate an application. In such a case, the terminal first determines whether it is compatible with the scheme used to encode the content, or whether it is capable of executing a specific service. When the terminal is not compatible with the encoding scheme of the content, or when the terminal is not capable of executing a specific service, the terminal first downloads a codec or application software and then obtains and reproduces the content.

Aside from the example of content providing system ex100 that uses internet ex101, at least the moving picture encoder (image encoder) or the moving picture decoder (image decoder) described in the above embodiments may be implemented in a digital broadcasting system. The same encoding processing and decoding processing may be applied to transmit and receive broadcast radio waves superimposed with multiplexed audio and video data using, for example, a satellite, even though this is geared toward multicast, whereas unicast is easier with content providing system ex100.

### [Hardware Configuration]

FIG. 62 illustrates further details of smartphone ex115 shown in FIG. 59. FIG. 63 illustrates a configuration example of smartphone ex115. Smartphone ex115 includes antenna ex450 for transmitting and receiving radio waves to and from base station ex110, camera ex465 capable of capturing video and still images, and display ex458 that displays decoded data, such as video captured by camera ex465 and video received by antenna ex450. Smartphone ex115 further includes user interface ex466 such as a touch panel, audio output unit ex457 such as a speaker for outputting speech or other audio, audio input unit ex456 such as a microphone for audio input, memory ex467 capable of storing encoded data or decoded data such as captured video or still images, recorded audio, received video or still images, and mail, and slot ex464 which is an interface for Subscriber Identity Module (SIM) ex468 for identifying the user and authorizing access to a network and various data. Note that external memory may be used instead of memory ex467.

Main controller ex460, which comprehensively controls display ex458 and user interface ex466, power supply circuit ex461, user interface input controller ex462, video signal processor ex455, camera interface ex463, display controller ex459, modulator/demodulator ex452, multiplexer/demultiplexer ex453, audio signal processor ex454, slot ex464, and memory ex467 are connected via bus ex470.

When the user turns on the power button of power supply circuit ex461, smartphone ex115 is powered on into an operable state, and each component is supplied with power from a battery pack.

Smartphone ex115 performs processing for, for example, calling and data transmission, based on control performed by main controller ex460, which includes a CPU, ROM, and RAM. When making calls, an audio signal recorded by audio input unit ex456 is converted into a digital audio signal by audio signal processor ex454, to which spread spectrum processing is applied by modulator/demodulator ex452 and digital-analog conversion and frequency conversion processing are applied by transmitter/receiver ex451, and the resulting signal is transmitted via antenna ex450. The received data is amplified, frequency converted, and analog-digital converted, inverse spread spectrum processed by modulator/demodulator ex452, converted into an analog audio signal by audio signal processor ex454, and then output from audio output unit ex457. In data transmission mode, text, still-image, or video data is transmitted by main controller ex460 via user interface input controller ex462 based on operation of user interface ex466 of the main body, for example. Similar transmission and reception processing is performed. In data transmission mode, when sending a video, still image, or video and audio, video signal processor ex455 compression encodes, by the moving picture encoding method described in the above embodiments, a video signal stored in memory ex467 or a video signal input from camera ex465, and transmits the encoded video data to multiplexer/demultiplexer ex453. Audio signal processor ex454 encodes an audio signal recorded by audio input unit ex456 while camera ex465 is capturing a video or still image, and transmits the encoded audio data to multiplexer/demultiplexer ex453. Multiplexer/demultiplexer ex453 multiplexes the encoded video data and encoded audio data using a determined scheme, modulates and converts the data using modulator/demodulator (modulator/demodulator circuit) ex452 and transmitter/receiver ex451, and transmits the result via antenna ex450.

When a video appended in an email or a chat, or a video linked from a web page, is received, for example, in order to decode the multiplexed data received via antenna ex450, multiplexer/demultiplexer ex453 demultiplexes the multiplexed data to divide the multiplexed data into a bitstream of video data and a bitstream of audio data, supplies the encoded video data to video signal processor ex455 via synchronous bus ex470, and supplies the encoded audio data to audio signal processor ex454 via synchronous bus ex470. Video signal processor ex455 decodes the video signal using a moving picture decoding method corresponding to the moving picture encoding method described in the above embodiments, and video or a still image included in the linked moving picture file is displayed on display ex458 via display controller ex459. Audio signal processor ex454 decodes the audio signal and outputs audio from audio output unit ex457. Since real-time streaming is becoming increasingly popular, there may be instances in which reproduction of the audio may be socially inappropriate, depending on the user's environment. Accordingly, as an initial value, a configuration in which only video data is reproduced, i.e., the audio signal is not reproduced, may be preferable; and audio may be synchronized and reproduced only when an input is received from the user clicking video data, for instance.

Although smartphone ex115 was used in the above example, three other implementations are conceivable: a transceiver terminal including both an encoder and a decoder; a transmitter terminal including only an encoder; and a receiver terminal including only a decoder. In the description of the digital broadcasting system, an example is given in which multiplexed data obtained as a result of video data being multiplexed with audio data is received or transmitted. The multiplexed data, however, may be video data multiplexed with data other than audio data, such as text data related to the video. Further, the video data itself rather than multiplexed data may be received or transmitted.

Although main controller ex460 including a CPU is described as controlling the encoding or decoding processes, various terminals often include Graphics Processing Units (GPUs). Accordingly, a configuration is acceptable in which a large area is processed at once by making use of the performance ability of the GPU via memory shared by the CPU and GPU, or memory including an address that is managed so as to allow common usage by the CPU and GPU. This makes it possible to shorten encoding time, maintain the real-time nature of streaming, and reduce delay. In particular, processing relating to motion estimation, deblocking filtering, sample adaptive offset (SAO), and transformation/quantization can be effectively carried out by the GPU, instead of the CPU, in units of pictures, for example, all at once.

### [Industrial Applicability]

The present disclosure is available for an encoder for encoding a video, etc., and applicable to a video teleconferencing system, etc.

### [Reference Signs List]

- 100, 700: encoder
- 102: splitter
- 104: subtractor
- 106: transformer
- 108: quantizer
- 110: entropy encoder
- 112, 204: inverse quantizer
- 114, 206: inverse transformer
- 116, 208: adder
- 118, 210: block memory
- 120, 212: loop filter
- 122, 214: frame memory
- 124, 216: intra predictor
- 126, 218: inter predictor
- 128, 220: prediction controller
- 130, 222: prediction parameter generator
- 131, 133, 134, 731, 733: compressor
- 132, 232, 236, 732, 832: deriver
- 135, 237: buffer
- 151, 251: circuitry
- 152, 252: memory
- 200, 800: decoder
- 202: entropy decoder
- 224: splitting determiner
- 231, 233, 235, 831, 833: decompressor
- 234, 406, 834: generator
- 401: video decoder
- 402: entropy decoder
- 403: inverse affine transformer
- 404: determiner
- 405: geometric attribute buffer

## Claims

1. A decoder comprising:
circuitry; and
memory coupled to the circuitry, wherein
in operation, the circuitry:
decodes, from a bitstream, base data of a face image related to a face video, and geometric information indicating geometric attributes within a region including a face of a person, the geometric information corresponding to each of frames of the face video;
further decodes, from the bitstream, a concealment parameter related to an error recovery control for when the geometric information is not appropriately obtained in an encoder; and
generates the face video using a generative model from the base data, the geometric information, and the concealment parameter.

2. The decoder according to claim 1, wherein
the circuitry decodes the concealment parameter from a header of the bitstream.

3. The decoder according to claim 1 or 2, wherein
the concealment parameter indicates, according to a value of the concealment parameter, that the geometric information obtained in the encoder and corresponding to a current frame has low reliability.

4. The decoder according to claim 1 or 2, wherein
the concealment parameter indicates, according to a value of the concealment parameter, that the geometric information corresponding to a current frame has not been obtained in the encoder.

5. The decoder according to claim 1 or 2, wherein
the concealment parameter indicates, according to a value of the concealment parameter, that a total number of attributes in the geometric information obtained in the encoder and corresponding to a current frame is different from an original number of attributes.

6. The decoder according to claim 1 or 2, wherein
the concealment parameter indicates, according to a value of the concealment parameter, that stored geometric information is applied for a current frame of the face video instead of the geometric information to be decoded from the bitstream.

7. The decoder according to claim 1 or 2, wherein
the concealment parameter indicates, according to a value of the concealment parameter, that the geometric information corresponding to a current frame is to be stored for a subsequent frame.

8. The decoder according to claim 1 or 2, wherein
when the concealment parameter indicates:
that the geometric information obtained in the encoder and corresponding to a current frame has low reliability; or
that a total number of attributes in the geometric information is different from an original number of attributes,
the circuitry:
corrects the geometric information decoded from the bitstream and corresponding to the current frame using stored geometric information, and
applies the geometric information corrected as the geometric information for generating the face image corresponding to the current frame in the face video.

9. The decoder according to claim 1 or 2, wherein
when the concealment parameter indicates:
that the geometric information obtained in the encoder and corresponding to a current frame has low reliability;
that the geometric information has not been obtained;
that a total number of attributes in the geometric information is different from an original number of attributes; or
that stored geometric information is applied as the geometric information corresponding to the current frame,
the circuitry applies the stored geometric information as the geometric information for generating the face image corresponding to the current frame in the face video.

10. The decoder according to claim 1 or 2, wherein
when the concealment parameter indicates:
that the geometric information obtained in the encoder and corresponding to a current frame has low reliability;
that the geometric information has not been obtained; or
that a total number of attributes in the geometric information is different from an original number of attributes,
the circuitry does not generate the face image corresponding to the current frame in the face video using the generative model, and applies an already generated face image as the face image corresponding to the current frame, the already generated face image being related to the face video.

11. The decoder according to claim 6, wherein
the stored geometric information is geometric information decoded from the bitstream and corresponding to a previous frame.

12. The decoder according to claim 6, wherein
the stored geometric information is geometric information satisfying predefined criteria.

13. A decoder comprising:
circuitry; and
memory coupled to the circuitry, wherein
in operation, the circuitry:
obtains base data of an image included in a video; and
decodes, from a bitstream, face attribute parameters indicating a face included in the image,
the base data and the face attribute parameters are inputted to a generative model to generate an output image corresponding to the image,
the bitstream includes a reliability parameter related to reliability of the face attribute parameters, and
the reliability parameter indicates, according to a value of the reliability parameter, that the reliability is low.

14. The decoder according to claim 13, wherein
the image corresponds to each of pictures included in the video,
the base data is common to the pictures, and
the bitstream includes the reliability parameter and the face attribute parameters for each of the pictures.

15. The decoder according to claim 14, wherein
the bitstream includes the reliability parameter prior to the face attribute parameters for each of the pictures.

16. The decoder according to any one of claims 13 to 15, wherein
when the reliability parameter does not indicate that the reliability of the face attribute parameters is low, the face attribute parameters are to be stored.

17. An encoder comprising:
circuitry; and
memory coupled to the circuitry, wherein
in operation, the circuitry:
encodes, into a bitstream, base data of a face image related to a face video, and geometric information indicating geometric attributes within a region including a face of a person, the geometric information corresponding to each of frames of the face video;
determines whether the geometric information has been appropriately obtained; and
further encodes, into the bitstream, a concealment parameter related to an error recovery control in a decoder for when the geometric information is not appropriately obtained.

18. The encoder according to claim 17, wherein
the circuitry encodes the concealment parameter into a header of the bitstream.

19. The encoder according to claim 17 or 18, wherein
the concealment parameter indicates, according to a value of the concealment parameter, that the geometric information obtained in the encoder and corresponding to a current frame has low reliability.

20. The encoder according to claim 17 or 18, wherein
the concealment parameter indicates, according to a value of the concealment parameter, that the geometric information corresponding to a current frame has not been obtained in the encoder.

21. The encoder according to claim 17 or 18, wherein
the concealment parameter indicates, according to a value of the concealment parameter, that a total number of items in the geometric information obtained in the encoder and corresponding to a current frame is different from an original number of items.

22. The encoder according to claim 17 or 18, wherein
the concealment parameter indicates, according to a value of the concealment parameter, that stored geometric information is applied for a current frame of the face video instead of the geometric information to be decoded from the bitstream.

23. The encoder according to claim 17 or 18, wherein
the concealment parameter indicates, according to a value of the concealment parameter, that the geometric information corresponding to a current frame is to be stored for a subsequent frame.

24. The encoder according to claim 17 or 18, wherein
when reliability of the geometric information obtained in the encoder and corresponding to a current frame is lower than a threshold, the circuitry sets the concealment parameter to a value indicating that the reliability of the geometric information is low.

25. The encoder according to claim 17 or 18, wherein
when reliability of the geometric information obtained in the encoder and corresponding to a current frame is lower than a threshold or when the face is not included in the current frame obtained in the encoder, the circuitry does not encode, into the bitstream, the geometric information corresponding to the current frame, and sets the concealment parameter to a value indicating that the geometric information has not been obtained.

26. The encoder according to claim 17 or 18, wherein
when a total number of attributes in the geometric information obtained in the encoder and corresponding to a current frame is different from a predefined number of attributes, the circuitry sets the concealment parameter to a value indicating that the total number of attributes in the geometric information is different from an original number of items.

27. The encoder according to claim 17 or 18, wherein
when reliability of the geometric information obtained in the encoder and corresponding to a current frame is lower than a threshold or when the face is not included in the current frame obtained in the encoder, the circuitry sets the concealment parameter to a value indicating that stored geometric information is applied as the geometric information corresponding to the current frame.

28. The encoder according to claim 17 or 18, wherein
when reliability of the geometric information obtained in the encoder and corresponding to a current frame is higher than or equal to a specified threshold, the circuitry sets the concealment parameter to a value indicating that the geometric information is to be stored for a subsequent frame.

29. The encoder according to claim 17 or 18, wherein
when reliability of the geometric information obtained in the encoder and corresponding to a current frame is lower than a threshold,
the circuitry:
corrects the geometric information obtained, using stored geometric information; and
encodes, into the bitstream, the geometric information corrected.

30. The encoder according to claim 17 or 18, wherein
when reliability of the geometric information obtained in the encoder and corresponding to a current frame is lower than a threshold,
the circuitry encodes, into the bitstream, stored geometric information as the geometric information corresponding to the current frame.

31. The encoder according to claim 22, wherein
the stored geometric information is geometric information obtained in the encoder and corresponding to a previous frame.

32. The encoder according to claim 22, wherein
the stored geometric information is geometric information satisfying predefined criteria.

33. An encoder comprising:
circuitry; and
memory coupled to the circuitry, wherein
in operation, the circuitry:
encodes base data of an image included in a video;
encodes, into a bitstream, face attribute parameters indicating a face included in the image; and
further encodes, into the bitstream, a reliability parameter related to reliability of the face attribute parameters, and
the reliability parameter indicates, according to a value of the reliability parameter, that the reliability is low.

34. The encoder according to claim 33, wherein
the image corresponds to each of pictures included in the video,
the base data is common to the pictures, and
the bitstream includes the reliability parameter and the face attribute parameters for each of the pictures.

35. The encoder according to claim 34, wherein
the bitstream includes the reliability parameter prior to the face attribute parameters for each of the pictures.

36. The encoder according to any one of claims 33 to 35, wherein
when the reliability parameter does not indicate that the reliability of the face attribute parameters is low, the face attribute parameters are to be stored.

37. A decoding method comprising:
decoding, from a bitstream, base data of a face image related to a face video, and geometric information indicating geometric attributes within a region including a face of a person, the geometric information corresponding to each of frames of the face video;
further decoding, from the bitstream, a concealment parameter related to an error recovery control for when the geometric information is not appropriately obtained in an encoder; and
generating the face video using a generative model from the base data, the geometric information, and the concealment parameter.

38. A decoding method comprising:
obtaining base data of an image included in a video; and
decoding, from a bitstream, face attribute parameters indicating a face included in the image, wherein
the base data and the face attribute parameters are inputted to a generative model to generate an output image corresponding to the image,
the bitstream includes a reliability parameter related to reliability of the face attribute parameters, and
the reliability parameter indicates, according to a value of the reliability parameter, that the reliability is low.

39. An encoding method comprising:
encoding, into a bitstream, base data of a face image related to a face video, and geometric information indicating geometric attributes within a region including a face of a person, the geometric information corresponding to each of frames of the face video;
determining whether the geometric information has been appropriately obtained; and
further encoding, into the bitstream, a concealment parameter related to an error recovery control in a decoder for when the geometric information is not appropriately obtained.

40. An encoding method comprising:
encoding base data of an image included in a video;
encoding, into a bitstream, face attribute parameters indicating a face included in the image; and
further encoding, into the bitstream, a reliability parameter related to reliability of the face attribute parameters, wherein
the reliability parameter indicates, according to a value of the reliability parameter, that the reliability is low.
